(19) Europäisches Patentamt
European Patent Office
Office européen des brevets

(11) **EP 4 560 452 A1**

(12) **EUROPEAN PATENT APPLICATION**
published in accordance with Art. 153(4) EPC

(43) Date of publication:
**28.05.2025 Bulletin 2025/22**

(21) Application number: **23859173.9**

(22) Date of filing: **17.08.2023**

(51) International Patent Classification (IPC):
***G06F 3/0486*** (2013.01)   ***G06F 3/048*** (2013.01)

(52) Cooperative Patent Classification (CPC):
**G06F 3/048; G06F 3/04812; G06F 3/04817;
G06F 3/0486; G06F 9/451; H04W 4/80;
H04W 76/14**

(86) International application number:
**PCT/CN2023/113603**

(87) International publication number:
**WO 2024/046139 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.09.2022   CN 202211071888**

(71) Applicant: **Honor Device Co., Ltd.
Shenzhen, Guangdong 518040 (CN)**

(72) Inventors:
• **LI, Pengfei
Shenzhen, Guangdong 518040 (CN)**
• **YAO, Yuan
Shenzhen, Guangdong 518040 (CN)**
• **SHI, Yongchang
Shenzhen, Guangdong 518040 (CN)**
• **LI, Yu
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(54) **KEYBOARD/MOUSE CROSSING METHOD AND TERMINAL DEVICE**

(57)   This application provides a keyboard-mouse traversal method and a terminal device. The method provided in this application includes: A first device displays, on a first screen, a cursor corresponding to an input device. The first device detects a first operation acting on the input device. The first operation is used to drag the cursor to determine a first direction as a connecting direction. The first device establishes, in response to the first operation, a connection to a second device in the first direction of the first device. The first device detects a second operation acting on the input device. The second operation is used to drag, toward the first direction, the cursor displayed on the first screen. The first device controls, in response to the second operation, the cursor to move out of the first screen and enter a second screen of the second device for display. The second device executes, in response to a third operation acting on the input device, a control instruction corresponding to the third operation. The third operation is used to input the control instruction on the second device.

**EP 4 560 452 A1**

**(Cont. next page)**

FIG. 2

## Description

This application claims priority to Chinese Patent Application No. 202211071888.9, filed with the China National Intellectual Property Administration on September 2, 2022 and entitled "KEYBOARD-MOUSE TRAVERSAL METHOD AND TERMINAL DEVICE", which is incorporated herein by reference in its entirety.

## TECHNICAL FIELD

This application relates to the field of terminal technologies, and in particular, to a keyboard-mouse traversal method and a terminal device.

## BACKGROUND

With the development of terminal technologies, there are more types and quantities of terminal devices. The terminal devices may include: a mobile phone, a tablet, a computer, a wearable device, and the like. Currently, one terminal device cannot meet requirements of a user, and the user may use a plurality of terminal devices such as a mobile phone, a tablet, and a computer to meet working and learning requirements. However, when the plurality of terminal devices all have services to be processed by the user, the user needs to switch operation modes back and forth between different terminal devices, which is complex and affects user experience.

## SUMMARY

This application provides a keyboard-mouse traversal method and a terminal device, so that different terminal devices can be operated by using a mouse and a keyboard, to implement seamless access between the different terminal devices.

According to a first aspect, a keyboard-mouse traversal method is provided, applied to a first device, which may also be referred to as a terminal device. The first device is connected to an input device configured to input a control instruction, and the first device includes a first screen. The method further includes: The first device displays, on the first screen, a cursor corresponding to the input device. The first device detects a first operation acting on the input device. The first operation is used to drag the cursor to determine a first direction as a connecting direction. The first device establishes, in response to the first operation, a connection to a second device in the first direction of the first device. The first device detects a second operation acting on the input device. The second operation is used to drag, toward the first direction, the cursor displayed on the first screen. The first device controls, in response to the second operation, the cursor to move out of the first screen and enter a second screen of the second device for display. The second device executes, in response to a third operation acting on the input device, a control instruction corresponding to the third operation. The third operation is used to input the control instruction on the second device.

The input device may be a keyboard and a mouse. In embodiments of this application, the keyboard and the mouse are referred to as a keyboard-mouse for short. The cursor may also be referred to as a mouse pointer. This is not limited in embodiments of this application.

A connection may be established between the first device and the second device through wifi or Bluetooth, where wifi may include a local area network or a peer to peer (peer to pee, P2P) network. That the first device establishes a connection to a second device may be understood as that the first device may communicate with the second device. The first device may be a computer 101 in embodiments, and the second device may be a mobile phone 102 or a tablet 103 in embodiments, but this application is not limited thereto.

After the first device establishes the connection to the second device, the first device and the second device can support keyboard-mouse traversal. To be specific, the cursor corresponding to the input device may move from the first screen of the first device to the second screen of the second device, and may move from the second screen of the second device to the first screen of the first device.

The first operation may be controlling the cursor to consecutively touch a side edge of the first screen twice. A user controls, by using the input device, the cursor to consecutively touch a side edge of the first screen twice, to trigger the first device to connect to another device. If the side edge of the first screen is right, the first device connects to a device on a right side. If the side edge of the first screen is left, the first device connects to a device on a left side. Therefore, the first operation may be further used to trigger the first device to connect to another device on a side of the touched edge. A direction in which the side edge triggered by the first operation is located may be referred to as the first direction. The first device detects the first operation, and may connect to a device in the first direction in response to the first operation. If the second device is in the first direction of the first device, the first device may connect to the second device.

The second operation is used to drag, toward the first direction, the cursor displayed on the first screen. To be specific, the user controls the input device to drag the cursor toward the second device, so as to move to the second screen of the second device. The second operation may also be referred to as a traversing operation. This is not limited in this application. The first device controls, in response to the second operation, the cursor to move out of the first screen and enter the second screen of the second device for display.

After the cursor is moved to the second screen, the user may control the input device to perform various operations on the second device, for example, a clicking, dragging, or inputting operation. The second device executes the control instruction corresponding to the third operation.

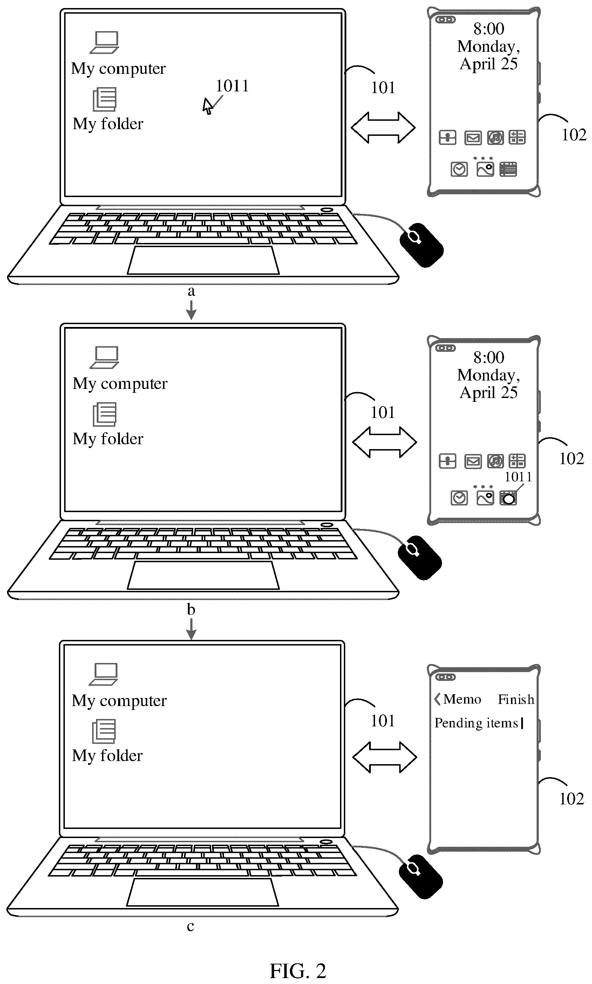

For example, in an example shown in FIG. 2, the first device is a computer 101, the second device is a mobile phone 102, the input device is a keyboard-mouse, a mouse pointer is the cursor of the input device, the cursor of the input device is moved from the first device to the second device, and the user may perform operations of opening a memo and editing the memo on the second device by using the cursor of the input device.

According to the keyboard-mouse traversal method provided in this application, the input device may traverse between different devices, so that the different devices can be controlled by using one input device without switching operation modes back and forth between different terminal devices, thereby avoiding complex operations and helping improve user experience.

With reference to the first aspect, in some implementations of the first aspect, that the first device establishes, in response to the first operation, a connection to a second device in the first direction of the first device includes: The first device finds, in response to the first operation, a second device meeting a connection condition in the first direction. The first device establishes a connection to the second device.

In response to the first operation, the first device determines whether a device meeting the connection condition exists in the first direction. If the second device meeting the connection condition exists in the first direction, the first device may establish a connection to the second device.

According to the keyboard-mouse traversal method provided in this application, the first operation triggers the first device to automatically search for a device meeting the connection condition, and connect to the device meeting the connection condition, thereby providing a method for automatically connecting to a device, which helps reduce user operations and improve operation efficiency of the user.

With reference to the first aspect, in some implementations of the first aspect, before the first device detects the first operation acting on the input device, the method further includes: The first device performs device discovery. The first device stores, in a device table, a device identifier of a device meeting the connection condition and a direction of the device meeting the connection condition relative to the first device. That the first device finds, in response to the first operation, a second device meeting a connection condition in the first direction includes: The first device finds the second device meeting the connection condition in the first direction from the device table in response to the first operation.

The first device may perform device discovery after powered on, and store, in the device table, the identifier of the device meeting the connection condition and the direction of the device meeting the connection condition relative to the first device. The device table may further include information such as a traversing direction between the first device and the device meeting the connection condition, and an angle of the device meeting the connection condition relative to the first device. This is not limited in embodiments of this application. The device table may be a table tB in embodiments.

The first device may find the second device meeting the connection condition in the first direction from the device table in response to the first operation.

According to the keyboard-mouse traversal method provided in this application, the device table records device information of the device meeting the connection condition, so that the second device meeting the connection condition in the first direction can be quickly determined without device discovery during subsequent use, thereby improving efficiency.

With reference to the first aspect, in some implementations of the first aspect, the method further includes: The first device detects that a direction of the second device relative to the first device is changed. The first device updates the direction of the second device relative to the first device in the device table.

According to the keyboard-mouse traversal method provided in this application, when a direction change of the second device is detected, information in the device table may be updated in real time, thereby helping improve accuracy of keyboard-mouse traversal.

With reference to the first aspect, in some implementations of the first aspect, a third device is further included in the first direction of the first device, and before the first device establishes a connection to the second device, the method further includes: The first device detects a fourth operation of a user. The fourth operation is used to select the second device.

If a plurality of devices meeting the connection condition, for example, the second device and the third device, exist in the first direction of the first device, the first device may determine a to-be-connected device based on a selection operation of the user. If the user selects the second device, the first device may connect to the second device in response to the operation.

According to the keyboard-mouse traversal method provided in this application, the user may autonomously select a to-be-connected device, which is highly flexible and helps improve user experience.

With reference to the first aspect, in some implementations of the first aspect, before the first device detects the first operation acting on the input device, the method further includes: The first device displays a first interface, where the first interface includes an automatic connection option; and selects the automatic connection option in response to an operation acting on the automatic connection option.

The foregoing method may be a method performed by the first device when the automatic connection option is enabled. The automatic connection option may be selected by the user, or may be selected by default. This is not limited in embodiments of this application.

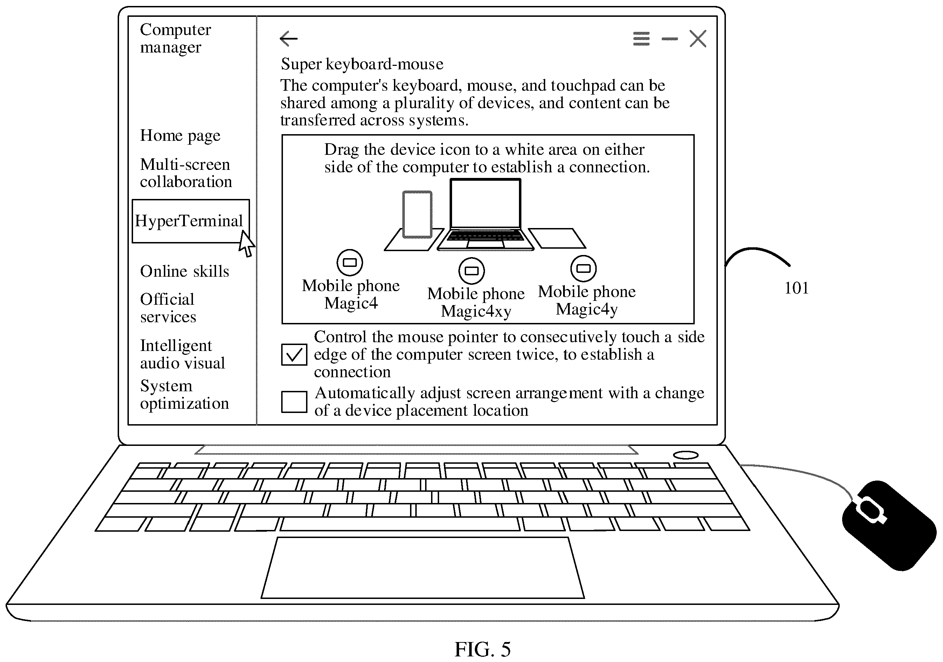

The automatic connection option may be shown in FIG. 5 in embodiments. The automatic connection option is to control the mouse pointer to consecutively touch a side edge of the computer screen twice, to establish a connection, but this application is not limited thereto.

It may be understood that when the automatic connection option is selected, the first device automatically connects to a device meeting the connection condition. When the automatic connection option is not selected, the first device manually connects to a device meeting the connection condition.

According to the keyboard-mouse traversal method provided in this application, a visual interface is provided for the user, and a connection manner is determined by the user, which can increase connection flexibility, and provide a plurality of implementations for the user, thereby meeting requirements of the user in different situations, and helping improve user experience.

With reference to the first aspect, in some implementations of the first aspect, when the automatic connection option is not selected, the method further includes: The first device displays a second interface in response to an operation of opening a first application on the first device. The second interface includes: a first icon representing the first device, a second icon representing the second device, and placing areas respectively located at two sides of the first icon. The first device establishes a connection to the second device in response to a fifth operation of dragging the second icon to a first placing area. The first placing area is located in the first direction of the first device.

When the automatic connection option is not selected, the first device provides a visual interface, that is, the second interface, for the user, so that the user can select a to-be-connected device in the visual interface.

The first application is an application providing the visual interface. For example, the first application may be a computer manager. The second interface may be a super keyboard-mouse interface. The second interface and the first interface may or may not be a same interface. This is not limited in embodiments of this application.

When the first device detects the fifth operation of dragging the second icon to the first placing area by the user, it may indicate that the user selects the second device to connect to the first device. The first device may establish a connection to the second device in response to the fifth operation of dragging the second icon to the first placing area.

According to the keyboard-mouse traversal method provided in this application, a manual device connection manner is provided for the user, thereby meeting a requirement of autonomously selecting a device by the user, and helping improve user experience.

With reference to the first aspect, in some implementations of the first aspect, that the first device establishes a connection to the second device in response to a fifth operation of dragging the second icon to a first placing area includes: The first device determines, in response to the fifth operation, whether a connected device exists in the first direction. If the connected device does not exist, the first device establishes a connection to the second device. If the connected device exists, the first device prohibits connecting to the second device, and restores a location of the second icon to a location before the dragging.

If a device exists in the first placing area, it may indicate that the first device has a connected device in the first direction. If no device exists in the first placing area, it may indicate that the first device does not have a connected device in the first direction.

If the connected device exists, the first device may prohibit the first device from connecting to the second device, and does not accept the fifth operation, that is, restore the location of the second icon to the location before the dragging.

According to the keyboard-mouse traversal method provided in this application, in the manual device connection manner, whether a connected device exists may be determined before connection, to avoid a scenario of connecting to two devices in one direction.

With reference to the first aspect, in some implementations of the first aspect, the connection condition is that login accounts of the second device and the first device are the same.

Because the login accounts of the second device and the first device are the same, the first device and the second device may discover each other, to form a trust loop. The first device may communicate with the second device after the connection establishment.

According to the keyboard-mouse traversal method provided in this application, different devices logged in to by using a same account may be connected, so that a plurality of devices can serve one user at the same time, which helps meet user requirements and improve user experience.

With reference to the first aspect, in some implementations of the first aspect, the method further includes: The first device obtains, in response to the second operation, an exit location from which the cursor is moved out of the first screen. The first device determines, based on the exit location, an initial location from which the cursor enters the second screen. The first device sends the initial location to the second device, to indicate the second device to display the cursor at the initial location of the second screen.

The first device controls, in response to the second operation, the cursor to move out of the first screen and enter the second screen of the second device for display, and obtains the exit location of the cursor when the cursor is moved out of the first screen. The exit location may also be referred to as a traversal location. This is not limited in embodiments of this application. The exit location, that is, the traversal location of the mouse on the screen, may be a coordinate of the mouse on the screen.

The first device may calculate, based on the exit location, the initial location of the cursor on the second screen, that is, an initial location of the cursor after the cursor traverses.

According to the keyboard-mouse traversal method provided in this application, the initial location of the cursor on the second screen may be calculated based on the exit location, which facilitates coherence between the initial location and the exit location, and implements automatic adjustment of a display location of the cursor based on different devices, thereby helping improve user experience.

With reference to the first aspect, in some implementations of the first aspect, that the first device determines, based on the exit location, an initial location from which the cursor enters the second screen includes: The first device determines the initial location based on the exit location, a screen resolution of the first screen, and a screen resolution of the second screen.

It may be understood that the screen resolution of the first screen is different from the screen resolution of the second screen.

The first device may determine, based on a difference between the screen resolutions, the initial location adapted to the exit location.

According to the keyboard-mouse traversal method provided in this application, the initial location adapted to the exit location is determined based on the difference between the screen resolutions, which helps offset a display location difference of the cursor caused by the screen resolution difference, and implements automatic adjustment of a display location of the cursor based on different devices, thereby helping improve user experience.

With reference to the first aspect, in some implementations of the first aspect, that the first device determines the initial location based on the exit location, a screen resolution of the first screen, and a screen resolution of the second screen includes: The first device determines a first conversion ratio based on the screen resolution of the first screen and the screen resolution of the second screen. The first device determines the initial location based on the exit location and the first conversion ratio.

The first conversion ratio may be a ratio of the screen resolution of the first screen to the screen resolution of the second screen, and a difference between screen resolutions of different devices is reflected by using the ratio. Alternatively, the first conversion ratio may be a ratio of the screen resolution of the second screen to the screen resolution of the first screen. This is not limited in embodiments of this application. The first conversion ratio may also be referred to as a sensitivity conversion ratio.

The first device may determine a product of the exit location and the first conversion ratio as the initial location.

According to the keyboard-mouse traversal method provided in this application, a difference between resolutions of different screens is reflected by using the first conversion ratio, and then the initial location is determined by using the exit location and the first conversion ratio, so that a difference between the initial location and the exit location can be balanced, thereby facilitating coherence between the initial location and the exit location.

With reference to the first aspect, in some implementations of the first aspect, the method further includes: The first device obtains a first moving velocity of the cursor on the first screen in response to the second operation. The first device determines a second moving velocity of the cursor on the second screen based on the first moving velocity. The first device sends the second moving velocity to the second device, to indicate the second device to move the cursor on the second screen at the second moving velocity.

Different screen resolutions also cause different moving velocities of the mouse. Therefore, in this application, the second moving velocity of the cursor on the second screen may be further determined based on the first moving velocity of the cursor on the first screen, so that the mouse has coherent moving velocities when traversing between different devices.

The first moving velocity and the second moving velocity may also be referred to as mouse sensitivity. This is not limited in embodiments of this application. The second moving velocity may also be referred to as a moving velocity after the keyboard-mouse traverses. The first moving velocity and the second moving velocity are displacements per unit time, or may be understood as quantities of pixels over which the mouse is moved per unit time. The unit time may be preset. For example, the preset time may be 3 milliseconds, 4 milliseconds, or 20 milliseconds. This is not limited in embodiments of this application.

According to the keyboard-mouse traversal method provided in this application, the second moving velocity of the cursor on the second screen may be calculated based on the first moving velocity of the cursor on the first screen, which facilitates coherence between the first moving velocity and the second moving velocity, and implements automatic adjustment of a moving velocity of the cursor based on different devices, thereby helping improve user experience.

With reference to the first aspect, in some implementations of the first aspect, that the first device determines a second moving velocity of the cursor on the second screen based on the first moving velocity includes: The first device determines the second moving velocity based on the first moving velocity, a screen resolution of the first screen, and a screen resolution of the second screen.

It may be understood that the screen resolution of the first screen is different from the screen resolution of the second screen.

The first device may determine, based on a difference between the screen resolutions, the second moving velocity adapted to the first moving velocity.

According to the keyboard-mouse traversal method provided in this application, the second moving velocity adapted to the first moving velocity is determined based on the difference between the screen resolutions, which helps offset a moving velocity difference of the cursor caused by the screen resolution difference, and implements automatic adjustment of a moving velocity of the cursor based on different devices, thereby helping improve user experience.

With reference to the first aspect, in some implementations of the first aspect, that the first device determines the second moving velocity based on the first moving velocity, a screen resolution of the first screen, and a screen resolution of the second screen includes: The first device determines a second conversion ratio based on the screen resolution of the first screen and the screen resolution of the second screen. The first device determines the second moving velocity based on the first moving velocity and the second conversion ratio.

The second conversion ratio may be a ratio of the screen resolution of the first screen to the screen resolution of the second screen, and a difference between screen resolutions of different devices is reflected by using the ratio. Alternatively, the second conversion ratio may be a ratio of the screen resolution of the second screen to the screen resolution of the first screen. This is not limited in embodiments of this application. The second conversion ratio may also be referred to as a sensitivity conversion ratio.

The first device may determine a product of the first moving velocity and the second conversion ratio as the second moving velocity.

According to the keyboard-mouse traversal method provided in this application, a difference between resolutions of different screens is reflected by using the second conversion ratio, and then the second moving velocity is determined by using the first moving velocity and the second conversion ratio, so that a difference between the first moving velocity and the second moving velocity may be balanced, thereby facilitating coherence between the first moving velocity and the second moving velocity.

With reference to the first aspect, in some implementations of the first aspect, after the first device controls the cursor to move out of the first screen and enter the second screen of the second device for display, the method further includes: The first device receives the third operation. The first device intercepts an input event corresponding to the third operation. The first device sends the input event to the second device. The second device determines, based on the input event, the control instruction corresponding to the third operation.

The first device controls, in response to the third operation, the cursor to move out of the first screen and enter the second screen of the second device for display. In this case, the input device may input a control instruction on the second device. When the user inputs a control instruction on the second device by using the input device, the first device may receive an input event corresponding to the operation of the user. The first device may intercept the input event, and send the input event corresponding to the third operation to the second device, to indicate the second device to execute the control instruction corresponding to the third operation. The input event may be clicking, double-clicking, dragging, or moving. The control instruction is a process triggered by clicking, double-clicking, dragging, or moving.

According to the keyboard-mouse traversal method provided in this application, when the cursor corresponding to the input device connected to the first device is moved to the second device, the first device may intercept an input event corresponding to an operation acting on the input device, and send the input event to the second device, and the second device executes a control instruction corresponding to the operation acting on the input device, so that the input device can be shared between different devices without switching different operation modes between the different devices, thereby avoiding complex operations and improving user experience.

With reference to the first aspect, in some implementations of the first aspect, after the first device controls, in response to the second operation, the cursor to move out of the first screen and enter the second screen of the second device for display, the method further includes: The first device detects a sixth operation acting on the input device. The sixth operation is used to drag, toward the first device, the cursor displayed on the second screen. The first device controls, in response to the sixth operation, the cursor to move out of the second screen and enter the first screen of the second device for display. The first device stops intercepting an input event corresponding to an operation acting on the input device, to execute a control instruction corresponding to the operation on the input device.

The sixth operation is used to drag, toward a direction in which the first device is located, the cursor displayed on the second screen. To be specific, the user controls the input device to move the cursor on the second screen toward the first screen. The first device controls, in response to the sixth operation, the cursor to move out of the second screen and enter the first screen for display. In this case, the input device may input a control instruction on the first device. When the user inputs a control instruction on the first device by using the input device, the first device may stop intercepting an input event corresponding to the operation of the user, and may execute, when receiving the input event corresponding to the operation of the user, the control instruction corresponding to the operation of the user.

According to the keyboard-mouse traversal method provided in this application, when the cursor corresponding to the input device connected to the first device is moved back (or traverses back) from the second device to the first device, the first device may stop intercepting an input event corresponding to an operation acting on the input device, and execute a control instruction corresponding to the operation acting on the input device, so that the input device can switch between different devices back and forth and control a switched-to device.

With reference to the first aspect, in some implementations of the first aspect, after the first device controls, in response to the second operation, the cursor to move out of the first screen and enter the second screen of the second device for display, the method further includes: The first device receives a seventh operation acting on the input device. The seventh operation is used to input, on the second device, a control instruction for compulsorily recapturing the cursor. The first device controls, in response to the seventh operation, the cursor to be displayed on the first screen. The first device stops intercepting an input event corresponding to an operation acting on the input device, to execute a control instruction corresponding to the operation on the input device.

When the cursor of the input device is displayed on the second device, the user may compulsorily recapture the input device by using a shortcut key, that is, display the cursor of the input device on the first device. When the first device receives an operation (that is, the seventh operation) of the user triggering the shortcut key for compulsively recapturing the input device, the cursor corresponding to the input device may be displayed at a specified location on the screen of the first device in response to the operation of the user. The shortcut key for compulsively recapturing the input device may be Esc or Ctrl+Alt+DELETE, and the specified location on the screen may be a center of the screen, but this application is not limited thereto.

When the cursor of the input device is displayed on the first device, the input device may input a control instruction on the first device. When the user inputs a control instruction on the first device by using the input device, the first device may stop intercepting an input event corresponding to the operation of the user, and may execute, when receiving the input event corresponding to the operation of the user, the control instruction corresponding to the operation of the user.

According to the keyboard-mouse traversal method provided in this application, the user can compulsorily move, back to the first device by using a control instruction, the cursor moved to another device. The user does not need to move the cursor, so that efficiency can be improved. In addition, the method can be applied to more scenarios, for example, a scenario in which the user cannot see the cursor. This can meet different requirements of the user and improve user experience.

With reference to the first aspect, in some implementations of the first aspect, the first direction is left or right, and after the first device establishes the connection to the second device in the first direction of the first device, the method further includes: The first device detects that the second device is moved from the first direction to a second direction opposite to the first direction. The first device controls, in response to an eighth operation, the cursor to move out of the first screen and enter the second screen of the second device for display. The eighth operation and the second operation are in opposite cursor dragging directions.

That the second device is moved from the first direction to a second direction opposite to the first direction is that the second device is moved from being in the first direction of the first device to being in the second direction of the second device. If the first direction is left, the second direction opposite to the first direction is right. If the first direction is right, the second direction opposite to the first direction is left.

Because the second device is in the second direction of the first device, if the cursor is controlled to move out of the first screen and enter the second screen for display, the eighth operation may be used to drag, toward the second direction, the cursor displayed on the first screen, which is opposite to the second operation in cursor dragging directions.

According to the keyboard-mouse traversal method provided in this application, the direction of the second device relative to the first device may be automatically detected. If the direction of the second device relative to the first device is left or right, and the direction of the second device relative to the first device is changed to an opposite direction, the direction in which the cursor is moved from the first device to the second device is also changed to the opposite direction, to meet user habit, thereby improving user experience.

With reference to the first aspect, in some implementations of the first aspect, the first direction is left or right, and after the first device establishes the connection to the second device in the first direction of the first device, the method further includes: The first device detects that the second device is moved from the first direction to middle. The first device controls, in response to a ninth operation, the cursor to move out of the first screen and enter the second screen of the second device for display. The ninth operation and the second operation are in a same cursor dragging direction.

That the second device is moved from the first direction to middle may include: the second device is moved from left to middle, or the second device is moved from right to middle.

Because the direction of the second device relative to the first device is changed to middle, if the cursor is controlled to move out of the first screen and enter the second screen for display, the ninth operation may be used to drag, toward the first direction, the cursor displayed on the first screen, that is, the same as the second operation in cursor dragging directions. In other words, when the direction of the second device relative to the first device is changed to middle, a traversing direction of the cursor from the first device to the second device remains unchanged.

According to the keyboard-mouse traversal method provided in this application, the direction of the second device relative to the first device may be automatically detected. If the direction of the second device relative to the first device is changed to middle, the direction in which the cursor is moved from the first device to the second device remains unchanged.

With reference to the first aspect, in some implementations of the first aspect, the first direction is middle, and after the first device establishes the connection to the second device in the first direction of the first device, the method further includes: The first device detects that the second device is moved from the first direction to a second direction. The second direction is left or right. The first device controls, in response to a tenth operation, the cursor to move out of the first screen and enter the second screen of the second device for display. The tenth operation is in a same direction as the second direction.

That the second device is moved from the first direction to a second direction may include: the second device is moved from middle to left, or the second device is moved from middle to right.

Because the second device is moved from middle to left or right, if the cursor is controlled to move out of the first screen and enter the second screen for display, the tenth operation may be used to drag, toward left or right (that is, the second direction), the cursor displayed on the first screen. That is, the tenth operation is in a same direction as the second direction.

According to the keyboard-mouse traversal method provided in this application, the direction of the second device relative to the first device may be automatically detected. If the direction of the second device relative to the first device is changed to left or right, the direction in which the cursor is moved from the first device to the second device is the same as the second direction.

With reference to the first aspect, in some implementations of the first aspect, the first direction is left or right, the first device is connected to a third device in a second direction of the first device, and the second direction is opposite to the first direction. After the first device establishes the connection to the second device in the first direction of the first device, the method further includes: The first device detects that the second device is moved from the first direction to the second direction. The first device controls, in response to an eleventh operation, the cursor to move out of the first screen and enter the second screen of the second device for display. The eleventh operation and the second operation are in a same cursor dragging direction.

As the first device is connected to the second device in the first direction of the first device, and is connected to the third device in the second direction of the first device, if the direction of the second device relative to the first device is changed to the second direction, because the third device exists in the second direction of the first device, the direction in which the cursor is moved from the first device to the second device remains unchanged, that is, the eleventh operation and the second operation are in the same cursor dragging direction.

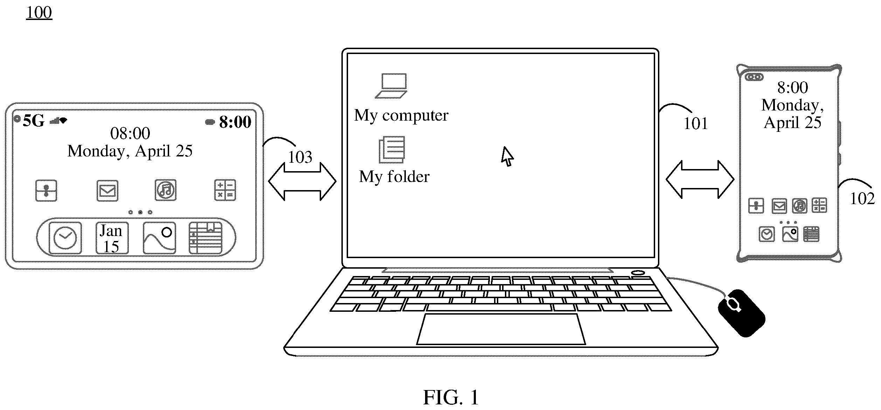

For example, in an example shown in FIG. 1 in embodiments, the first device is a computer 101, the second device is a mobile phone 102, and the third device is a tablet 103. When the computer 101 implements keyboard-mouse traversal to the mobile phone 102 and the tablet 103, as the mobile phone 102 and the tablet 103 are located on two sides (a right side and a left side) of the computer 101, if a location of the mobile phone 102 is changed to be on a same side as the tablet 103, or a location of the tablet 103 is changed to be on a same side as the mobile phone 102, the computer 101 does not change original traversing directions of the mouse.

With reference to the first aspect, in some implementations of the first aspect, before the first device detects the first operation acting on the input device, the method further includes: The first device discovers the second device. The first device obtains a device identifier of the second device and a device angle of the second device relative to the first device. The first device determines a coordinate direction and a traversing direction of the second device based on the device angle. The first device records the device identifier, the device angle, the coordinate direction, and the traversing direction in a device table.

The first device performs device discovery, and discovers that the second device exists. The first device may obtain the device identifier of the second device. The first device may obtain the device angle of the second device relative to the first device by using an ultrasonic method. The device angle may also be referred to as a coordinate angle. This is not limited in embodiments of this application.

The first device may determine a direction, that is, the coordinate direction, of the second device relative to the first device based on the device angle of the second device relative to the first device. The first device may determine, based on the coordinate direction, the traversing direction, that is, a direction in which the cursor is moved from the first device to the second device.

For example, the device angle of the second device relative to the first device is 60°, the coordinate direction of the second device is left, and the traversing direction is left.

The first device may store, in the device table, device information of the second device: the device identifier, the device angle, the coordinate direction, and the traversing direction.

According to the keyboard-mouse traversal method provided in this application, information about a discovered device may be recorded by using a device table, which facilitates subsequent quick information determining or connection.

With reference to the first aspect, in some implementations of the first aspect, after the first device establishes the connection to the second device in the first direction of the first device, the method further includes: The first device detects that the second device is moved. After detecting that the second device is static, the first device further detects a device angle of the second device after the movement. If the device angle after the movement and the device angle before the movement do not belong to a same angle range, the first device determines, based on the device angle after the movement, a coordinate direction after the movement and a traversing direction after the movement. Each coordinate direction corresponds to a preset angle range. The first device updates the device table based on the coordinate direction after the movement and the traversing direction after the movement.

The second device may sense movement by using a sensor, for example, an acceleration sensor, and send movement information to the first device, so that the first device can detect that the second device is moved. After the first device detects that the second device is static, the first device may further obtain a device angle of the second device after the movement, and determine, based on the device angle after the movement, a coordinate direction after the movement and a traversing direction after the movement.

The first device may determine, based on whether the device angle after the movement and the device angle before the movement belong to a same angle range, whether the coordinate direction after the movement is changed, and then determine, based on the coordinate direction, whether the traversing direction is changed.

If the device angle after the movement and the device angle before the movement do not belong to a same angle range, it may indicate that the coordinate direction is changed, and the first device may update the device table. The first device may determine, based on the change of the coordinate direction, whether the traversing direction is changed. If the traversing direction is changed, the first device may update the device table.

According to the keyboard-mouse traversal method provided in this application, when an angle of a discovered device is changed, device information can be updated in real time, which facilitates accurate understanding of the device information, thereby improving accuracy of keyboard-mouse traversal.

With reference to the first aspect, in some implementations of the first aspect, the coordinate direction includes: left, right, and middle, the first direction is left or right, the first device determines, based on the device angle after the movement, the coordinate direction after the movement and the traversing direction after the movement, and the method further includes: When the coordinate direction after the movement is a second direction opposite to the first direction, if a connected third device exists in the second direction, the traversing direction after the movement is the same as the traversing direction before the movement. When the coordinate direction after the movement is the second direction opposite to the first direction, if the connected third device does not exist in the second direction, the traversing direction after the movement is opposite to the traversing direction before the movement. When the coordinate direction after the movement is middle, the traversing direction after the movement is a default traversing direction or is the same as the traversing direction before the movement.

The traversing direction between the first device and the second device is related to the coordinate direction of the first device relative to the second device.

If the coordinate direction of the second device relative to the first device is changed, the coordinate direction before the movement (that is, the first direction) is left or right, and the coordinate direction after the movement is opposite to the coordinate direction before the movement, the first device detects whether a connected third device exists in the coordinate direction after the movement. If the connected third device exists, the traversing direction after the movement is the same as the traversing direction before the movement. If the connected third device does not exist, the traversing direction after the movement is opposite to the traversing direction before the movement.

If the coordinate direction of the second device relative to the first device is changed, the coordinate direction before movement (that is, the first direction) is left or right, and the coordinate direction after movement is middle, the traversing direction after the movement is a default traversing direction or is the same as the traversing direction before the movement (which may also be referred to as a historical traversing direction).

With reference to the first aspect, in some implementations of the first aspect, the cursor is displayed in a first shape on the first screen, the cursor is displayed in a second shape on the second screen, and the first shape is different from the second shape.

When the cursor traverses between different devices, the cursor may be in different shapes.

In an example shown in FIG. 2, a shape of the cursor displayed on a screen of a computer is an arrow, while a shape of the cursor displayed on a screen of a mobile phone is a circle.

With reference to the first aspect, in some implementations of the first aspect, the first device runs a Windows system, and the second device runs an Android system.

According to a second aspect, a terminal device is provided, which may also be referred to as a first device. The first device is connected to an input device configured to input a control instruction, and the first device includes a first screen. The first device includes a display module and a processing module. The display module is configured to display, on the first screen, a cursor corresponding to the input device. The processing module is configured to: detect a first operation acting on the input device, where the first operation is used to drag the cursor to determine a first direction as a connecting direction; establish, in response to the first operation, a connection to a second device in the first direction of the first device; detect a second operation acting on the input device, where the second operation is used to drag, toward the first direction, the cursor displayed on the first screen; and control, in response to the second operation, the cursor to move out of the first screen and enter a second screen of the second device for display, where the second device executes, in response to a third operation acting on the input device, a control instruction corresponding to the third operation, and the third operation is used to input the control instruction on the second device.

With reference to the second aspect, in some implementations of the second aspect, the processing module is further configured to: find, in response to the first operation, a second device meeting a connection condition in the first direction; and establish a connection to the second device.

With reference to the second aspect, in some implementations of the second aspect, the processing module is further configured to: perform device discovery; store, in a device table, a device identifier of a device meeting the connection condition and a direction of the device meeting the connection condition relative to the first device; and find the second device meeting the connection condition in the first direction from the device table in response to the first operation.

With reference to the second aspect, in some implementations of the second aspect, the processing module is further configured to: detect that a direction of the second device relative to the first device is changed; and update the direction of the second device relative to the first device in the device table.

With reference to the second aspect, in some implementations of the second aspect, the processing module is further configured to: detect a fourth operation of a user, where the fourth operation is used to select the second device.

With reference to the second aspect, in some implementations of the second aspect, the display module is further configured to display a first interface, where the first interface includes an automatic connection option. The processing module is further configured to select the automatic connection option in response to an operation acting on the automatic connection option.

With reference to the second aspect, in some implementations of the second aspect, the display module is further configured to display a second interface in response to an operation of opening a first application on the first device. The second interface includes: a first icon representing the first device, a second icon representing the second device, and placing areas respectively located at two sides of the first icon. The processing module is further configured to establish a connection to the second device in response to a fifth operation of dragging the second icon to a first placing area. The first placing area is located in the first direction of the first device.

With reference to the second aspect, in some implementations of the second aspect, the processing module is further configured to: determine, in response to the fifth operation, whether a connected device exists in the first direction; and if the connected device does not exist, establish a connection to the second device; or if the connected device exists, prohibit connecting to the second device, and restore a location of the second icon to a location before the dragging.

With reference to the second aspect, in some implementations of the second aspect, the connection condition is that login accounts of the second device and the first device are the same.

With reference to the second aspect, in some implementations of the second aspect, the processing module is further configured to: obtain, in response to the second operation, an exit location from which the cursor is moved out of the first screen; determine, based on the exit location, an initial location from which the cursor enters the second screen; and send the initial location to the second device, to indicate the second device to display the cursor at the initial location of the second screen.

With reference to the second aspect, in some implementations of the second aspect, the processing module is further configured to determine the initial location based on the exit location, a screen resolution of the first screen, and a screen resolution of the second screen.

With reference to the second aspect, in some implementations of the second aspect, the processing module is further configured to: determine a first conversion ratio based on the screen resolution of the first screen and the screen resolution of the second screen; and determine the initial location based on the exit location and the first conversion ratio.

With reference to the second aspect, in some implementations of the second aspect, the processing module is further configured to: obtain a first moving velocity of the cursor on the first screen in response to the second operation; determine a second moving velocity of the cursor on the second screen based on the first moving velocity; and send the second moving velocity to the second device, to indicate the second device to move the cursor on the second screen at the second moving velocity.

With reference to the second aspect, in some implementations of the second aspect, the processing module is further configured to determine the second moving velocity based on the first moving velocity, a screen resolution of the first screen, and a screen resolution of the second screen.

With reference to the second aspect, in some implementations of the second aspect, the processing module is further configured to: determine a second conversion ratio based on the screen resolution of the first screen and the screen resolution of the second screen; and determine the second moving velocity based on the first moving velocity and the second conversion ratio.

With reference to the second aspect, in some implementations of the second aspect, the first device further includes a transceiver module. The transceiver module is configured to receive the third operation. The processing module is further configured to: intercept an input event corresponding to the third operation; and send the input event to the second device. The second device determines, based on the input event, the control instruction corresponding to the third operation.

With reference to the second aspect, in some implementations of the second aspect, the processing module is further configured to: detect a sixth operation acting on the input device, where the sixth operation is used to drag, toward the first device, the cursor displayed on the second screen; control, in response to the sixth operation, the cursor to move out of the second screen and enter the first screen of the second device for display; and stop intercepting an input event corresponding to an operation acting on the input device, to execute a control instruction corresponding to the operation on the input device.

With reference to the second aspect, in some implementations of the second aspect, the first device further includes a transceiver module. The transceiver module is configured to receive a seventh operation acting on the input device. The seventh operation is used to input, on the second device, a control instruction for compulsorily recapturing the cursor. The processing module is further configured to: control, in response to the seventh operation, the cursor to be displayed on the first screen; and stop intercepting an input event corresponding to an operation acting on the input device, to execute a control instruction corresponding to the operation on the input device.

With reference to the second aspect, in some implementations of the second aspect, the first direction is left or right, and the processing module is configured to: detect that the second device is moved from the first direction to a second direction opposite to the first direction; and control, in response to an eighth operation, the cursor to move out of the first screen and enter the second screen of the second device for display. The eighth operation and the second operation are in opposite cursor dragging directions.

With reference to the second aspect, in some implementations of the second aspect, the first direction is left or right, and the processing module is configured to: detect that the second device is moved from the first direction to middle; and control, in response to a ninth operation, the cursor to move out of the first screen and enter the second screen of the second device for display. The ninth operation and the second operation are in a same cursor dragging direction.

With reference to the second aspect, in some implementations of the second aspect, the first direction is middle, and the processing module is configured to: detect that the second device is moved from the first direction to a second direction, where the second direction is left or right; and control, by the first device in response to a tenth operation, the cursor to move out of the first screen and enter the second screen of the second device for display. The tenth operation is in a same direction as the second direction.

With reference to the second aspect, in some implementations of the second aspect, the first direction is left or right, the first device is connected to a third device in a second direction of the first device, and the second direction is opposite to the first direction. The processing module is configured to: detect that the second device is moved from the first direction to the second direction; and control, by the first device in response to an eleventh operation, the cursor to move out of the first screen and enter the second screen of the second device for display. The eleventh operation and the second operation are in a same cursor dragging direction.

With reference to the second aspect, in some implementations of the second aspect, the processing module is further configured to: discover the second device; obtain a device identifier of the second device and a device angle of the second device relative to the first device; determine a coordinate direction and a traversing direction of the second device based on the device angle; and record the device identifier, the device angle, the coordinate direction, and the traversing direction in a device table.

With reference to the second aspect, in some implementations of the second aspect, the processing module is further configured to: detect that the second device is moved; after detecting that the second device is static, further detect a device angle of the second device after the movement; if the device angle after the movement and the device angle before the movement do not belong to a same angle range, determine, based on the device angle after the movement, a coordinate direction after the movement and a traversing direction after the movement, where each coordinate direction corresponds to a preset angle range; and update the device table based on the coordinate direction after the movement and the traversing direction after the movement.

With reference to the second aspect, in some implementations of the second aspect, the coordinate direction includes: left, right, and middle, the first direction is left or right, and the processing module is further configured to: when the coordinate direction after the movement is a second direction opposite to the first direction, if a connected third device exists in the second direction, the traversing direction after the movement is the same as the traversing direction before the movement; or when the coordinate direction after the movement is the second direction opposite to the first direction, if the connected third device does not exist in the second direction, the traversing direction after the movement is opposite to the traversing direction before the movement; or when the coordinate direction after the movement is middle, the traversing direction after the movement is a default traversing direction or is the same as the traversing direction before the movement.

With reference to the second aspect, in some implementations of the second aspect, the cursor is displayed in a first shape on the first screen, the cursor is displayed in a second shape on the second screen, and the first shape is different from the second shape.

With reference to the second aspect, in some implementations of the second aspect, the first device runs a Windows system, and the second device runs an Android system.

According to a third aspect, this application provides a terminal device, including a processor. The processor is coupled to a memory, and may be configured to execute instructions in the memory, to implement the method in any possible implementation in the first aspect. Optionally, the terminal device further includes the memory. Optionally, the terminal device further includes a transceiver, and the processor is coupled to the transceiver.

According to a fourth aspect, this application provides a processor, including: an input circuit, an output circuit, and a processing circuit. The processing circuit is configured to receive a signal by using the input circuit and transmit a signal by using the output circuit, to enable the processor to perform the method in any possible implementation in the first aspect.

In a specific implementation process, the processor may be a chip, the input circuit may be an input pin, the output circuit may be an output pin, and the processing circuit may be a transistor, a gate circuit, a flip-flop, various logic circuits, or the like. An input signal received by the input circuit may be, for example but not limited to, received and input by a receiver, a signal output by the output circuit may be, for example but not limited to, output to a transmitter or transmitted by the transmitter, the input circuit and the output circuit may be a same circuit, and the circuit serves as an input circuit and an output circuit respectively at different moments. Specific implementations of the processor and the circuits are not limited in this application.

According to a fifth aspect, this application provides a processing apparatus, including a processor and a memory. The processor is configured to read instructions stored in the memory, and may receive a signal by using a receiver and transmit a signal by using a transmitter, to perform the method in any possible implementation in the first aspect.

Optionally, there is one or more processors, and there is one or more memories.

Optionally, the memory may be integrated with the processor, or the memory and the processor are disposed separately.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

It should be understood that, for related data interaction processes, for example, sending indication information may be a process of outputting indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus in the seventh aspect may be a chip. The processor may be implemented by hardware, or may be implemented by software. When the processor is implemented by hardware, the processor may be a logic circuit, an integrated circuit, or the like. When the processor is implemented by software, the processor may be a general-purpose processor and implemented by reading software code stored in the memory. The memory may be integrated inside the processor, or may be located outside the processor and independently exist.

According to an eighth aspect, this application provides a computer-readable storage medium. The computer-readable storage medium stores a computer program (which may also be referred to as code or instructions). When the computer program is run on a computer, the computer is enabled to perform the method in any possible implementation in the first aspect.

According to a ninth aspect, this application provides a computer program product. The computer program product includes a computer program (which may also be referred to as code or instructions). When the computer program is run, a computer is enabled to perform the method in any possible implementation in the first aspect.

## BRIEF DESCRIPTION OF DRAWINGS

FIG. 1 is a diagram of a communication system to which embodiment of this applications are applicable;
FIG. 2 is a diagram of a type of keyboard-mouse traversal according to an embodiment of this application;

FIG. 3 is a diagram of compulsively recapturing a keyboard-mouse according to an embodiment of this application;
FIG. 4 is a diagram of cross-device photo sharing according to an embodiment of this application;
FIG. 5 is a diagram of an interface of a computer manager according to an embodiment of this application;
FIG. 6 is a diagram of another type of keyboard-mouse traversal according to an embodiment of this application;
FIG. 7 is a diagram of still another type of keyboard-mouse traversal according to an embodiment of this application;
FIG. 8 is a diagram of another type of keyboard-mouse traversal according to an embodiment of this application;
FIG. 9 is a diagram of a visual interface according to an embodiment of this application;
FIG. 10 is a diagram of a location change according to an embodiment of this application;
FIG. 11 is a diagram of a location according to an embodiment of this application;
FIG. 12 is a schematic flowchart of a keyboard-mouse traversal control method according to an embodiment of this application;
FIG. 13 is a block diagram of a software structure of a PC according to an embodiment of this application;
FIG. 14 is a block diagram of a software structure of an Android device according to an embodiment of this application;
FIG. 15 is a schematic flowchart of a startup method in a keyboard-mouse scenario according to an embodiment of this application;
FIG. 16 is a schematic flowchart of an automatic connection method according to an embodiment of this application;
FIG. 17 is a schematic flowchart of a manual connection method according to an embodiment of this application;
FIG. 18 is a schematic flowchart of a keyboard-mouse connection method according to an embodiment of this application;
FIG. 19 is a diagram of a mouse location detection method according to an embodiment of this application;
FIG. 20 is a diagram of establishing a screen coordinate system according to an embodiment of this application;
FIG. 21 is a schematic flowchart of a keyboard-mouse traversal method according to an embodiment of this application;
FIG. 22 is a schematic flowchart of a method for determining an initial location of keyboard-mouse traversal according to an embodiment of this application;
FIG. 23 is a schematic flowchart of a mouse moving velocity determining method according to an embodiment of this application;
FIG. 24 is a schematic flowchart of a method for intercepting a keyboard-mouse event by a PC according to an embodiment of this application;
FIG. 25 is a schematic flowchart of a method for compulsively recapturing a keyboard-mouse according to an embodiment of this application;
FIG. 26 is a schematic flowchart of a traversing direction adjustment method according to an embodiment of this application;
FIG. 27 is a schematic flowchart of another traversing direction adjustment method according to an embodiment of this application;
FIG. 28 is a block diagram of a terminal device according to an embodiment of this application; and
FIG. 29 is a block diagram of another terminal device according to an embodiment of this application.

## DESCRIPTION OF EMBODIMENTS

The following describes technical solutions in this application with reference to accompanying drawings.

To clearly describe technical solutions in embodiments of this application, words such as "first" and "second" are used in embodiments of this application to distinguish between same items or similar items that provide basically same functions or effects. A person skilled in the art may understand that the words such as "first" and "second" do not limit a quantity or an execution sequence, nor indicate a definite difference.

It should be noted that, in this application, the word such as "example" or "for example" indicates giving an example, an illustration, or a description. Any embodiment or design solution described as an "example" or "for example" in this application should not be explained as being more preferred or advantageous over another embodiment or design solution. Exactly, use of the words such as "example" or "for example" is intended to present a related concept in a specific manner.

In addition, "at least one" means one or more, and "a plurality of" means two or more. The term "and/or" describes an association relationship between associated objects and represents that three relationships may exist. For example, A and/or B may represent the following cases: only A exists, both A and B exist, and only B exists, where A and B may be singular or plural. The character "/" in this specification generally indicates an "or" relationship between the associated objects. The representation "at least one of the following items (pieces)" or a similar representation thereof indicates any combination of these items, including a single item (piece) or any combination of a plurality of items (pieces). For example, at least one item (piece) of a, b, and c may indicate a, b, c, a and b, a and c, b and c, or a, b, and c, where a, b, and c may be singular or plural.

Embodiments of this application provide a keyboard-mouse traversal method, so that different terminal devices can be operated by using a mouse and a keyboard, to implement seamless access between the different terminal devices.

To better understand embodiments of this application, a communication system to which embodiments of this application are applicable is first described.

FIG. 1 is a diagram of a communication system 100. As shown in FIG. 1, the communication system 100 includes a computer 101, a mobile phone 102, and a tablet 103. An operating system of the computer 101 is a Windows system, and operating systems of the mobile phone 102 and the tablet 103 are Android (Android) systems. A keyboard-mouse may traverse between the computer 101 and the mobile phone 102, and traverse between the computer 101 and the tablet 103. That is, the computer 101, the mobile phone 102, and the tablet 103 can share a mouse and a keyboard. In this case, the computer 101 may be referred to as a source device or a transmit end, and the mobile phone 102 and the tablet 103 may be referred to as peer devices or receive ends, but embodiments of this application are not limited thereto.

The computer 101 may implement keyboard-mouse traversal to two devices. The two devices may both run an Android system. In an example shown in FIG. 1, the computer 101 may implement keyboard-mouse traversal to the mobile phone 102 and the tablet 103. In addition, the computer 101 may alternatively implement keyboard-mouse traversal only to the mobile phone 102 or the tablet 103. That is, the computer 101 shares the mouse and the keyboard with the mobile phone 102, or the computer 101 shares the mouse and the keyboard with the tablet 103. In this case, the computer 101 is a source device, and the mobile phone 102 or the tablet 103 is a peer device.

A left side or a right side of the computer 101 may implement keyboard-mouse traversal to one device. To be specific, the computer 101 can support keyboard-mouse traversal from a left side of a screen of the computer 101 to one other device, and can also support keyboard-mouse traversal from a right side of the screen of the computer 101 to one other device. If the computer 101 can implement keyboard-mouse traversal to the mobile phone 102 and the tablet 103, the mobile phone 102 is on the right side of the computer 101 and the tablet 103 is on the left side of the computer 101, or the mobile phone 102 is on the left side of the computer 101 and the tablet 103 is on the right side of the computer 101. If the mobile phone 102 and the tablet 103 are both on the left side of the computer 101, or the mobile phone 102 and the tablet 103 are both on the right side of the computer 101, the computer 101 may implement keyboard-mouse traversal to one device (the mobile phone 102 or the tablet 103) at a time.

After the keyboard-mouse of the computer 101 traverses to the mobile phone 102 and/or the tablet 103, a user may perform an operation such as clicking, dragging, or double-clicking on the mobile phone 102 and/or the tablet 103 by using the mouse, and may input information on the mobile phone 102 and/or the tablet 103 by using the keyboard.

For example, FIG. 2 is a diagram of a type of keyboard-mouse traversal. As shown in an interface a in FIG. 2, the computer 101 may implement keyboard-mouse traversal to the mobile phone 102. To be specific, a mouse pointer 1011 displayed on the computer 101 may traverse from the screen of the computer 101 to a screen of the mobile phone 102. When the computer 101 detects the traversing operation of the mouse pointer 1011, an interface b in FIG. 2 may be displayed. As shown in the interface b in FIG. 2, the mouse pointer 1011 may be displayed in a form of a circle on the screen of the mobile phone 102. The user may click a memo icon by using the mouse pointer 1011, and the mobile phone 102 may display an interface c in FIG. 2 in response to the operation of clicking the memo icon by the user. As shown in the interface c in FIG. 2, the mobile phone 102 displays a memo interface. The user may input information "pending items" in the memo interface by using the keyboard, and the mobile phone 102 displays a text "pending items" in the memo interface in response to the operation of inputting the information in the memo interface by the user.

It should be noted that, in this example, when the mouse pointer 1011 traverses from the computer 101 to the mobile phone 102, the mouse pointer 1011 is displayed in a form of a circle on the mobile phone 102. When the mobile phone 102 is externally connected to a mouse and/or a keyboard, the mobile phone 102 also displays a mouse pointer in a form of a circle. In another example, after the mouse pointer traverses from the computer to the mobile phone, the mouse pointer may alternatively be displayed in another form. This is not limited herein.

After the keyboard-mouse of the computer 101 traverses to the mobile phone 102 and/or the tablet 103, the user may compulsorily recapture the keyboard-mouse by using a shortcut key. When the computer 101 detects an operation of the user triggering the shortcut key for compulsorily recapturing the keyboard-mouse, the mouse may be displayed at a specified location on the screen of the computer 101 in response to the operation of the user. The shortcut key for compulsively recapturing the keyboard-mouse may be Esc or Ctrl+Alt+DELETE, and the specified location on the screen may be a center of the screen, but embodiments of this application are not limited thereto.

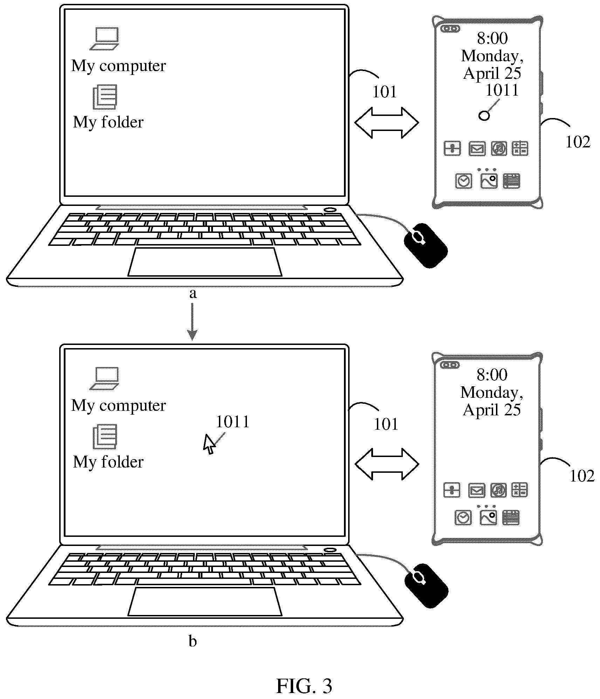

For example, FIG. 3 is a diagram of compulsively recapturing the keyboard-mouse. As shown in FIG. 3, the computer 101 may implement keyboard-mouse traversal to the mobile phone 102. The mouse pointer 1011 is displayed on the screen of the mobile phone 102. The computer 101 detects an operation of triggering Esc by the user, and displays the mouse pointer 1011 at the center of the screen of the computer 101 in response to the operation.

After the keyboard-mouse of the computer 101 traverses to the mobile phone 102 and/or the tablet 103, cross-device traversal of content such as files, photos, and music may be further implemented. To be specific, the user may drag content such as files, photos, and music in the mobile phone 102 and/or the tablet 103 to the computer 101, and may drag content such as files, photos, and music in the computer 101 to the mobile phone 102 and/or the tablet 103. It may be understood that embodiments of this application are not limited to the content such as files, photos, and music.

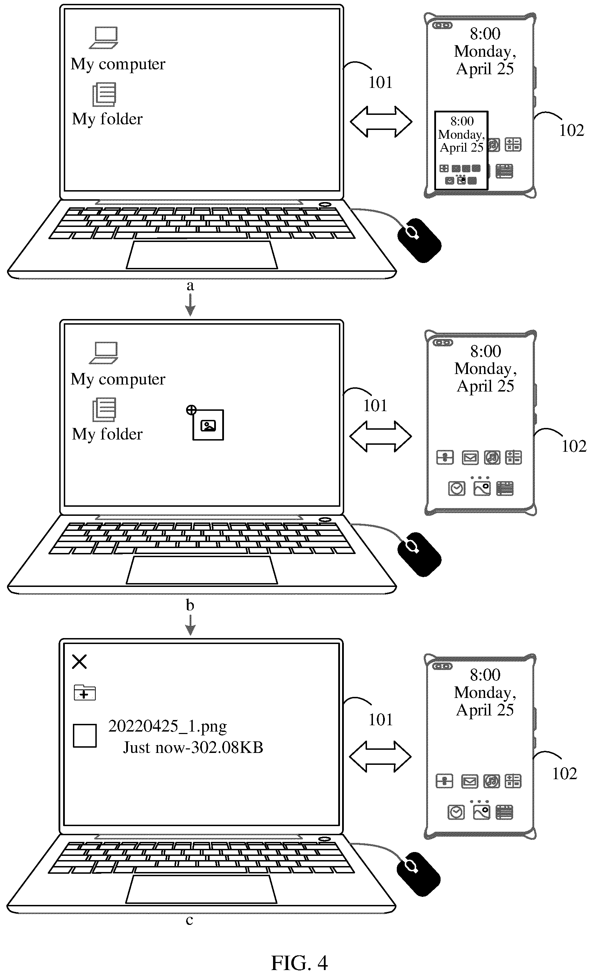

For example, FIG. 4 is a diagram of cross-device photo sharing. As shown in an interface a in FIG. 4, the computer 101 may implement keyboard-mouse traversal to the mobile phone 102. When the user takes a screenshot of a home screen, the mobile phone 102 generates the screenshot in response to the operation of taking the screenshot by the user, and displays a screenshot picture at a lower left corner of the screen. The user drags the screenshot picture to a desktop of the computer 101 by using the mouse. When detecting the operation of dragging the picture to the desktop of the computer 101 by the user, the computer 101 may display an interface b in FIG. 4 in response to the operation. As shown in the interface b in FIG. 4, the computer 101 may display a dragging icon of the screenshot picture. Correspondingly, the screenshot picture at a lower right corner of the screen of the mobile phone 102 disappears. When the computer 101 detects that the user cancels the dragging operation on the screenshot picture, the screenshot picture may be saved to a file manager in response to the operation, and an interface of the file manager is displayed, for example, as shown in an interface c in FIG. 4. In the interface c in FIG. 4, the computer 101 saves the screenshot picture in the file manager, names the screenshot picture 20220405_1 by default, displays that a format of the screenshot picture is png, displays that a size of the screenshot picture is 302.08 kilobytes (Kilobyte, kb), and displays that a time at which the screenshot picture is saved is "just now".

It should be noted that, the file manager can support any type of content. Therefore, the computer 101 may be configured to save content, such as pictures, music, and files, dragged to the desktop.

Optionally, if the user drags the screenshot picture to a gallery application program in the computer 101, the computer 101 may save the screenshot picture to the gallery application program in response to the operation of the user. It may be understood that if the user drags a file to the gallery application program in the computer 101, but the gallery application program does not support a format of the file, the computer 101 cannot save the file to the gallery application program.

A condition under which the computer 101 can implement keyboard-mouse traversal to the mobile phone 102 and the tablet 103 may be that the computer 101, the mobile phone 102, and the tablet 103 are logged in to by using a same account. When the computer 101, the mobile phone 102, and the tablet 103 are logged in to by using a same account, the computer 101, the mobile phone 102, and the tablet 103 may be connected through wifi or Bluetooth, where wifi may include a local area network or a peer to peer (peer to pee, P2P) network.

The computer 101 may sense all devices meeting the keyboard-mouse traversal condition, but a quantity of devices to which the computer 101 implements keyboard-mouse traversal may be two. When the computer 101 senses more than two devices, the computer 101 may implement, based on an operation of selecting a device by the user, keyboard-mouse traversal to the device selected by the user, or the computer 101 may autonomously select, based on a preset rule, a device for keyboard-mouse traversal. The preset rule is not limited in embodiments of this application.

There are two implementations in which computer 101 is connected to the mobile phone 102 and the tablet 103 for keyboard-mouse traversal. One possible implementation is manual. An automatic selection option is an option of enabling the computer 101 to autonomously select a to-be-connected device. When the automatic selection option is disabled (or not enabled), the user may manually drag or click connectable devices in a visual interface to connect the computer 101 to the mobile phone 102 and the tablet 103. The other possible implementation is automatic. When the automatic selection option is enabled, and the mobile phone 102 and the tablet 103 meet the keyboard-mouse traversal condition, the computer 101 may automatically connect to the mobile phone 102 and the tablet 103. The automatic selection option may be at different locations in different devices. For example, the automatic selection option may be in a computer manager of the computer 101. The automatic selection option may be in control centers or settings in the mobile phone 102 and the tablet 103.

For example, FIG. 5 is a diagram of an interface of the computer manager. As shown in FIG. 5, the interface of the computer manager may include options such as a home page, multi-screen collaboration, HyperTerminal, online skills, official services, intelligent audio visual, and system optimization. When the computer 101 detects that the user clicks the HyperTerminal option by using the mouse, a super keyboard-mouse interface may be displayed. The super keyboard-mouse interface includes two options. A first option is "control the mouse pointer to consecutively touch a side edge of the computer screen twice, to establish a connection". A second option is "automatically adjust screen arrangement with a change of a device placement location". The first option is selected in the current example. When the computer 101 detects that the mouse pointer consecutively touches a side edge of the computer screen twice, the computer 101 may connect to a device meeting the keyboard-mouse traversal condition. It may be understood that the first option is the automatic connection option. When this option is selected, the computer 101 may automatically connect to a device meeting the keyboard-mouse traversal condition. When the first option (that is, the automatic connection option) is not selected, the computer 101 provides a manual manner to connect to a device meeting the keyboard-mouse traversal condition.

The super keyboard-mouse interface in FIG. 5 may further display a connected device and an online device. As shown in the super keyboard-mouse interface, a tablet is connected on the left side of the PC, and there are three online devices. The three online devices include a mobile phone Magi4, a mobile phone Magi4xy, and a mobile phone Magi4y. When the automatic connection option is not enabled, the user may select a device for connection from the three online devices by using a clicking or dragging operation.

If the computer 101 automatically implements keyboard-mouse traversal to the mobile phone 102 and the tablet 103, when the computer 101 detects that the mouse is at an edge of the screen, a bubble box may be displayed at the edge of the screen, to indicate that a traversal-available device exists. The bubble box is merely an example of a name. This is not limited in embodiments of this application. There may be one or more traversal-available devices. This is not limited in embodiments of this application. When there is one traversal-available device on one side, there may be one bubble box. The bubble box may display an icon and a model of the traversal-available device. For example, the traversal-available device is a mobile phone, and an icon of the mobile phone and a model of the mobile phone may be displayed: Mobile phone Magic4. Alternatively, the icon and/or the model of the traversal-available device may be not displayed. This is not limited in embodiments of this application.

When there are a plurality of traversal-available devices, a quantity of bubble frames may be one, or may be the same as a quantity of the traversal-available devices. This is not limited in embodiments of this application. If there are a plurality of traversal-available devices and a plurality of bubble boxes, each of the plurality of bubble boxes may correspond to one traversal-available device, and each bubble box may display an icon and/or a model of the corresponding traversal-available device. The user may click a bubble box to select one from the plurality of traversal-available devices to perform keyboard-mouse traversal, or may click an icon or a model of a traversal-available device to select one from the plurality of traversal-available devices to perform keyboard-mouse traversal. This is not limited in embodiments of this application. If there are a plurality of traversal-available devices and there is one bubble box, the one bubble box may display icons and/or models of the plurality of traversal-available devices. The user may click an icon or a model of a traversal-available device to select one from the plurality of traversal-available devices to perform keyboard-mouse traversal.

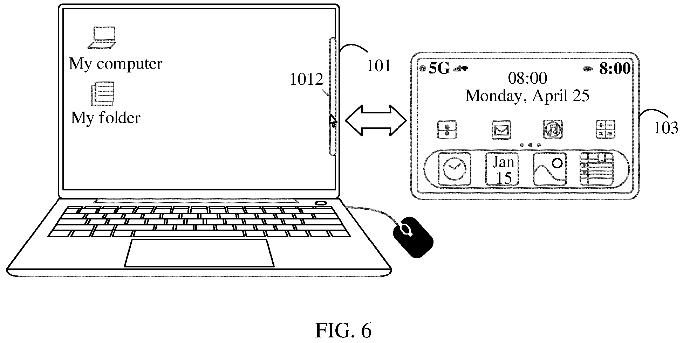

For example, FIG. 6 is a diagram of a type of keyboard-mouse traversal. As shown in FIG. 6, the tablet 103 is on the right side of the computer 101, a quantity of traversal-available devices of the computer 101 is one, a quantity of bubble boxes is one, and the bubble box does not display an icon and/or a model of the traversal-available device. When the computer 101 detects that the mouse is at a right edge of the screen, a bubble box 1012 is displayed at the right edge of the screen to indicate that a traversal-available device exists. The user may slide the mouse rightward to reach a screen of the tablet 103.

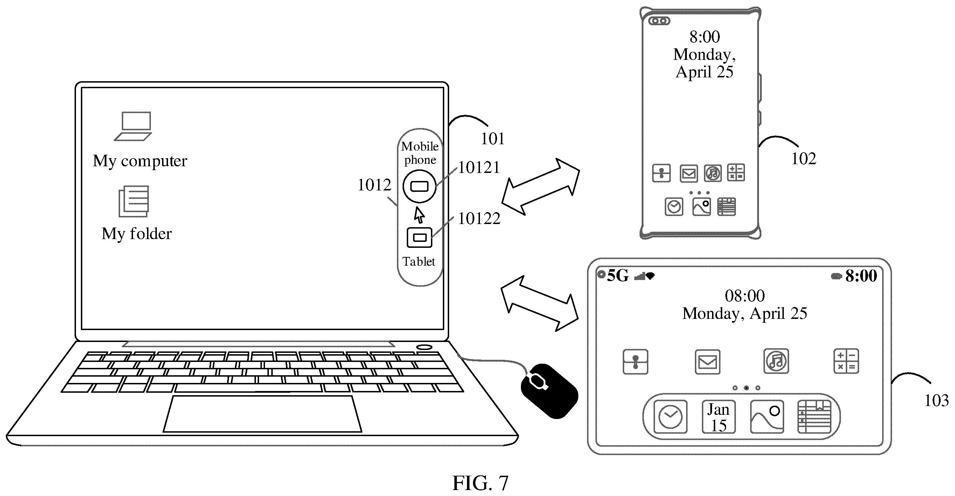

For example, FIG. 7 is a diagram of another type of keyboard-mouse traversal. As shown in FIG. 7, the mobile phone 102 and the tablet 103 are both on the right side of the computer 101, a quantity of traversal-available devices of the computer 101 is two, a quantity of bubble boxes is one, and the bubble box displays icons of the two traversal-available devices. When the computer 101 detects that the mouse is at the right edge of the screen, a bubble box 1012 is displayed at the right edge of the screen to indicate that a traversal-available device exists, and an icon of the mobile phone 102 and an icon of the tablet 103 are displayed in the bubble box. The user may click the icon 10121 of the mobile phone 102 by using the mouse pointer to select the mobile phone 102, and slide the mouse rightward, so that the mouse pointer can reach the screen of the mobile phone 102. Alternatively, the user may click the icon 10122 of the tablet 103 by using the mouse pointer to select the tablet 103, and slide the mouse rightward, so that the mouse can reach the screen of the tablet 103.

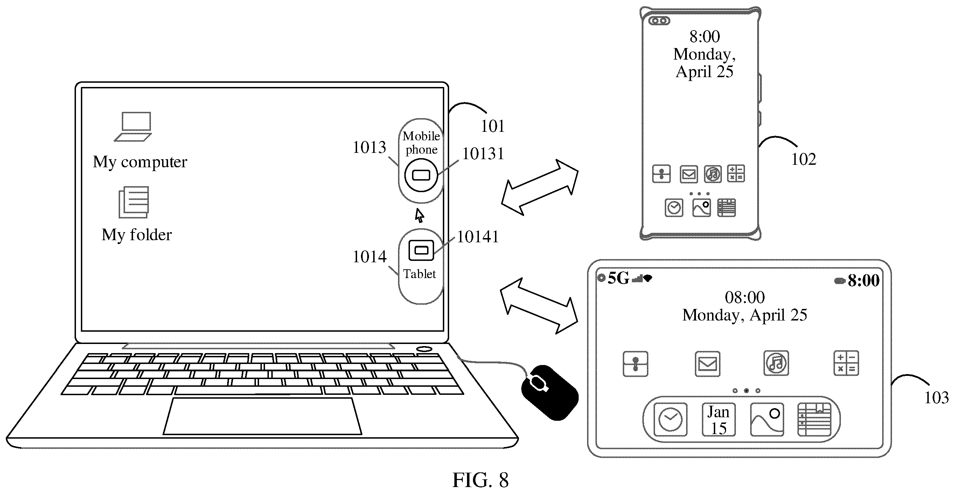

For example, FIG. 8 is a diagram of still another type of keyboard-mouse traversal. As shown in FIG. 8, the mobile phone 102 and the tablet 103 are both on the right side of the computer 101, a quantity of traversal-available devices of the computer 101 is two, a quantity of bubble boxes is two, and each bubble box displays an icon of one traversal-available device. When the computer 101 detects that the mouse is at the right edge of the screen, a bubble box 1013 is displayed at the right edge of the screen to indicate that a traversal-available device, that is, the mobile phone 102, exists, and a bubble box 1014 is displayed at the right edge of the screen to indicate that a traversal-available device, that is, the tablet 103, exists. In addition, an icon 10131 of the mobile phone 102 is displayed in the bubble box 1013, and an icon 10141 of the tablet 103 is displayed in the bubble box 1014. The user may click the icon 10131 of the mobile phone 102 or the bubble box 1013 by using the mouse pointer to select the mobile phone 102, and slide the mouse rightward, so that the mouse pointer can reach the screen of the mobile phone 102. Alternatively, the user may click the icon 10141 of the tablet 103 or the bubble box 1014 by using the mouse pointer to select the tablet 103, and slide the mouse rightward, so that the mouse can reach the screen of the tablet 103.

When the computer 101 implements keyboard-mouse traversal to the mobile phone 102 and the tablet 103, if a location of the mobile phone 102 and/or the tablet 103 relative to the computer 101 is changed, the computer 101 may identify locations of the mobile phone 102 and the tablet 103 relative to the computer 101, and then determine a traversing direction of the mouse based on the locations. In the example shown in FIG. 1, the mobile phone 102 is on the right side of the computer 101, and the traversing direction of the mouse is rightward traversal. The tablet 103 is on the left side of the computer 101, and the traversing direction of the mouse is leftward traversal.

The computer 101 may use two modes to determine the location of the mobile phone 102 and/or the tablet 103 relative to the computer 101, and then determine the traversing direction of the mouse. The two modes are a manual mode and an intelligent mode.

In a possible implementation, the user may set, in the computer manager of the computer 101, the computer 101 to adjust the location of the mobile phone 102 and/or the tablet 103 in the manual mode. In this implementation, the user may manually adjust, in a visual interface, the locations of the mobile phone 102 and the tablet 103. If the user manually adjusts, in the visual interface, the locations of the mobile phone 102 and the tablet 103, the computer 101 updates the traversing direction of the mouse in response to the adjustment operation of the user.

For example, the computer 101 can support the user in adjusting, in a visual interface, the locations of the mobile phone 102 and the tablet 103. If the computer 101 implements keyboard-mouse traversal only to the mobile phone 102 or the tablet 103, the computer 101 can support the user in adjusting, in the visual interface, the mobile phone 102 or the tablet 103 from the right side to the left side of the computer 101, or adjusting the mobile phone 102 or the tablet 103 from the left side to the right side of the computer 101.

The visual interface may be in the computer manager.

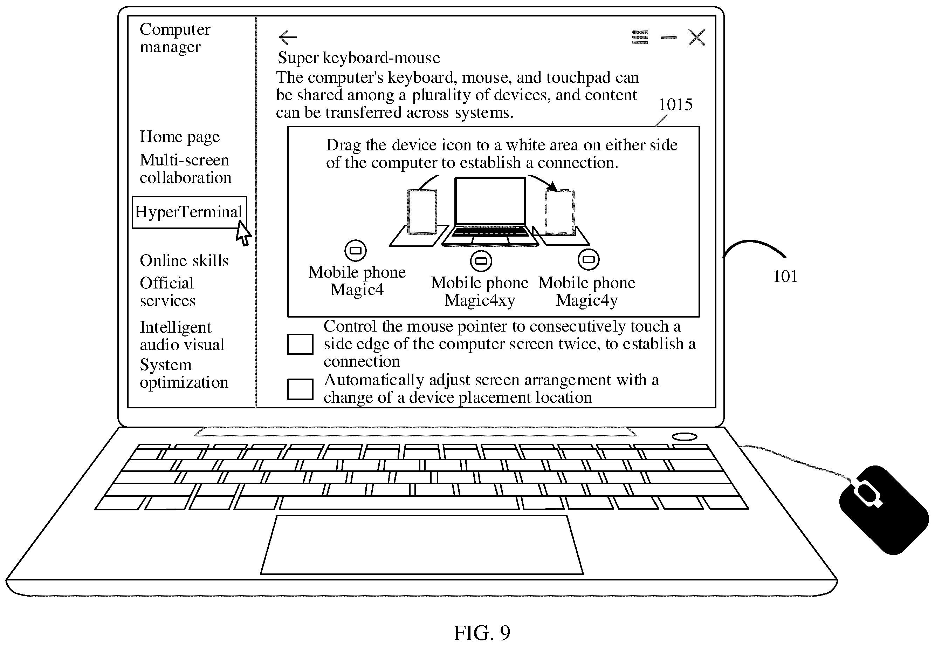

For example, FIG. 9 is a diagram of a visual interface. As shown in FIG. 9, the super keyboard-mouse interface may include a visual area 1015. The visual area 1015 includes the computer, the tablet, and a device that can be sensed and meets the keyboard-mouse traversal condition. The computer can implement keyboard-mouse traversal to the tablet, and the tablet is on the left side of the computer. The user may adjust a location of the tablet in the visual area 1015. For example, the user adjusts the tablet from the left side of the computer to the right side of the computer.

In an example, if the computer 101 implements keyboard-mouse traversal to the mobile phone 102 and the tablet 103, the computer 101 does not support the user in adjusting the mobile phone 102 and the tablet 103 to a same side. If the user adjusts the mobile phone 102 and the tablet 103 to the same side, when the computer 101 detects the operation of the user, implementation of the operation is limited, that is, the mobile phone 102 and the tablet 103 are still displayed at original locations.

For example, in the example shown in FIG. 9, the tablet is on the left side of the computer. If the user manually drags a device meeting the keyboard-mouse traversal condition to the left side of the computer, when the computer 101 detects the operation of the user, the device meeting the keyboard-mouse traversal condition is restored to an original location.

In another possible implementation, when the user enables an option of automatically identifying an orientation, the computer 101 may detect a location change of the mobile phone 102 or the tablet 103 by using an ultrasonic method.

For example, in the interface shown in FIG. 9, if the user checks or selects the option "automatically adjust screen arrangement with a change of a device placement location", when the computer 101 detects the checking or selecting operation of the user, in response to the operation, the computer 101 may automatically identify a location change of the mobile phone 102 or the tablet 103, and adjust screen arrangement of different devices based on a changed location. The mobile phone 102 or the tablet 103 may detect motion of the mobile phone 102 or the tablet 103 by using a motion sensor. After detecting that the motion stops, the mobile phone 102 or the tablet 103 calculates a location of the computer 101 relative to the mobile phone 102 or the tablet 103 by using data obtained by an ultrasonic sensor, and transmits the location to the computer 101. The computer 101 receives the location, and may determine the location of the mobile phone 102 or the tablet 103 relative to the computer 101.

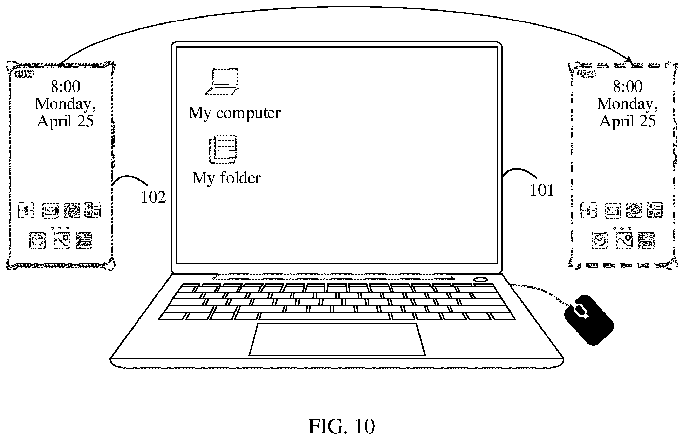

FIG. 10 is a diagram of a location change. As shown in FIG. 10, the mobile phone 102 is on the left side of the computer 101. When the user moves the mobile phone 102 to the right side of the computer 101, the computer 101 may detect, by using the ultrasonic method, that the mobile phone 102 is on the right side of the computer 101.

The computer 101 may update the traversing direction of the mouse based on the location of the mobile phone 102 and/or the tablet 103 according to the following policy:

1) When the computer 101 implements keyboard-mouse traversal to the mobile phone 102 and the tablet 103, as the mobile phone 102 and the tablet 103 are located on the two sides (the left side and the right side) of the computer 101, if the location of the mobile phone 102 is changed to be on the same side as the tablet 103, or the location of the tablet 103 is changed to be on the same side as the mobile phone 102, the computer 101 does not change an original traversing direction of the mouse.

For example, in the example shown in FIG. 1, the mobile phone 102 is on the right side of the computer 101, and the traversing direction of the mouse is rightward traversal. The tablet 103 is on the left side of the computer 101, and the traversing direction of the mouse is leftward traversal. If the computer 101 detects that the mobile phone 102 is moved from the right side of the computer 101 to the left side of the computer 101 when the location of the tablet 103 is not changed, mouse traversing directions of the mobile phone 102 and the tablet 103 both remain unchanged. To be specific, the mouse traversing direction of the mobile phone 102 is still rightward traversal, and the mouse traversing direction of the tablet 103 is still leftward traversal.

2) When the computer 101 implements keyboard-mouse traversal to the mobile phone 102 and the tablet 103, if it is detected that the locations of the mobile phone 102 and the tablet 103 are switched, the computer 101 switches the keyboard-mouse traversing directions of the mobile phone 102 and the tablet 103.

For example, in the example shown in FIG. 1, the mobile phone 102 is on the right side of the computer 101, and the traversing direction of the mouse is rightward traversal. The tablet 103 is on the left side of the computer 101, and the traversing direction of the mouse is leftward traversal. If the computer 101 detects that the mobile phone 102 is on the left side of the computer 101 and the tablet 103 is on the right side of the computer 101, the mouse traversing direction of the mobile phone 102 is updated to leftward traversal, and the mouse traversing direction of the tablet 103 is updated to rightward traversal.

3) When the computer 101 implements keyboard-mouse traversal to the mobile phone 102 or the tablet 103, as the mobile phone 102 or the tablet 103 is on the right side of the computer 101, if it is detected that the mobile phone 102 or the tablet 103 is moved to the left side of the computer 101, the computer 101 updates the mouse traversing direction of the mobile phone 102 or the tablet 103 to leftward traversal. Alternatively, as the mobile phone 102 or the tablet 103 is on the left side of the computer 101, if it is detected that the mobile phone 102 or the tablet 103 is moved to the right side of the computer 101, the computer 101 updates the mouse traversing direction of the mobile phone 102 or the tablet 103 to rightward traversal.

For example, in the example shown in FIG. 9, if the user adjusts the tablet from the left side of the computer to the right side of the computer, the computer 101 may change the traversing direction from the computer to the tablet to rightward traversal in response to the operation of the user.

For example, in the example shown in FIG. 10, if the computer 101 detects that the mobile phone 102 is adjusted from the left side of the computer to the right side of the computer 101, the traversing direction from the computer 101 to the mobile phone 102 may be updated to rightward traversal.

It should be noted that, the location of the mobile phone 102 and/or the tablet 103 relative to the computer 101 may be a left side, a right side, or middle. If the location of the mobile phone 102 and/or the tablet 103 relative to the computer 101 is the left side or the right side, the traversing direction of the mouse may be determined according to the foregoing rule. If the locations of the mobile phone 102 and the tablet 103 relative to the computer 101 are middle, the traversing direction of the mouse is not changed.

The computer 101 may establish a coordinate system by using the center of the screen as an origin, a parallel line of a length side of the screen, and a parallel line of a width side of the screen, to obtain a left side area, a right side area, and a middle area through division. If the computer 101 detects that the mobile phone 102 and/or the tablet 103 is in the left side area, it may be determined that the mobile phone 102 and/or the tablet 103 is on the left side of the computer 101. If the computer 101 detects that the mobile phone 102 and/or the tablet 103 is in the right side area, it may be determined that the mobile phone 102 and/or the tablet 103 is on the right side of the computer 101. If the computer 101 detects that the mobile phone 102 and/or the tablet 103 is in the middle area, it may be determined that the mobile phone 102 and/or the tablet 103 is in the middle of the computer 101.

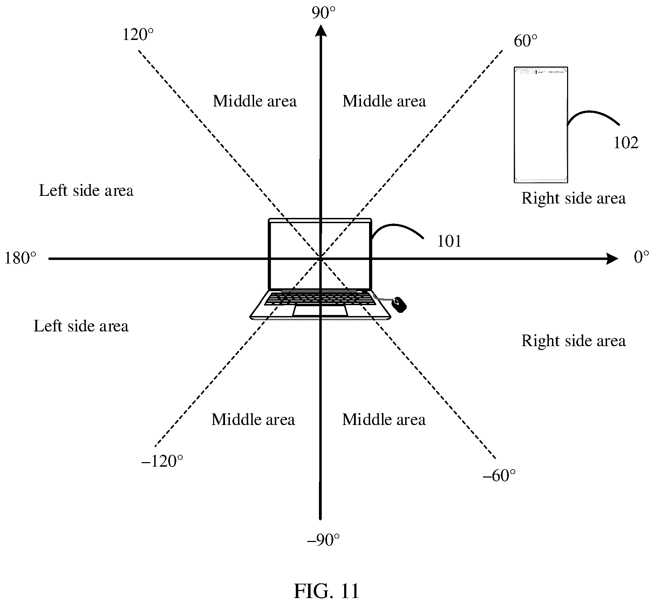

For example, FIG. 11 is a diagram of a location. As shown in FIG. 11, the computer 101 sets an area within (-60°, 60°) in the coordinate system as the right side area, sets areas within (60°, 120°) and (-60°, -120°) as the middle area, and sets an area within (-120°, 120°) as the left side area. If an angle of the mobile phone 102 relative to the computer 101 is within (-60°, 60°), the computer 101 detects that the mobile phone 102 is in the right side area, and may determine that the mobile phone 102 is on the right side of the computer 101.

It should be noted that, angle ranges, shown in FIG. 9, of the left side area and the right side area based on the middle area are merely examples. An angle range of the middle area may be adjusted based on user experience. For example, the angle range of the middle area may be adjusted from (60°, 120°) to (30°, 150°) and adjusted from (-60°, -120°) to (-30°, -150°) based on user experience.

In conclusion, functions that can be supported by the computer 101 provided in embodiments of this application are shown in Table 1.

| Device range | Quantity of devices | Account | Management entry | Connection control | Orientation control |
|---|---|---|---|---|---|
| Computer + mobile phone and/or tablet | 2 or 3 | Automatic connection is supported between devices with a same account | Computer manager, control center, or settings | Manual or automatic | Manual setting or automatic identification |

As shown in Table 1, when the quantity of devices is 2, the computer may connect to one mobile phone or one tablet. When the quantity of devices is 3, the computer may connect to one mobile phone and one tablet, or the computer connects to two mobile phones, or the computer connects to two tablets. It may be understood that, that the computer may connect to a mobile phone and/or a tablet means that the computer may implement keyboard-mouse traversal to the mobile phone and/or the tablet. A condition under which the computer connects to the mobile phone and/or the tablet is automatic connection between devices with a same account. A management entry through which the computer connects to another device (the mobile phone and/or the tablet) is a computer manager, and management entries through which the mobile phone and the tablet connect to another device (the computer) are control centers and settings. A manner for connection control between the computer and another device includes manual and automatic. The computer may perform orientation control through manual setting or automatic identification.

To implement the functions in Table 1, an embodiment of this application provides a keyboard-mouse traversal control method.

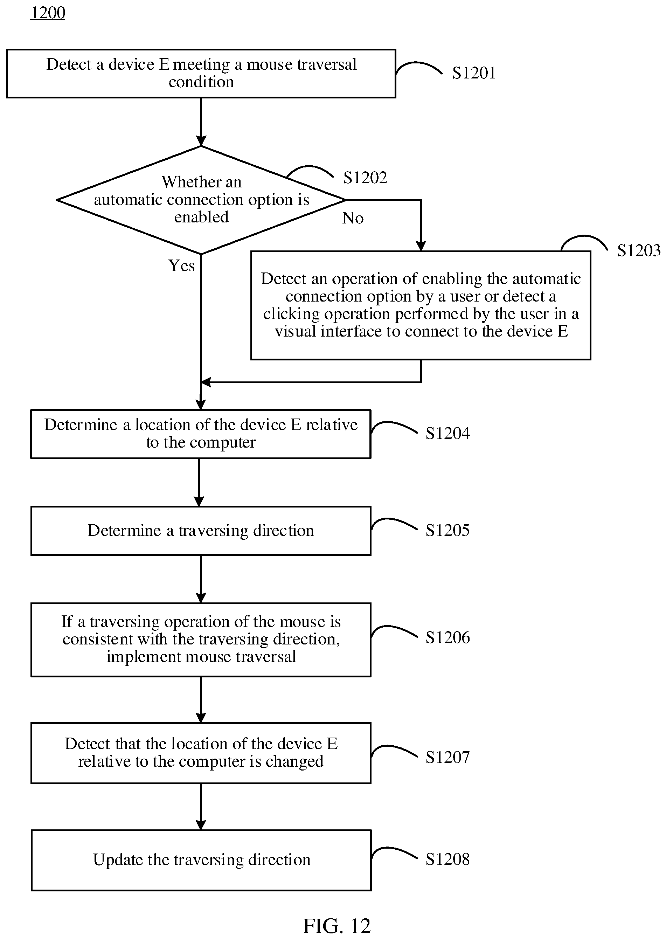

For example, FIG. 12 is a schematic flowchart of a keyboard-mouse traversal control method 1200. The method may be performed by the computer 101. As shown in FIG. 12, the method 1200 includes the following steps.

S1201. Detect a device E meeting the keyboard-mouse traversal condition.

There may be one or more devices E. This is not limited in this embodiment of this application. The device E meeting the keyboard-mouse traversal condition may also be referred to as a traversal-available device. This is not limited in this embodiment of this application.

The device E may be the mobile phone 102 and/or the tablet 103, but this embodiment of this application is not limited thereto.

S1202. Determine whether the automatic connection option is enabled.

The automatic connection option may be shown in FIG. 5. If the automatic connection option is in a checked state, the computer 101 may determine that the automatic connection option is enabled. If the automatic connection option is in an unchecked state, the computer 101 may determine that the automatic connection option is not enabled.

If the automatic connection option is enabled, the computer 101 may automatically connect to the device E, to implement keyboard-mouse traversal. If the automatic connection option is not enabled, the computer 101 cannot implement keyboard-mouse traversal to the device E.

S1203. If the automatic connection option is not enabled, detect an operation of enabling the automatic connection option by the user or detect a clicking operation performed by the user in a visual interface to connect to the device E.

When the user checks the automatic connection option in the super keyboard-mouse interface, the computer 101 may detect the operation of enabling the automatic connection option by the user, and may automatically connect to the device E. Alternatively, when the user performs a clicking operation in the super keyboard-mouse interface (that is, the visual interface) to connect to the device E, the computer 101 may detect the operation of connecting to the device E by the user, and connect to the device E.

S1204. If the automatic connection option is enabled, determine a location of the device E relative to the computer 101.

The location of the device E relative to the computer 101 may be a left side, a right side, or middle. This is not limited in this embodiment of this application.

The computer 101 may determine the location of the device E relative to the computer 101 by using a visual interface or an ultrasonic method.

S1205. Determine a traversing direction from the computer 101 to the device E based on the location of the device E relative to the computer 101.

If the location of the device E relative to the computer 101 is the left side, the computer 101 may determine that the traversing direction from the computer 101 to the device E is leftward traversal, that is, the mouse traverses from the left side of the screen of the computer 101. If the location of the device E relative to the computer 101 is the right side, the computer 101 may determine that the traversing direction from the computer 101 to the device E is rightward traversal, that is, the mouse traverses from the right side of the screen of the computer 101. If the location of the device E relative to the computer 101 is the middle, the computer 101 may determine that the traversing direction from the computer 101 to the device E is a default traversing direction. The default traversing direction may be leftward traversal or rightward traversal. This is not limited in this embodiment of this application.

S1206. If a traversing operation of the mouse is consistent with the traversing direction, implement keyboard-mouse traversal.

If the traversing direction from the computer 101 to the device E is leftward traversal, and the traversing operation of the mouse is moving the mouse leftward from a left edge of the screen, keyboard-mouse traversal is implemented. If the traversing direction from the computer 101 to the device E is leftward traversal, and the traversing operation of the mouse is moving the mouse rightward from a right edge of the screen, keyboard-mouse traversal cannot be implemented.

If the traversing direction from the computer 101 to the device E is rightward traversal, and the traversing operation of the mouse is moving the mouse rightward from the right edge of the screen, keyboard-mouse traversal is implemented. If the traversing direction from the computer 101 to the device E is rightward traversal, and the traversing operation of the mouse is moving the mouse leftward from the left edge of the screen, keyboard-mouse traversal cannot be implemented.

S1207. Detect that the location of the device E relative to the computer 101 is changed.

The computer 101 may determine, by using the visual interface or the ultrasonic method, whether the location of the device E relative to the computer 101 is changed. Specific implementations may be shown in FIG. 9 and FIG. 10, and details are not described herein again.

S1208. Update the traversing direction based on a changed location of the device E.

The computer 101 may change the traversing direction according to the foregoing rule. Details are not described herein again.

According to the keyboard-mouse traversal control method provided in this embodiment of this application, manners of manually and automatically connecting to a traversal-available device are supported, and a traversing direction may be determined based on a location of the traversal-available device, so that different devices can share a mouse and a keyboard, which facilitates seamless access between the different devices.

The method provided in this embodiment of this application is applicable to a personal computer (personal computer), for example, a device such as a desktop computer, a notebook computer (for example, the computer 101), a mini-notebook computer, a tablet computer, or an ultrabook. A software system of the personal computer is a Windows system. A device to which the personal computer implements keyboard-mouse traversal may be a device on which an Android system is deployed, for example, a mobile phone (for example, the mobile phone 102) or a tablet (for example, the mobile phone 103). The device on which the Android system is deployed may be referred to as an Android device for short. For ease of description, the device on which the Android system is deployed is referred to as an Android device in the following embodiments.

To better understand embodiments of this application, the following describes software structures of the PC and the Android device in embodiments of this application.

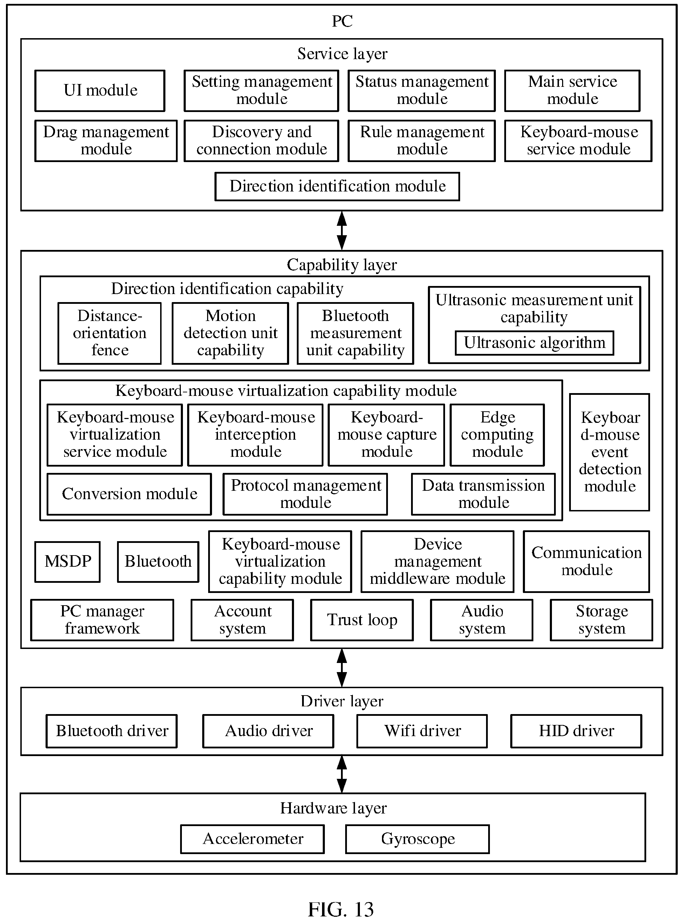

For example, FIG. 13 is a block diagram of a software structure of a PC. As shown in FIG. 13, the PC includes a service layer, a capability layer, a driver layer, and a hardware layer.

The service layer includes a user interface (user interface, UI) module, a setting management module, a status management module, a main service module, a direction identification module, a discovery and connection module, a rule management module, a keyboard-mouse service module, and a drag management module.

The UI module is configured to provide a visual interface for a user. For example, the UI module may display the desktop shown in FIG. 1, the interface of the computer manager shown in FIG. 5, and the interfaces including a bubble box in FIG. 6, FIG. 7, and FIG. 8. The setting management module is configured to manage a setting capability of the computer manager. For example, the setting management module may provide options in the computer manager shown in FIG. 5 for the user. The status management module is configured to manage information about a traversal-available device and a keyboard-mouse traversing direction. For example, the status management module may determine a quantity, locations, and traversing directions of traversal-available devices. The main service module may be configured to provide an autonomous startup service for a keyboard-mouse service. The direction identification module is configured to invoke a direction identification capability to identify a direction of an Android device relative to the PC, monitor a direction change, and save direction information. The discovery and connection module is configured to discover a connectable Android device, and connect to the Android device. The rule management module is configured to manage a rule for connecting to an Android device and a rule for changing a traversing direction. The keyboard-mouse service module is configured to invoke, trigger, or disable a keyboard virtualization capability. The drag management module is configured to monitor a dragging operation of the user.

The capability layer includes the direction identification capability, a keyboard virtualization capability module, a keyboard-mouse event detection module, a device management middleware module, a communication module (magic link), a PC manager framework, an account system, a trust loop, a multimodal sensor data platform (multimodal sensor data platform, MSDP), Bluetooth, an audio system, and a storage system. The keyboard virtualization capability module is configured to obtain a keyboard-mouse event and transmit the keyboard-mouse event, and adapt a location and a moving velocity of the mouse for devices with different resolutions. The keyboard-mouse event detection module is configured to obtain the keyboard-mouse event. The device management middleware module is configured to provide a data sharing capability between devices, for example, a service switch capability between devices. The communication module is configured to support establishment of a connection channel between devices and transmission of a data capability. The PC manager framework is configured to manage an option of a PC manager. The account system is configured to obtain a login account of the PC. The trust loop indicates that different devices are logged in to by using a same account. The MSDP is configured to detect that a device is changed from a moving state to a static state. The audio system is configured to manage playing of high-performance audio. The storage system is configured to store data.

The direction identification capability includes a distance-orientation fence, a motion detection unit capability, a Bluetooth measurement unit capability, and an ultrasonic measurement unit capability. The ultrasonic measurement unit capability includes an ultrasonic algorithm. The direction identification capability may measure direction information of an Android device relative to the PC by using a capability.

The keyboard-mouse virtualization capability module includes a keyboard-mouse virtualization service module, a keyboard-mouse interception module, a keyboard-mouse capture module, an edge computing module, a conversion module, a protocol management module, and a data transmission module. The keyboard-mouse virtualization service module is a keyboard-mouse virtualization service entry, and may provide a service of enabling or disabling a development interface of the keyboard-mouse service module, and schedule a keyboard-mouse event module relationship and status management. The keyboard-mouse interception module is configured to prevent, when keyboard-mouse traversal is completed, the PC side from still responding to a keyboard-mouse event. The keyboard-mouse capture module is configured to obtain a keyboard-mouse event. The edge computing module is configured to determine, based on a location of the mouse, whether the mouse is at an edge. The conversion module is configured to perform coordinate matching between the PC and an Android device. For example, the conversion module converts a mouse traversal location of the mouse on a screen of the PC into a location of the mouse on a screen of the Android device. The conversion module converts a moving velocity of the mouse on the screen of the PC into a moving velocity of the mouse on the screen of the Android device. The protocol management module is configured to package an intercepted keyboard-mouse event by using a preset protocol and send a packaged keyboard-mouse event to the data transmission module. The data transmission module is configured to transmit the packaged keyboard-mouse event to the Android device.

The driver layer includes a Bluetooth driver, an audio driver, a wifi driver, and a human interface device (human interface device, HID) driver.

The hardware layer includes an accelerometer and a gyroscope. The PC may determine a motion change of the device by using acceleration data obtained by the accelerometer and angular acceleration data obtained by the gyroscope.

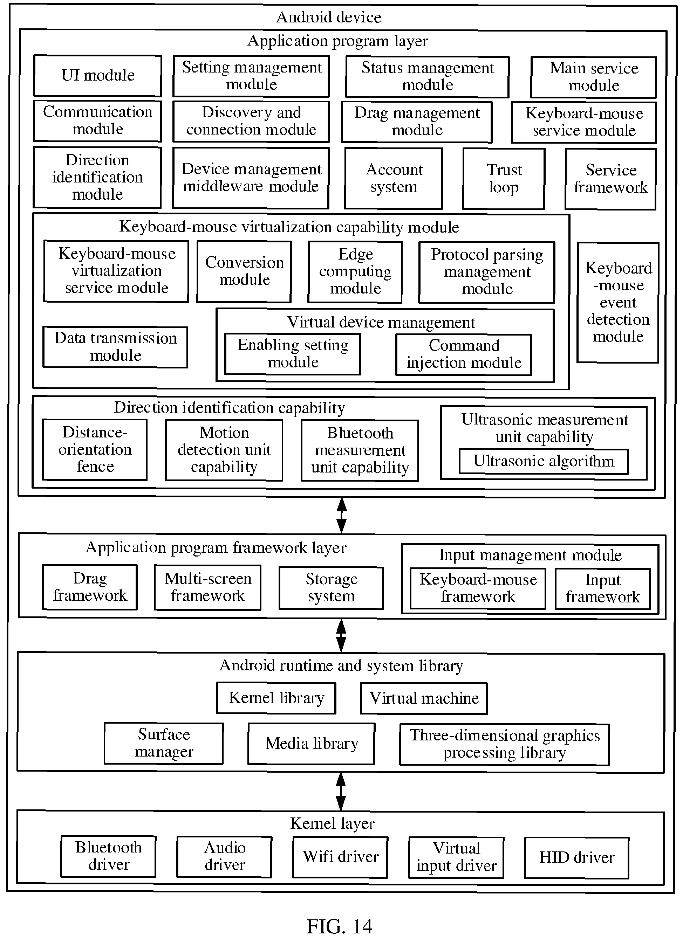

FIG. 14 is a block diagram of a software structure of an Android device. As shown in FIG. 14, the Android device includes an application program layer, an application program framework layer, an Android runtime and system library, and a kernel layer.

The application program layer includes: a UI module, a setting management module, a status management module, a main service module, a direction identification module, a discovery and connection module, a keyboard-mouse service module, a direction identification capability, a keyboard virtualization capability module, a keyboard-mouse event detection module, a device management middleware module, a communication module (magic link), an account system, a trust loop, a service framework, and a drag management module.

The UI module is configured to provide a visual interface for a user. For example, the UI module is configured to display a home screen and an interface of an application program. The setting management module may be configured to set a keyboard-mouse function. The status management module is configured to manage a state change in a traversal process, for example, traversing or not traversing. The main service module may be configured to provide an autonomous startup service for a keyboard-mouse service. The direction identification module is configured to provide a direction identification capability. The discovery and connection module is configured to perform connection capability scheduling and data communication in the keyboard-mouse service. The rule management module is configured to manage a rule for connecting to an Android device and a rule for changing a traversing direction. The keyboard-mouse service module is configured to invoke, trigger, or disable a keyboard virtualization capability. The drag management module is configured to invoke a drag framework to monitor a dragging operation of the user. The service framework is configured to manage keyboard-mouse service capability switch registration. The keyboard-mouse virtualization capability module is configured to provide a keyboard-mouse virtualization capability. The keyboard-mouse event detection module is configured to obtain a keyboard-mouse event. The device management middleware is configured to provide a data sharing capability between devices. The communication module is configured to provide a connection channel between devices and transmission of a data capability.

It should be noted that, the communication module is a module for communication between different devices. When data obtained by another module is transmitted to another device, the data needs to be first transmitted to the communication module, and then is transmitted by the communication module to the another device. In subsequent embodiments, to simplify steps, when a module other than the communication module performs cross-device communication between different devices, it may be understood as that the module first transmits data to the communication module, then the communication module transmits the data to a communication module of another device, and then the communication module of the another device transmits the data to a module needing the data.

The keyboard-mouse virtualization capability module includes a keyboard-mouse virtualization service module, an edge computing module, a conversion module, a protocol parsing management module, a data transmission module, and a virtual device management module. Functions of the keyboard-mouse virtualization service module, the edge computing module, and the conversion module are similar to those in FIG. 13, and details are not described herein again. The protocol parsing management module is configured to parse a packaged keyboard-mouse event to obtain a keyboard-mouse event. The data transmission module is configured to receive the packaged keyboard-mouse event and transmit the packaged keyboard-mouse event to the protocol parsing management module. The virtual device management module is a virtual input (Uinput) operation interface module, including creating/disabling a keyboard-mouse Uinput device, providing a keyboard-mouse event control interface, and performing keyboard-mouse event input control.

It should be noted that, when transmitting data, the keyboard-mouse virtualization capability module needs to first transmit the data to the keyboard-mouse service module, and then the data is transmitted to another module. Subsequently, to simplify steps, when the keyboard-mouse virtualization capability module directly transmits data to another module, it may be understood as that the keyboard-mouse virtualization capability module first transmits the data to the keyboard-mouse service module, and then the keyboard-mouse service module transmits the data to the another module.

The direction identification capability includes a distance-orientation fence, a motion detection unit capability, a Bluetooth measurement unit capability, and an ultrasonic measurement unit capability. The ultrasonic measurement unit capability includes an ultrasonic algorithm. The direction identification capability may measure direction information of a PC relative to the Android device by using a capability.

A relationship of the direction identification capability is similar to that of the direction identification module, and details are not described herein again.

The direction identification capability may cooperate with the direction identification capability in FIG. 13, to determine a distance and a direction of the Android device relative to the PC.

For example, when detecting that the Android device is changed from moving to static, the MSDP of the Android device may perform reporting to the distance-direction fence of the Android device by using the motion detection unit capability of the Android device. The distance-direction fence of the Android device may start one ultrasonic measurement based on the message, that is, start local recording by using the ultrasonic measurement unit capability of the Android device. Audio may be high-performance audio. The ultrasonic measurement unit capability of the Android device may indicate the communication module to notify the PC of a direction to start the measurement. The communication module of the PC receives the measurement message and starts a measurement procedure. The communication module of the PC may perform recording by using the ultrasonic measurement unit capability of the PC, and return an acknowledgment message to the communication module of the Android device. The PC plays the audio, and based on the acknowledgment message, the Android device also starts to play the audio. The communication module of the PC sends a measurement result to the communication module of the Android device. The Android device receives the measurement result of the PC, and obtains a final distance and direction in combination with a local measurement result. The ultrasonic measurement unit capabilities of the Android device and the PC may report measurement results to the distance-orientation fences. The distance-orientation fence of the Android device and/or the PC issues an alert when detecting a device within a preset distance.

The application program framework layer includes a drag framework, a multi-screen framework, an input management module, and a storage system. The drag framework is configured to provide a drag capability during super keyboard-mouse traversal. The input management module is configured to provide keyboard-mouse event reporting. The input management module may include a keyboard-mouse framework and an input framework. The keyboard-mouse framework is configured to report a keyboard-mouse event, and the input framework is configured to report an input event. The storage system is configured to store data. The multi-screen framework is configured to provide a keyboard-mouse multi-screen operation.

The Android runtime and system library includes a core library, a virtual machine, a surface manager, a media library, and a three-dimensional graphics processing library, and is responsible for scheduling and management of the Android system when the Android system runs. The core library includes two parts: one part is a function that a Java language needs to invoke, and the other part is a kernel library of Android. The application program layer and the application program framework layer run in the virtual machine. The virtual machine executes Java files of the application program layer and the application program framework layer as binary files. The virtual machine is configured to perform functions such as object lifecycle management, stack management, thread management, security and exception management, and garbage collection. The system library may include a plurality of functional modules, for example, the surface manager, the media library, and the three-dimensional graphic processing library.

The surface manager is configured to manage a display subsystem, and provide fusion of a two-dimensional image layer and a three-dimensional image layer for a plurality of application programs. The media library supports playback and recording of audio and videos in a plurality of common formats, and still image files and the like. The media library can support a plurality of audio/video coding formats, such as a JPG and a PNG. The three-dimensional graphics processing library is configured to implement three-dimensional graphics drawing, image rendering, composition, image layer processing, and the like.

The kernel layer is a layer between hardware and software. The kernel layer is configured to drive hardware, so that the hardware operates. The kernel layer includes a Bluetooth driver, an audio driver, a wifi driver, a virtual input driver (Uinput driver), and an HID driver. The virtual input driver is configured to inject an input event.

To better understand embodiments of this application, the method provided in embodiments of this application is specifically described with reference to the modules in FIG. 13 and FIG. 14.

To implement a keyboard-mouse traversal function, after powered on, the PC may store, by using a table tA, device information of an online Android device, and store, by using a table tB, device information of an online Android device enabling a keyboard-mouse function, and may further store, by using a table tC, information about a device that has been connected to the PC, to better support the keyboard-mouse traversal function.

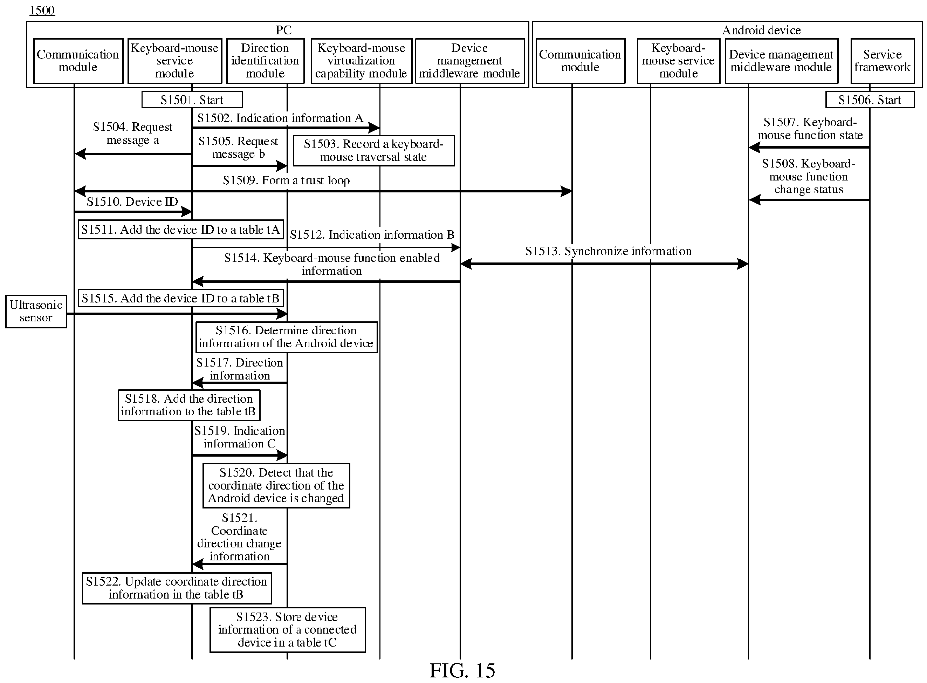

For example, FIG. 15 is a schematic flowchart of a startup method 1500 in a keyboard-mouse scenario. The method 1500 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 1500 may include the following steps.

S1501. The keyboard-mouse service module of the PC starts.

The keyboard-mouse service module of the PC may self-start when the PC is powered on.

S1502. The keyboard-mouse service module of the PC sends indication information A to the keyboard-mouse virtualization capability module of the PC. The indication information A indicates the keyboard-mouse virtualization capability module of the PC to enable a service. Correspondingly, the keyboard-mouse virtualization capability module of the PC receives the indication information A.

That the indication information A indicates the keyboard-mouse virtualization capability module of the PC to enable a service means making the keyboard-mouse virtualization capability module of the PC start to be enabled or function.

When the keyboard-mouse service module of the PC enables the keyboard-mouse virtualization capability module of the PC by using the indication information A, it may also be understood as that the keyboard-mouse service module of the PC invokes the keyboard-mouse virtualization capability module of the PC to obtain information returned by the keyboard-mouse virtualization capability module of the PC.

S1503. The keyboard-mouse virtualization capability module of the PC records a keyboard-mouse traversal state based on the indication information A, and monitors whether the keyboard-mouse is traversing.

The keyboard-mouse traversal state may be yes or no. The keyboard-mouse traversal state being yes may represent that the mouse pointer is traversing from the PC to an Android device. The keyboard-mouse traversal state being no may represent that the mouse pointer is not traversing from the PC to an Android device.

A keyboard-mouse traversal determining condition may be that the mouse pointer consecutively touches a side edge of the screen of the PC twice. The keyboard-mouse virtualization capability module of the PC may monitor, based on this determining condition, whether the keyboard-mouse is traversing. If the mouse pointer consecutively touches a side edge of the screen of the PC twice, the keyboard-mouse virtualization capability module of the PC may determine that the keyboard-mouse is traversing.

The keyboard-mouse virtualization capability module of the PC may further transmit keyboard-mouse traversal information to the keyboard-mouse service module.

S1504. The keyboard-mouse service module of the PC sends a request message a to the communication module of the PC. The request message a is used to request the communication module of the PC to notify a detected online Android device. Correspondingly, the communication module of the PC may receive the request message a.

The Android device being online may be understood as that the Android device and the PC are logged in to by using a same account.

The communication module of the PC may detect whether an online Android device exists, and send, if the online Android device exists, a device identifier (identity, ID) of the online Android device to the keyboard-mouse service module of the PC based on the request message a.

When the keyboard-mouse service module of the PC sends the request message a to the communication module of the PC, it may also be understood as that the keyboard-mouse service module of the PC registers a device online/offline fence with the communication module of the PC, and when the communication module of the PC detects that an online device exists, a device ID is returned to the keyboard-mouse service module of the PC.

It should be noted that, S1502 and S1504 are steps performed after the keyboard-mouse service module of the PC is started, and a sequence of performing the two steps is not limited in this embodiment of this application.

S1505. The keyboard-mouse service module of the PC sends a request message b to the direction identification module of the PC. The request message b is used to request the direction identification module of the PC to notify direction information of the detected Android device relative to the PC. Correspondingly, the direction identification module of the PC receives the request message b. The direction information of the Android device relative to the PC may include at least one of a coordinate angle, a coordinate direction, a distance, or a traversing direction of the Android device relative to the PC.

When the keyboard-mouse service module of the PC sends the request message b to the direction identification module of the PC, it may also be understood as that the keyboard-mouse service module of the PC indicates the direction identification module of the PC to register a direction fence. When the direction identification module of the PC detects a direction of the Android device relative to the PC, direction information may be sent to the keyboard-mouse service module of the PC.

Optionally, the direction identification module of the PC may detect an Android device in a trust loop, and may send a device ID of the Android device to the keyboard-mouse service module of the PC. If the device ID received by the keyboard-mouse service module of the PC from the direction identification module of the PC is different from the device ID from the communication module of the PC, the device ID returned by the communication module of the PC is used.

In this implementation, both the direction identification module of the PC and the communication module of the PC may return an ID of a device in the trust loop, and if returned device IDs are the same, the device in the trust loop can be determined more accurately, which helps the PC to connect to an Android device more accurately.

Optionally, the direction identification module of the PC may detect an Android device within a preset distance. To be specific, if an Android device exists within a near field range of the PC, the direction identification module of the PC may send an ID of the Android device to the keyboard-mouse service module of the PC. The preset distance may be 50 centimeters, but this embodiment of this application is not limited thereto.

In this implementation, the PC may connect to an Android device within the near field range and in the trust loop, and keyboard-mouse traversal to a distant device is excluded, which better meets user experience.

Optionally, the direction identification module of the PC may learn, by using the communication module, whether a state of a screen of an Android device is a screen-on state, and if the state of the screen is the screen-on state, an ID of the Android device is sent to the keyboard-mouse service module of the PC. In other words, when the screen is in the screen-on state, the PC may obtain the device ID of the Android device. Otherwise, a subsequent step is not performed.

In this implementation, when the screen is in the screen-on state, it may indicate that the PC is being used, and the device ID of the Android device is obtained to facilitate subsequent device connection, which better meets user habit. When the screen is in a screen-off state, the device ID of the Android device is not obtained, which helps reduce power consumption of the PC.

Optionally, the direction identification module of the PC may obtain a device ID of an Android device in the trust loop, within the preset distance, and whose screen is in the screen-on state.

S1506. The service framework of the Android device starts.

The service framework of the Android device may self-start during power-on.

The service framework of the Android device may be configured to monitor a switch state of a keyboard-mouse function of the Android device and switch change information of the keyboard-mouse function. The keyboard-mouse function is the keyboard-mouse traversal function, and the switch state of the keyboard-mouse function indicates that the keyboard-mouse function is in an enabled state or a disabled state.

For example, when the keyboard-mouse function is disabled, the service framework of the Android device may determine that a keyboard-mouse function state is the disabled state. If it is detected that the user enables the keyboard-mouse function, the service framework of the Android device may determine that the keyboard-mouse function state is the enabled state.

S1507. The service framework of the Android device sends the keyboard-mouse function state to the device management middleware module of the Android device. Correspondingly, the device management middleware module of the Android device receives the keyboard-mouse function state.

For example, if the service framework of the Android device determines that the keyboard-mouse function state is the disabled state, information indicating that the keyboard-mouse function state is the disabled state is sent to the device management middleware module of the Android device. If the service framework of the Android device determines that the keyboard-mouse function state is the enabled state, information indicating that the keyboard-mouse function state is the enabled state is sent to the device management middleware module of the Android device. The keyboard-mouse function is enabled or disabled by the user. If the user enables the keyboard-mouse function, in response to the operation of enabling the keyboard-mouse function by the user, the service framework of the Android device may determine that the keyboard-mouse function state is the enabled state. If the user disables the keyboard-mouse function, in response to the operation of disabling the keyboard-mouse function by the user, the service framework of the Android device may determine that the keyboard-mouse function state is the disabled state.

S1508. If the service framework of the Android device detects that the keyboard-mouse function state is changed, the service framework of the Android device sends a keyboard-mouse function change status to the device management middleware module of the Android device. Correspondingly, the device management middleware module of the Android device receives the keyboard-mouse function change status, and updates the keyboard-mouse function state.

For example, if the service framework of the Android device detects that the keyboard-mouse function state is changed from the disabled state to the enabled state, the service framework of the Android device sends, to the device management middleware module of the Android device, information indicating that the keyboard-mouse function state is the enabled state, and the device management middleware module of the Android device may update the keyboard-mouse function state to the enabled state. If the service framework of the Android device detects that the keyboard-mouse function state is changed from the enabled state to the disabled state, the service framework of the Android device sends, to the device management middleware module of the Android device, information indicating that the keyboard-mouse function state is the disabled state, and the device management middleware module of the Android device may update the keyboard-mouse function state to the disabled state.

It should be noted that, a sequence between S1506 to S1508 and S1501 to S1505 is not limited.

S1509. The communication module of the PC and the communication module of the Android device discover each other, to form a trust loop.

The PC and the Android device are logged in to by using a same account. In this case, the communication module of the PC and the communication module of the Android device may sense each other and discover each other, to form a trust loop, and the communication module of the PC may obtain a device ID of the Android device.

S1510. As the trust loop is formed, the communication module of the PC detects that the Android device is online, and may send the device ID of the Android device to the keyboard-mouse service module of the PC. Correspondingly, the keyboard-mouse service module of the PC receives the device ID.

The device ID may be at least one of a digit, a letter, or a symbol. This is not limited in this embodiment of this application.

There may be one or more online Android devices. This is not limited in this embodiment of this application. If a plurality of online Android devices exist, the communication module of the PC may send device IDs of the plurality of Android devices to the keyboard-mouse service module of the PC.

S1511. The keyboard-mouse service module of the PC adds the device ID to a table tA based on the device ID.

The table tA is used to store device information of the online Android device. The device information may be not limited to the device ID.

The keyboard-mouse service module of the PC may establish the table tA, and add the device ID to the table tA. In a subsequent process, if a new online device exists, the table tA may be updated, that is, a device ID of the online device is added to the table tA.

Optionally, information in the table tA may be added by the status management module. The keyboard-mouse service module of the PC may send device ID addition indication information to the status management module based on the device ID. The status management module adds the device ID to the table tA based on the indication information.

In an embodiment, the table tA may include the device identifier and a connection state between the Android device and the PC. The connection state between the Android device and the PC may be updated in real time. When the PC is not connected to or is disconnected from the Android device, the connection state in the table tA may be unconnected. When the PC is connected to the Android device or the two are reconnected after disconnected, the connection state in the table tA may be connected.

For example, the table tA may be shown in Table 2.

**Table 2**

| Device ID | Connection state |
| --- | --- |
| 11_A | Unconnected |

As shown in Table 2, a device ID of an online Android device is 11_A, and a connection state between the PC and the Android device is unconnected.

S1512. The keyboard-mouse service module of the PC sends indication information B to the device management middleware module of the PC. The indication information B indicates the device management middleware module to determine, based on the device ID, whether the Android device enables the keyboard-mouse function. Correspondingly, the device management middleware module of the PC receives the indication information B. The indication information B may include the device ID.

S1513. The device management middleware module of the PC synchronizes information with the device management middleware module of the Android device based on the indication information B.

The information synchronized between the device management middleware module of the PC and the device management middleware module of the Android device includes a keyboard-mouse function state.

The device management middleware module of the Android device may send an updated keyboard-mouse function state to the device management middleware module of the PC. Correspondingly, the device management middleware module of the PC may also send an updated keyboard-mouse function state to the device management middleware module of the Android device. A manner in which the device management middleware module of the PC obtains the keyboard-mouse function state is the same as the manner in which the device management middleware module of the Android device obtains the keyboard-mouse function state, and details are not described herein again.

If there are a plurality of device IDs in the indication information B, the device management middleware module of the PC may synchronize information with device management middleware modules of a plurality of Android devices based on the indication information B.

S1514. The device management middleware module of the PC may determine, based on the synchronized information, whether the Android device enables the keyboard-mouse function. If the Android device enables the keyboard-mouse function, the device management middleware module of the PC may send keyboard-mouse function enabled information to the keyboard-mouse service module of the PC. Correspondingly, the keyboard-mouse service module of the PC receives the information, and may determine that the Android device enables the keyboard-mouse function.

If the device management middleware module of the PC determines, based on the synchronized information, that the Android device does not enable the keyboard-mouse function, the device management middleware module of the PC may not send keyboard-mouse information to the keyboard-mouse service module of the PC, and a subsequent step is not performed.

S1515. The keyboard-mouse service module of the PC adds the device ID to a table tB based on the keyboard-mouse function enabled information.

The table tB may include device information of an Android device in the trust loop and whose keyboard-mouse function is enabled. The device information in the table tB is not limited to the device ID.

Optionally, information in the table tB may be added by the status management module. The keyboard-mouse service module of the PC may send device ID addition indication information to the status management module based on the keyboard-mouse function enabled information. The status management module adds the device ID to the table tB based on the indication information.

S1516. The direction identification module of the PC obtains angle information by using an ultrasonic sensor, and determines direction information of the Android device relative to the PC based on the angle information.

The ultrasonic sensor may be configured to detect angle information of the Android device relative to the ultrasonic sensor. The direction identification module of the PC may determine the direction information of the Android device relative to the PC based on the angle information. The direction identification module of the PC may determine a coordinate direction and distance of the Android device relative to the PC based on the coordinate angle. For details, refer to FIG. 9. Details are not described herein again. The direction identification module of the PC may further determine a recommended traversing direction of the Android device based on the coordinate direction.

The recommended traversing direction may be determined based on the coordinate direction. For example, if the coordinate direction is left, the recommended traversing direction is leftward traversal. If the coordinate direction is right, the recommended traversing direction is rightward traversal. If the coordinate direction is middle, the recommended traversing direction is a default traversing direction. The default traversing direction may be leftward traversal or rightward traversal.

Optionally, when the coordinate direction is middle, the recommended traversing direction may alternatively be related to a historical traversing direction. If the coordinate direction of the Android device relative to the PC is middle, the recommended traversing direction may be a previous traversing direction. For example, if the previous traversing direction is leftward traversal, the recommended traversing direction is leftward traversal. If the previous traversing direction is rightward traversal, the recommended traversing direction is rightward traversal.

S1517. The direction identification module of the PC sends the direction information to the keyboard-mouse service module of the PC. Correspondingly, the keyboard-mouse service module of the PC receives the direction information.

S 1518. The keyboard-mouse service module of the PC may add the direction information to the table tB.

The keyboard-mouse service module of the PC may indicate the status management module to add the direction information to the table tB. The table tB may include a device ID and direction information, relative to the PC, of an Android device in the trust loop and whose keyboard-mouse function is enabled. The table tB may further include a connection state.

For example, the table tB may include information such as a device ID, direction information, and a connection state, relative to the PC, of an Android device in the trust loop and whose keyboard-mouse function is enabled. The direction information includes a coordinate direction, a coordinate angle, a distance, and a traversing direction. The table tB may be shown in Table 3.

**Table 3**

| Device ID | Coordinate direction | Coordinate angle | Distance | Traversing direction | Connection state |
|---|---|---|---|---|---|
| 11_A | Left | 60° | 40 centimeters | Leftward traversal | Unconnected |

As shown in Table 3, a device ID of an Android device in the trust loop and whose keyboard-mouse function is enabled is 11_A, a coordinate direction relative to the PC is left and a coordinate angle is 60°, a distance relative to the PC is 40 centimeters, a traversing direction is leftward traversal, and a connection state relative to the PC is unconnected.

Optionally, the table tB may further include a screen-on/off state of a screen of the Android device, so that keyboard-mouse traversal is implemented when the screen is in the screen-on state, and keyboard-mouse traversal is not implemented when the screen is in the screen-off state, thereby reducing power consumption.

S1519. The keyboard-mouse service module of the PC may send indication information C to the direction identification module of the PC. The indication information C indicates the direction identification module of the PC to monitor a coordinate direction change of the Android device. Correspondingly, the direction identification module of the PC receives the indication information tB.

S1520. The direction identification module of the PC detects, based on the indication information C, that the coordinate direction of the Android device is changed.

The direction identification module of the PC may monitor the coordinate direction of the Android device in real time based on the indication information C.

S1521. The direction identification module of the PC may send coordinate direction change information to the keyboard-mouse service module of the PC. Correspondingly, the keyboard-mouse service module of the PC receives the coordinate direction change information.

The coordinate direction change information is changed coordinate direction information. For example, if the coordinate direction is changed to right, the coordinate direction change information is right.

If the traversing direction or the distance of the Android device is changed, the direction identification module of the PC may also send traversing direction change information or a changed distance to the keyboard-mouse service module of the PC.

S1522. The keyboard-mouse service module of the PC may update coordinate direction information in the table tB based on the coordinate direction change information.

The keyboard-mouse service module of the PC may further update the traversing direction or the distance in the table tB when the traversing direction or the distance is changed.

Optionally, the keyboard-mouse service module of the PC may further update the connection state and the screen-on/off state in the table tB.

S1523. The direction identification module of the PC may further store device information of a connected device in a table tC.

The direction identification module of the PC detects that an Android device has been connected to the PC, and may store device information of the connected device in the table tC.

The table tC is used to store information about a device that has been connected to the PC. The table tC may include information such as a device ID and a traversing direction.

Optionally, the table tC may further include at least one piece of information of a coordinate direction, a coordinate angle, whether traversal is the first traversal, or a current traversal state of the connected device. The information about whether traversal is the first traversal and the information about the current traversal state in the table tC are determined by the keyboard-mouse virtualization capability module of the PC. The keyboard-mouse virtualization capability module of the PC detects mouse traversal and may determine a device ID of a traversed-to device, record a quantity of times of traversal to the device, and update a traversal state. The keyboard-mouse virtualization capability module of the PC may send the device ID, the quantity of times of traversal to the device, and an updated traversal state to the direction identification module of the PC, and the direction identification module of the PC stores the information in the table tC.

For example, the table tC may include a device ID, a traversing direction, a coordinate direction of a connected device, a coordinate angle, whether traversal is the first traversal, and a current traversal state. The table tC may be shown in Table 4.

**Table 4**

| Device ID | Coordinate direction | Traversing direction | Coordinate angle | First traversal | Current traversal state |
|---|---|---|---|---|---|
| 11_A | Left | Leftward traversal | 60° | Yes | Traversing |

As shown in Table 4, a device ID of an Android device that has been connected to the PC is 11_A, a coordinate direction relative to the PC is left, a traversing direction from the PC to the Android device is leftward traversal, a coordinate angle of the Android device relative to the PC is 60°, keyboard-mouse traversal from the PC to the Android device is the first traversal, and a current traversal state is traversing.

According to the startup method provided in this embodiment of this application, the PC may use the table tA to store device information of an online device, use the table tB to store device information of a connectable (or traversal-available) device, and use the table tC to store device information of a connected device, to facilitate subsequent information query in the tables, and the Android device may monitor the enabled and disabled states of the keyboard-mouse function, to facilitate subsequent keyboard-mouse traversal.

After the method 1500, the PC may connect to an android device to implement keyboard-mouse traversal. When the first option "control the mouse pointer to consecutively touch a side edge of the screen twice, to establish a connection" in FIG. 5 is selected, the PC may automatically connect to an Android device. When the first option in FIG. 5 is not selected, the PC may manually connect to an Android device.

In an example, the first option "control the mouse pointer to consecutively touch a side edge of the screen twice, to establish a connection" in FIG. 5 is selected, and the PC may automatically connect to an Android device.

A condition for triggering the PC to automatically connect to an Android device is that the user controls the mouse pointer to consecutively touch a side edge of the screen twice. After the method 1500, when the PC detects an operation of the user controlling the mouse pointer to consecutively touch a side edge of the screen twice, a method for automatically connecting to an Android device may be performed.

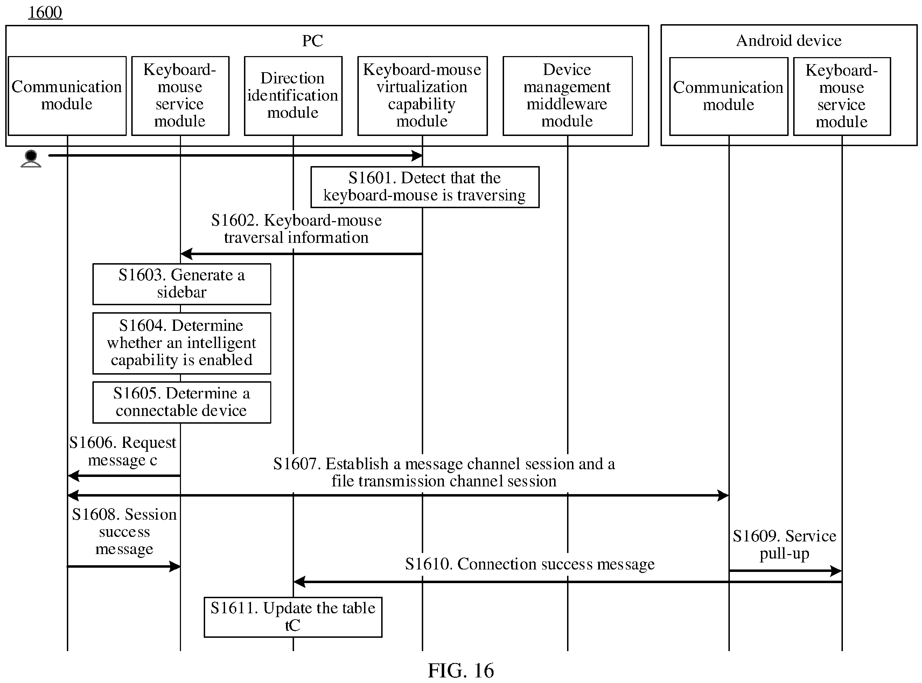

For example, FIG. 16 is a schematic flowchart of an automatic connection method 1600. The method 1600 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 1600 may include the following steps.

S1601. After S1523, the keyboard-mouse virtualization capability module of the PC detects that the automatic connection option is enabled. When the automatic connection option is enabled, the keyboard-mouse virtualization capability module of the PC detects an operation of the user controlling the mouse pointer to consecutively touch a side edge of the screen twice, that is, detects that the keyboard-mouse is traversing.

The automatic connection option is, for example, the option "control the mouse pointer to consecutively touch a side edge of the computer screen twice, to establish a connection" in FIG. 5, but this application is not limited thereto. If the automatic connection option is enabled, it may indicate that the PC supports automatic connection to an Android device, and a subsequent step may be further performed. If the automatic connection option is disabled, it may indicate that the PC does not support automatic connection to an Android device, and a subsequent step may be not performed.

For example, if a coordinate of a side edge is 0, and the keyboard-mouse virtualization capability module of the PC detects that a coordinate of the mouse pointer appears to be 0 twice within 3 seconds, it may be determined that the keyboard-mouse is traversing.

S1602. The keyboard-mouse virtualization capability module of the PC sends keyboard-mouse traversal information to the keyboard-mouse service module of the PC. Correspondingly, the keyboard-mouse service module of the PC receives the keyboard-mouse traversal information.

The keyboard-mouse traversal information indicates that the keyboard-mouse is traversing. In an embodiment, the keyboard-mouse traversal information may be a flag bit. For example, the keyboard-mouse traversal information is represented by a binary character 1, to indicate that the keyboard-mouse is traversing.

S1603. The keyboard-mouse service module of the PC generates, based on the keyboard-mouse traversal information, a sidebar at a side edge over which the keyboard-mouse is traversing.

The sidebar may be the bubble box.

S1604. The keyboard-mouse service module of the PC determines whether an intelligent capability is enabled.

The intelligent capability option is, for example, the option "automatically adjust screen arrangement with a change of a device placement location" in FIG. 5, but this application is not limited thereto.

The intelligent capability means whether the PC can automatically detect a direction of an Android device relative to the PC. If the intelligent capability is enabled, the PC can automatically detect a direction of an Android device relative to the PC, to update the table tB in real time. If the intelligent capability is not enabled, the PC cannot automatically detect a location or a distance of an Android device relative to the PC, nor update the table tB in real time. In a subsequent process, the table tB is prohibited, to reduce an error rate.

It should be noted that, after the keyboard-mouse service module of the PC starts, intelligent capability monitoring may be registered to obtain a status of whether the intelligent capability is enabled or disabled, and intelligent capability switch change monitoring may be further registered to sense a change of an intelligent capability switch state.

If the keyboard-mouse service module of the PC detects that the intelligent capability is changed from a disabled state to an enabled state, the keyboard-mouse service module of the PC may re-register the intelligent capability switch change monitoring to monitor the intelligent capability switch state. If the keyboard-mouse service module of the PC detects that the intelligent capability is changed from the enabled state to the disabled state, information in the table tB is cleared.

S1605. If the intelligent capability is enabled, the keyboard-mouse service module of the PC determines a connectable device by using the table tB.

The keyboard-mouse service module of the PC may determine a connectable device from the table tB based on a traversing direction of the keyboard-mouse.

For example, the table tB includes a traversing direction, and the keyboard-mouse service module of the PC may determine, as a connectable device, a device in the table tB whose device traversing direction is consistent with the traversing direction of the keyboard-mouse.

There may be one or more connectable devices. This is not limited in this embodiment of this application. When there is one connectable device, the PC may directly connect to the connectable device. When there are a plurality of connectable devices, the PC may display icons and/or models of the connectable devices in the sidebar for the user to select a device for connection.

S1606. The keyboard-mouse service module of the PC sends a request message c to the communication module of the PC. The request message c is used to request the communication module of the PC to establish a connection to the communication module of the Android device.

The Android device is the connectable device determined by the keyboard-mouse service module of the PC. After the communication module of the PC establishes the connection to the communication module of the Android device, subsequent keyboard-mouse traversal is facilitated.

S 1607. The communication module of the PC establishes a message channel session and a file transmission channel session with the communication module of the Android device based on the request message c.

The communication module of the PC establishes the message channel session and the file transmission channel session with the communication module of the Android device, to perform message and file transmission between the two devices by using a keyboard-mouse operation.

S1608. If the communication module of the PC successfully establishes the channel sessions with the communication module of the Android device, the communication module of the PC sends a session success message to the keyboard-mouse service module of the PC.

S 1609. The communication module of the Android device performs service pull-up on the keyboard-mouse service module of the Android device.

The communication module of the Android device pulls up the service of the keyboard-mouse service module, that is, enables the keyboard-mouse service module to function, so as to support keyboard-mouse traversal.

S1610. The keyboard-mouse service module of the Android device may send a connection success message to the direction identification module of the PC. Correspondingly, the keyboard-mouse service module of the Android device receives the connection success message.

The connection success message indicates that the PC has successfully connected to the Android device, preparation work before traversal is completed, and traversal can be performed.

S1611. The keyboard-mouse service module of the Android device updates the table tC based on the connection message.

The table tC is used to store information about a device that has been connected to the PC. In this case, the Android device has been connected to the PC, and the keyboard-mouse service module of the Android device may add information about the Android device to the table tC.

It may be understood that after the keyboard-mouse traverses from the PC to the Android device, a file or a message may be transmitted between the PC and the Android device.

According to the method provided in this embodiment of this application, after it is detected that the keyboard-mouse is traversing, connection to a connectable device may be automatically performed, so that manual connection operations of the user are reduced, operations are simple, and user experience is improved.

In another example, when the first option in FIG. 5 is not selected, the PC may manually connect to the Android device.

The PC may provide a visual interface. The visual interface may be shown in FIG. 5. The interface includes a connectable device Magi4, a mobile phone Magi4xy, and a mobile phone Magi4y. The user may connect the PC to an Android device through clicking or dragging.

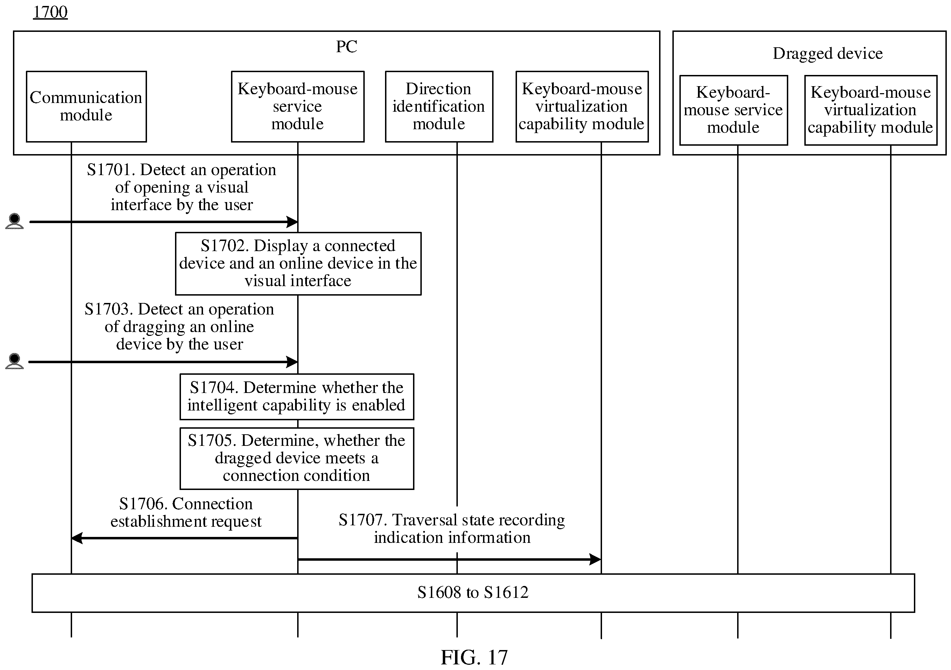

For example, FIG. 17 is a schematic flowchart of a manual connection method 1700. The method 1700 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 1700 may include the following steps.

S1701. After S1523, the keyboard-mouse service module of the PC detects an operation of opening a visual interface by the user.

The visual interface may be used by the user to view a connection state between the PC and another device, select a device for connection, and adjust a location of a connected device.

S 1702. The keyboard-mouse service module of the PC displays a connected device and an online device in the visual interface in response to the operation of opening the visual interface by the user.

The keyboard-mouse service module of the PC may display the connected device in the visual interface by using the table tC, and may display the online device in the visual interface by using the table tA.

For example, the visual interface may be shown in FIG. 5, and the visual interface is the super keyboard-mouse interface. In the interface shown in FIG. 5, when the user opens the super keyboard-mouse interface, a keyboard-mouse service module of the PC may detect the operation of opening the super keyboard-mouse interface by the user, and display a connected device and an online device in the super keyboard-mouse interface in response to the operation. As shown in the super keyboard-mouse interface, a tablet is connected to the left side of the PC, and there are three online devices. The three online devices include a mobile phone Magi4, a mobile phone Magi4xy, and a mobile phone Magi4y. The user may select a device for connection from the three online devices, and may adjust a location of a connected device, that is, the tablet.

S1703. The keyboard-mouse service module of the PC detects an operation of dragging an online device by the user.

The user may drag an online device to the left side, the right side, or the middle of the PC in the visual interface, and the keyboard-mouse service module of the PC may detect the operation of dragging the online device by the user.

For example, in the example shown in FIG. 5, the user may drag any one of the three online devices, for example, the mobile phone Magi4.

S1704. In response to the operation of dragging the online device by the user, the keyboard-mouse service module of the PC determines whether an intelligent capability is enabled.

This step is the same as S1605, and details are not described herein again.

S1705. If the intelligent capability is enabled, the keyboard-mouse service module of the PC determines, by using the table tB, whether the dragged device meets a connection condition.

The table tB includes information such as a coordinate direction, a coordinate angle, and a connection state of an online device whose keyboard-mouse function is enabled. If the keyboard-mouse service module of the PC detects that the table tB has no information about the device dragged by the user, it may be determined that the device dragged by the user does not enable the keyboard-mouse function, and the user may be prompted that the keyboard-mouse function of the device dragged by the user is not enabled. If the keyboard-mouse service module of the PC detects that a connected device exists at a location to which the device is dragged or detects that two connected devices exist, the keyboard-mouse service module may prompt that connection cannot be performed. It may be understood that the connection condition may include the following three conditions: 1) The keyboard-mouse function is enabled. 2) No connected device exists at the dragged-to location. 3) A quantity of devices that have been connected to the PC is not greater than 2.

S1706. If the dragged device meets the connection condition, the keyboard-mouse service module of the PC sends a connection establishment request to the communication module of the PC. Correspondingly, the communication module of the PC receives the connection establishment request.

The connection establishment request may also be referred to as a request message b. The connection establishment request is used to request the communication module of the PC to establish a connection to a communication module of the dragged device. After the communication module of the PC establishes the connection to the communication module of the Android device, subsequent keyboard-mouse traversal is facilitated.

S1707. The keyboard-mouse service module of the PC sends traversal state recording indication information to the keyboard-mouse virtualization capability module of the PC. Correspondingly, the keyboard-mouse virtualization capability module of the PC receives the traversal state recording indication information.

The traversal state recording indication information state indicates the keyboard-mouse virtualization capability module of the PC to record a traversal state. It may be understood that, in this case, traversal has not been performed, and the keyboard-mouse virtualization capability module of the PC records the traversal state as no or not traversing.

After 1707, the PC performs S1608 and S1612, and details are not described herein again.

According to the manual connection method provided in this embodiment of this application, a to-be-connected device may be determined by detecting an operation of dragging an online device by the user, and then connection to the device is performed.

After the PC successfully connects to the Android device by using the manual connection method 1700 or the automatic connection method 1600, the PC and the Android device determine whether keyboard-mouse connection succeeds, and perform keyboard-mouse traversal when the connection succeeds.

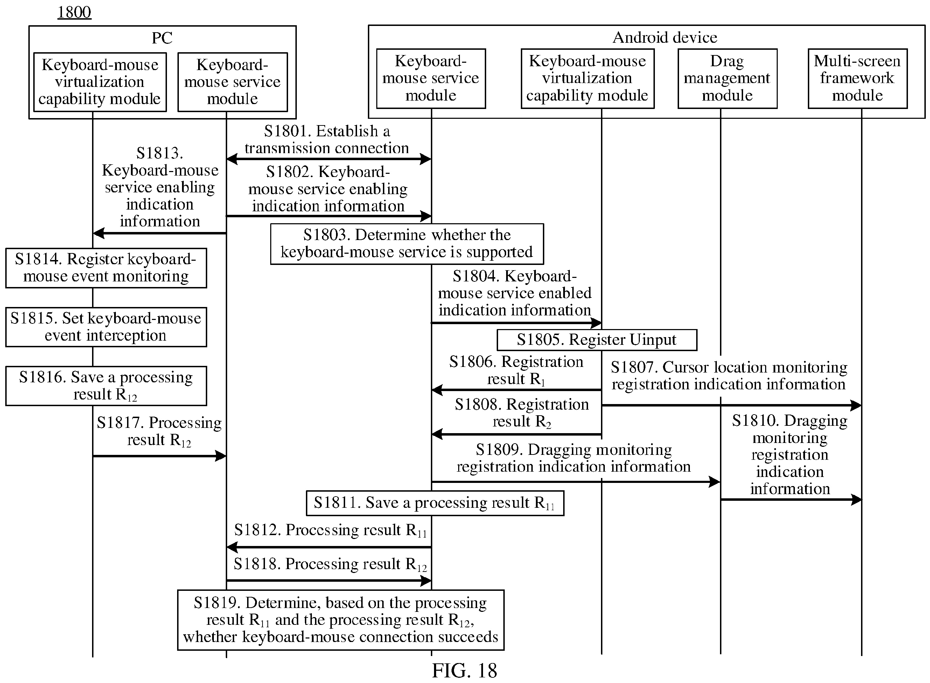

For example, FIG. 18 is a schematic flowchart of a keyboard-mouse connection method 1800. As shown in FIG. 18, the method 1800 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 1800 may include the following steps.

S1801. Establish a transmission connection between the keyboard-mouse service module of the PC and the keyboard-mouse service module of the Android device.

After the PC is connected to the Android device, a transmission connection may be established between the keyboard-mouse service module of the PC and the keyboard-mouse service module of the Android device. For example, a P2P connection may be established between the keyboard-mouse service module of the PC and the keyboard-mouse service module of the Android device.

S1802. The keyboard-mouse service module of the PC sends keyboard-mouse service enabling indication information to the keyboard-mouse service module of the Android device. Correspondingly, the keyboard-mouse service module of the Android device receives the keyboard-mouse service enabling indication information.

The keyboard-mouse service enabling indication information indicates the keyboard-mouse service module of the Android device to enable the keyboard-mouse service.

The keyboard-mouse service is a keyboard-mouse traversal option, and the keyboard-mouse service enabling indication information indicates the keyboard-mouse service module of the Android device to enable the keyboard-mouse traversal option.

S1803. The keyboard-mouse service module of the Android device determines, based on the keyboard-mouse service enabling indication information, whether the keyboard-mouse service is supported.

The keyboard-mouse service is the keyboard-mouse traversal option, and whether the keyboard-mouse service is enabled or disabled is determined by the user. That the keyboard-mouse service module of the Android device determines whether the keyboard-mouse service is supported means that the keyboard-mouse service module of the Android device determines whether the user checks, selects, or enables the keyboard-mouse traversal option.

If the user checks, selects, or enables the keyboard-mouse traversal option, the keyboard-mouse service module of the Android device can support the keyboard-mouse service. If the user does not check or select or disable the keyboard-mouse traversal option, the keyboard-mouse service module of the Android device does not support the keyboard-mouse service, and keyboard-mouse traversal cannot be performed.

S 1804. When the keyboard-mouse service is supported, the keyboard-mouse service module of the Android device sends keyboard-mouse service enabled indication information to the keyboard-mouse virtualization capability module of the Android device. Correspondingly, the keyboard-mouse virtualization capability module of the Android device receives the keyboard-mouse service enabled indication information.

S 1805. The keyboard-mouse virtualization capability module of the Android device registers virtual input (Uinput) based on the keyboard-mouse service enabled indication information.

The Uinput is used to inject a keyboard-mouse event.

S 1806. The keyboard-mouse virtualization capability module of the Android device sends a registration result $R_1$ to the keyboard-mouse service module of the Android device. Correspondingly, the keyboard-mouse service module of the Android device receives the registration result $R_1$.

The registration result $R_1$ may indicate whether the Uinput is successfully registered. The registration result may be success or failure. In an embodiment, success and failure may be represented by binary identifiers. For example, 1 represents success, and 0 represents failure.

S 1807. The keyboard-mouse virtualization capability module of the Android device sends cursor location monitoring registration indication information to the multi-screen framework module of the Android device based on the keyboard-mouse service enabled indication information. Correspondingly, the multi-screen framework module of the Android device receives the cursor location monitoring registration indication information, and registers cursor location monitoring.

After registering the cursor location monitoring, the multi-screen framework module may monitor a location of a cursor.

It should be noted that, a sequence between registering the Uinput and sending the cursor location monitoring registration indication information by the keyboard-mouse virtualization capability module of the Android device based on the keyboard-mouse service enabled indication information is not limited. In other words, a sequence of performing S1805 and S1807 is not limited in this embodiment of this application.

S 1808. The keyboard-mouse virtualization capability module of the Android device sends a registration result $R_2$ to the keyboard-mouse service module of the Android device. Correspondingly, the keyboard-mouse service module of the Android device receives the registration result $R_2$.

The registration result $R_2$ may indicate whether the cursor location monitoring is successfully registered. The registration result may be success or failure. In an embodiment, success and failure may be represented by binary identifiers. For example, 1 represents success, and 0 represents failure.

S1809. When the keyboard-mouse service is supported, the keyboard-mouse service module of the Android device sends dragging monitoring registration indication information to the drag management module of the Android device. Correspondingly, the keyboard-mouse virtualization capability module of the Android device receives the dragging monitoring registration indication information.

It should be noted that, when the keyboard-mouse service is supported, a sequence between sending the keyboard-mouse service enabled indication information and sending the dragging monitoring registration indication information by the keyboard-mouse service module of the Android device is not limited. In other words, a sequence of performing S1804 and S1809 is not limited in this embodiment of this application.

S1810. The drag management module of the Android device sends the dragging monitoring registration indication information to the multi-screen framework module of the Android device. Correspondingly, the multi-screen framework module of the Android device receives the dragging monitoring registration indication information.

S1811. The keyboard-mouse service module of the Android device saves a processing result $R_{11}$. The processing result $R_{11}$ includes results of whether the keyboard-mouse service is enabled, whether the Uinput is successfully registered, and whether the cursor location monitoring is successfully registered.

For example, the processing result $R_{11}$ may include that the keyboard-mouse service is enabled, the Uinput is successfully registered, and the cursor location monitoring is successfully registered.

S1812. The keyboard-mouse service module of the Android device sends the processing result $R_{11}$ to the keyboard-mouse service module of the PC. Correspondingly, the keyboard-mouse service module of the PC receives the processing result $R_{11}$.

S1813. The keyboard-mouse service module of the PC sends the keyboard-mouse service enabling indication information to the keyboard-mouse virtualization capability module of the PC. Correspondingly, the keyboard-mouse service module of the PC receives the keyboard-mouse service enabling indication information.

The keyboard-mouse service module of the PC sends the information in parallel in S1802 and S1813. Therefore, S1802 to S1812 and S1813 to S1818 are performed in parallel.

S1814. The keyboard-mouse virtualization capability module of the PC registers keyboard-mouse event monitoring based on the keyboard-mouse service enabling indication information.

The keyboard-mouse virtualization capability module of the PC registers keyboard-mouse event monitoring, and may detect a keyboard-mouse event. For example, the keyboard-mouse virtualization capability module of the PC may detect a pressing operation on the keyboard and a moving, clicking, or dragging operation on the mouse.

S1815. The keyboard-mouse virtualization capability module of the PC sets keyboard-mouse event interception based on the keyboard-mouse service enabling indication information.

After the keyboard-mouse traverses, a keyboard-mouse event is intercepted on the PC side, and the Android device responds to the keyboard-mouse event. Therefore, the keyboard-mouse virtualization capability module of the PC sets the keyboard-mouse event interception to intercept the keyboard-mouse event after the keyboard-mouse traverses.

A sequence of performing S1814 and S1815 is not limited in this embodiment of this application.

S1816. The keyboard-mouse virtualization capability module of the PC saves a processing result $R_{12}$. The processing result $R_{12}$ includes results of whether the keyboard-mouse event is successfully registered and whether the keyboard-mouse event interception is successfully set.

For example, the processing result B may include that the keyboard-mouse event is successfully registered and the keyboard-mouse event interception is successfully set.

S1817. The keyboard-mouse virtualization capability module of the PC sends the processing result $R_{12}$ to the keyboard-mouse service module of the PC. Correspondingly, the keyboard-mouse service module of the PC receives the processing result $R_{12}$.

S1818. The keyboard-mouse service module of the PC sends the processing result $R_{12}$ to the keyboard-mouse service module of the Android device. Correspondingly, the keyboard-mouse service module of the Android device receives the processing result $R_{12}$.

S1819. The keyboard-mouse service module of the PC and the keyboard-mouse service module of the Android device determine, based on the processing result $R_{11}$ and the processing result $R_{12}$, whether keyboard-mouse connection succeeds.

If all results in the processing result A and the processing result B are success, the keyboard-mouse service module of the PC and the keyboard-mouse service module of the Android device may determine that the keyboard-mouse connection succeeds. If at least one result in the processing result A and the processing result B is failure, the keyboard-mouse service module of the PC and the keyboard-mouse service module of the Android device may determine that the keyboard-mouse connection does not succeed.

If the keyboard-mouse connection between the keyboard-mouse service module of the PC and the keyboard-mouse service module of the Android device does not succeed, both are restored to an initiated state, that is, the foregoing registration process is re-performed.

According to the keyboard-mouse connection method provided in this embodiment of this application, before keyboard-mouse traversal, keyboard-mouse connection is performed between different devices to prepare for subsequent keyboard-mouse traversal, so that the keyboard-mouse traversal can be performed smoothly.

After it is determined by using the method 1800 that the keyboard-mouse connection succeeds, the PC and the Android device may perform keyboard-mouse traversal.

Before keyboard-mouse traversal is described, a mouse location detection method is first described. The PC may detect, based on the method, whether the mouse is traversing.

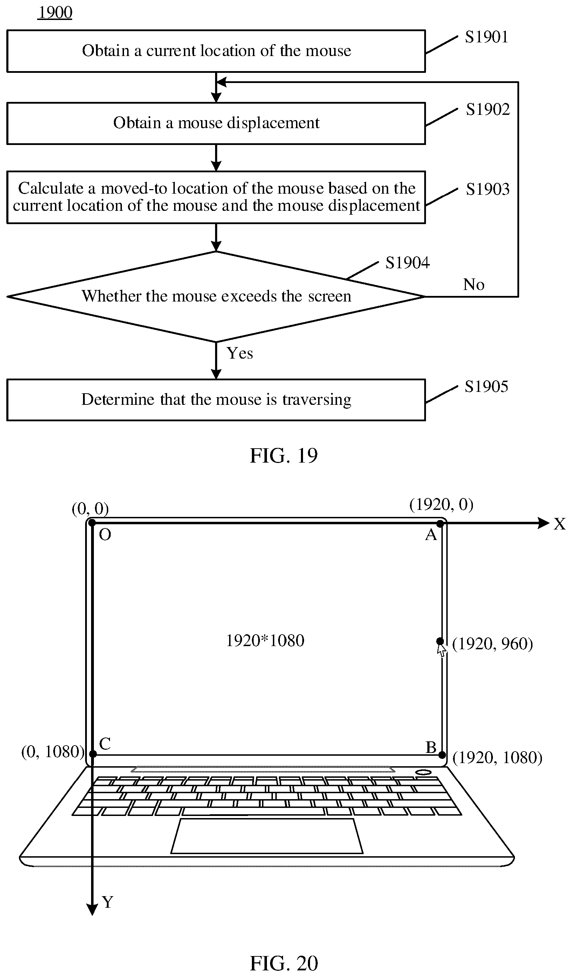

For example, FIG. 19 is a diagram of a mouse location detection method 1900. As shown in FIG. 19, the method 1900 may include the following steps.

S1901. The keyboard virtualization capability module of the PC obtains a current location of the mouse.

The current location of the mouse is coordinates of the mouse on the screen. The keyboard virtualization capability module of the PC may create a two-dimensional coordinate system on the screen, and coordinates of the mouse in the two-dimensional coordinate system are the current location of the mouse. The current location of the mouse may be represented by (XRaw, YRaw), but this embodiment of this application is not limited thereto.

For example, FIG. 20 is a diagram of establishing a screen coordinate system. As shown in FIG. 20, a coordinate system is established on a screen OABC by using a point O as an origin, an OA direction as a positive direction of an X axis, and an OC direction as a positive direction of a Y axis. A screen resolution is 1920*1080, a length of a line segment OA is equal to a length of a line segment CB, which are equal to 1920 pixels, and a length of a line segment OC is equal to a length of a line segment AB, which are equal to 1080 pixels. Therefore, in the coordinate system, coordinates of the point O are (0, 0), coordinates of a point A are (1920, 0), coordinates of a point B are (1920, 1080), and coordinates of a point C are (0, 1080). The mouse location is coordinates of the mouse in the coordinate system. For example, the mouse location may be (1920, 960).

S1902. The keyboard virtualization capability module of the PC obtains a mouse displacement when detecting that the mouse is moved.

The mouse displacement is a distance over which the mouse is moved. The mouse displacement may be represented by (Lx, Ly). Lx and Ly may be positive values or negative values. This is not limited in this embodiment of this application.

S1903. The keyboard virtualization capability module of the PC calculates a moved-to location of the mouse based on the mouse location and the mouse displacement.

The moved-to location of the mouse may be represented by (curX, curY). The moved-to location of the mouse may be represented by using the following formulas: curX=XRaw+Lx; and curY=YRaw+Ly.

S1904. The keyboard virtualization capability module of the PC determines whether the moved-to location of the mouse exceeds the screen.

In a scenario in which the mouse traverses in a leftward/rightward direction of the screen, if curX is less than a minimum value of the screen on the X axis or greater than a maximum value of the screen on the X axis, the keyboard virtualization capability module of the PC may determine that the mouse exceeds the screen.

In a scenario in which the mouse traverses in an upward/downward direction of the screen, if curY is less than a minimum value of the screen on the Y axis or greater than a maximum value of the screen on the Y axis, the keyboard virtualization capability module of the PC may determine that the mouse exceeds the screen.

If the moved-to location of the mouse exceeds the screen, it may be determined that the mouse is traversing, that is, S1905 is performed. If the moved-to location of the mouse does not exceed the screen, the moved-to location of the mouse may be determined as a current location, and movement of the mouse is further obtained, that is, S1902 is performed.

S1905. If the moved-to location of the mouse exceeds the screen, the keyboard virtualization capability module of the PC may determine that the mouse is traversing.

The PC may further determine a traversing direction of the mouse. For example, in the scenario in which the mouse traverses in the leftward/rightward direction of the screen, the traversing direction may be leftward traversal or rightward traversal. In the scenario in which the mouse traverses in the upward/downward direction of the screen, the traversing direction may be upward traversal or downward traversal.

For example, in the example shown in FIG. 20, in the scenario in which the mouse traverses in the leftward/rightward direction of the screen, if curX is less than 0, the PC may determine that the traversing direction of the mouse is leftward traversal. If curX is greater than 1920, the PC may determine that the traversing direction of the mouse is rightward traversal. In the scenario in which the mouse traverses in the upward/downward direction of the screen, if curY is less than 0, the keyboard virtualization capability module of the PC may determine that the traversing direction of the mouse is upward traversal. If curX is greater than 1080, the PC may determine that the traversing direction of the mouse is downward traversal.

According to the mouse traversal detection method provided in this embodiment of this application, whether the mouse exceeds the screen may be determined based on a mouse location and a mouse displacement, and a traversing direction may be determined, which helps improve accuracy of detecting mouse traversal.

After it is determined by using the method 1800 that the keyboard-mouse connection succeeds, the PC and the Android device may perform keyboard-mouse traversal. The following describes a keyboard-mouse traversal method provided in an embodiment of this application.

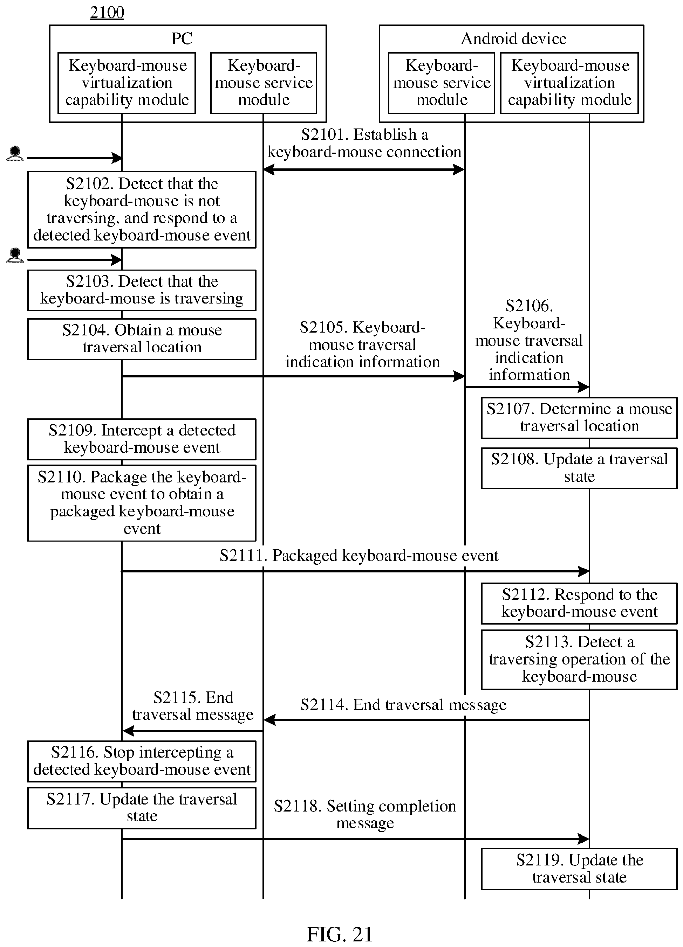

For example, FIG. 21 is a schematic flowchart of a keyboard-mouse traversal method 2100. The method 2100 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 2100 may include the following steps.

S2101. Establish a keyboard-mouse connection between the keyboard-mouse service module of the PC and the keyboard-mouse service module of the Android device.

For this step, refer to the method 1800. Details are not described herein again.

S2102. If the keyboard-mouse virtualization capability module of the PC detects an operation of moving the mouse by the user, and detects that the keyboard-mouse is not traversing, the keyboard-mouse virtualization capability module of the PC may respond to a detected keyboard-mouse event.

S2103. The keyboard-mouse virtualization capability module of the PC detects an operation of moving the mouse by the user, and detects that the keyboard-mouse is traversing.

For a method for monitoring keyboard-mouse traversal, refer to the method 1900. Details are not described herein again.

Optionally, after detecting that the keyboard-mouse is traversing, the keyboard-mouse virtualization capability module of the PC may store, in the table tC, information such as an ID of a traversed-to device and whether the traversal is the first traversal.

S2104. The keyboard-mouse virtualization capability module of the PC obtains a mouse traversal location.

S2105. The keyboard-mouse virtualization capability module of the PC sends keyboard-mouse traversal indication information to the keyboard-mouse service module of the Android device. Correspondingly, the keyboard-mouse service module of the Android device receives the keyboard-mouse traversal indication information.

The keyboard-mouse virtualization capability module of the PC notifies, by using the keyboard-mouse traversal indication information, the Android device that the keyboard-mouse is traversing.

S2106. The keyboard-mouse service module of the Android device sends the keyboard-mouse traversal indication information to the keyboard-mouse virtualization capability module of the PC of the Android device based on the keyboard-mouse traversal indication information. Correspondingly, the keyboard-mouse virtualization capability module of the Android device receives the keyboard-mouse traversal indication information.

S2107. The keyboard-mouse virtualization capability module of the Android device determines a mouse traversal location based on the keyboard-mouse traversal indication information.

If screen resolutions of the Android device and the PC are different, when the mouse traverses between the two devices, locations of the mouse on the screens are different. The keyboard-mouse virtualization capability module of the Android device may determine a location of the mouse on the screen of the Android device based on a location of the mouse on the screen of the PC.

S2108. The keyboard-mouse virtualization capability module of the Android device updates a traversal state based on the keyboard-mouse traversal indication information.

The keyboard-mouse virtualization capability module of the Android device may update, based on the keyboard-mouse traversal indication information, the traversal state to traversing.

S2109. The keyboard-mouse virtualization capability module of the PC intercepts a detected keyboard-mouse event.

When the mouse traverses from the PC to the Android device, the keyboard-mouse virtualization capability module of the PC intercepts a detected keyboard-mouse event, so that the PC does not respond to the mouse event.

S2110. The keyboard-mouse virtualization capability module of the PC packages the keyboard-mouse event to obtain a packaged keyboard-mouse event.

The keyboard-mouse virtualization capability module of the PC may package the keyboard-mouse event by using a preset protocol, to obtain a packaged keyboard-mouse event.

S2111. The keyboard-mouse virtualization capability module of the PC sends the packaged keyboard-mouse event to the keyboard-mouse virtualization capability module of the Android device. Correspondingly, the keyboard-mouse virtualization capability module of the Android device receives the packaged keyboard-mouse event.

Optionally, before sending the packaged keyboard-mouse event, the keyboard-mouse virtualization capability module of the PC may further encrypt the packaged keyboard-mouse event, to prevent leakage of the keyboard-mouse event.

S2112. The keyboard-mouse virtualization capability module of the Android device parses the packaged keyboard-mouse event to obtain the keyboard-mouse event, and responds to the keyboard-mouse event.

When the mouse traverses from the PC to the Android device, the Android device may parse the packaged keyboard-mouse event to obtain the keyboard-mouse event, and respond to the keyboard-mouse event. In this way, the PC and the Android device can implement keyboard-mouse traversal.

S2113. The keyboard-mouse virtualization capability module of the Android device detects that the keyboard-mouse is traversing.

In a process in which the keyboard-mouse acts on the Android device, the keyboard-mouse virtualization capability module of the Android device continuously detects that the keyboard-mouse is traversing.

After the mouse traverses to the Android device, the mouse may further traverse back. In a scenario in which the mouse traverses back to the PC, a traversing operation of the keyboard-mouse may be understood as a traversing-back operation of the keyboard-mouse, that is, traversing back from the Android device to the PC, which is further described below.

S2114. The keyboard-mouse virtualization capability module of the Android device sends an end traversal message to the keyboard-mouse service module of the PC. Correspondingly, the keyboard-mouse service module of the PC receives the end traversal message.

The end traversal message is stopping traversal of the keyboard-mouse from the PC to the Android device.

S2115. The keyboard-mouse service module of the PC sends the end traversal message to the keyboard-mouse virtualization capability module of the PC based on the end traversal message. Correspondingly, the keyboard-mouse virtualization capability module of the PC receives the end traversal message.

S2116. The keyboard-mouse virtualization capability module of the PC stops, based on the end traversal message, intercepting a detected keyboard-mouse event.

When the keyboard-mouse traverses back from the Android device to the PC, the PC responds to a keyboard-mouse operation. Therefore, the keyboard-mouse virtualization capability module of the PC may stop intercepting a detected keyboard-mouse event.

S2117. The keyboard-mouse virtualization capability module of the PC updates the traversal state based on the end traversal message.

The keyboard-mouse virtualization capability module of the PC may update, based on the end traversal message, the traversal state from traversing to not traversing.

A sequence of performing S2116 and S2117 is not limited in this embodiment of this application.

S2118. The keyboard-mouse virtualization capability module of the PC sends a setting completion message to the keyboard-mouse virtualization capability module of the Android device. Correspondingly, the keyboard-mouse virtualization capability module of the Android device receives the setting completion message.

The setting completion message indicates that interception of a detected keyboard-mouse event is stopped, and the traversal state is updated.

S2119. The keyboard-mouse virtualization capability module of the Android device updates the traversal state based on the setting completion message.

When the keyboard-mouse traverses to the Android device, the traversal state is traversing. When the keyboard-mouse traverses back to the PC, the keyboard-mouse virtualization capability module of the Android device may update, based on the setting completion message, the traversal state from traversing to not traversing.

According to the keyboard-mouse traversal method provided in this embodiment of this application, after the keyboard-mouse implements cross-device traversal, a mouse traversal location may be adjusted based on different devices. After the keyboard-mouse traverses successfully, the PC intercepts a keyboard-mouse event, and the Android device side responds to the keyboard-mouse event. In this way, cross-device traversal of the mouse can be implemented.

In the method 2100, when the keyboard-mouse traverses from the PC to the Android device, because the resolutions of the PC and the Android device are different, the Android device may perform S2107 of determining a mouse traversal location, that is, a location on the screen of the Android device. For example, in the example shown in FIG. 2, b in FIG. 2 shows an initial display location at which the mouse traverses from the computer 101 to the mobile phone 102.

An embodiment of this application provides a method for determining an initial location of keyboard-mouse traversal, so that the location of the mouse on the screen of the Android device can be calculated based on the location of the mouse on the screen of the PC, the screen resolution of the PC, and the screen resolution of the Android device.

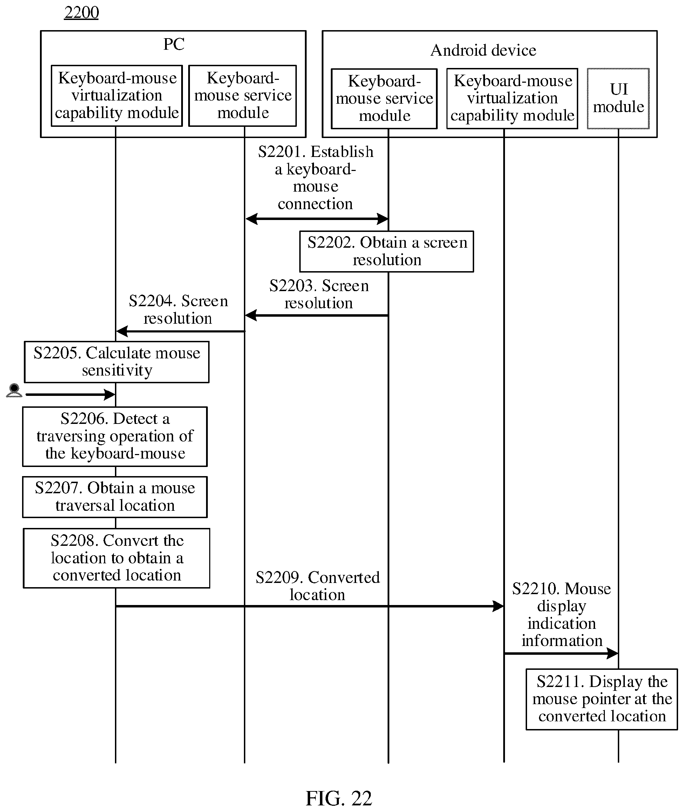

For example, FIG. 22 is a schematic flowchart of a method 2200 for determining an initial location of mouse traversal. The method 2200 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 2200 may include the following steps.

S2201. Establish a keyboard-mouse connection between the keyboard-mouse service module of the PC and the keyboard-mouse service module of the Android device.

This step is the same as S2101.

S2202. The keyboard-mouse service module of the Android device obtains a screen resolution.

It may be understood that the screen resolution is a screen resolution of the Android device.

S2203. The keyboard-mouse service module of the Android device sends the screen resolution to the keyboard-mouse service module of the PC. Correspondingly, the keyboard-mouse service module of the PC receives the screen resolution.

S2204. The keyboard-mouse service module of the PC sends the screen resolution to the keyboard-mouse virtualization capability module of the PC based on the screen resolution. Correspondingly, the conversion module of the PC receives the screen resolution.

S2205. The keyboard-mouse virtualization capability module of the PC calculates mouse sensitivity based on the screen resolution and a screen resolution of the PC.

The mouse sensitivity may be a ratio of the screen resolution of the Android device to the screen resolution of the PC.

For example, a sensitivity conversion ratio $s$ may be calculated by using the following formula:

$$s = \frac{R_1}{R_2}.$$

$R_1$ is the screen resolution of the Android device, and $R_2$ is the screen resolution of the PC.

If the screen resolution of the Android device is $R_1 = R_{1x} * R_{1y}$, where $R_{1x}$ and $R_{1y}$ are side lengths of the screen of the Android device, and the screen resolution of the PC is $R_2 = R_{2x} * R_{2y}$, where $R_{2x}$ and $R_{2y}$ are side lengths of the screen of the PC, the sensitivity conversion ratio $s$ includes $s_x$ and $s_y$, where $s_x$ and $s_y$ may be expressed by using the following formulas:

$$s_x = \frac{R_{1x}}{R_{2x}}$$

and

$$s_y = \frac{R_{1y}}{R_{2y}}.$$

It should be noted that, S2202 to S2205 are steps that can be performed after the mouse connection is established between the Android device and the PC.

S2206. The keyboard-mouse virtualization capability module of the PC detects that the keyboard-mouse is traversing.

The keyboard-mouse virtualization capability module of the PC detects, by using the method 1900, that the keyboard-mouse is traversing.

S2207. The keyboard-mouse virtualization capability module of the PC obtains a mouse traversal location.

S2208. The keyboard-mouse virtualization capability module of the PC converts the mouse traversal location (which may be referred to as a location for short) based on the mouse sensitivity, to obtain a converted location.

If the traversal location of the mouse on the screen of the PC is $(x_1, y_1)$, and a traversing direction is leftward traversal or rightward traversal, the conversion module of the PC may convert $y_1$ based on $s_y$, that is, $y_1 * s_y$. A value of a horizontal coordinate is a preset value. The preset value is a minimum value or a maximum value of a side length of the screen on the X axis.

For example, in the example shown in FIG. 20, if the traversal location is (1920, 960), and the traversing direction is rightward traversal, the converted location may be (0, 960* $s_y$). If the traversal location is (0, 960), the traversing direction is rightward traversal, and the screen resolution of the Android device is 2000*1000, the converted location may be (2000,

960* $s_y$). $\quad s_y = \frac{R_{1y}}{R_{2y}} = \frac{1000}{1080}$ .

If the traversal location of the mouse on the screen of the PC is $(x_1, y_1)$, and the traversing direction is upward traversal or downward traversal, the conversion module of the PC may convert $x_1$ based on $s_x$, that is, $x_1 * s_x$. A value of a vertical coordinate is a preset value. The preset value is a minimum value or a maximum value of a side length of the screen on the X axis.

S2209. The keyboard-mouse virtualization capability module of the PC sends the converted location to the keyboard-mouse virtualization capability module of the Android device. Correspondingly, the keyboard-mouse virtualization capability module of the Android device receives the converted location.

S2210. The keyboard-mouse virtualization capability module of the Android device sends mouse display indication information to the UI module. Correspondingly, the UI module receives the mouse display indication information.

S2211. The UI module displays the mouse pointer at the converted location based on the mouse display indication information.

According to the method for determining an initial location of mouse traversal that is provided in this embodiment of this application, a mouse traversal location is converted by using a sensitivity conversion ratio, so that when the mouse traverses to the Android device, the traversal adapts to the screen resolution of the Android device, which helps control the Android device by using the mouse.

If the resolutions of the PC and the Android device are different, in addition to the mouse traversal location, a mouse moving velocity is also affected. The mouse moving velocity may also be referred to as mouse sensitivity. This is not limited in this embodiment of this application.

An embodiment of this application provides a mouse moving velocity determining method, so that a moving velocity of the mouse on the Android device can be calculated based on a moving velocity of the mouse on the PC and the sensitivity conversion ratio. For example, in the example shown in FIG. 2, b in FIG. 2 shows a moving velocity at which the mouse traverses from the computer 101 to the mobile phone 102.

The mouse moving velocity determining method provided in this embodiment of this application may be performed between S2108 and S2109.

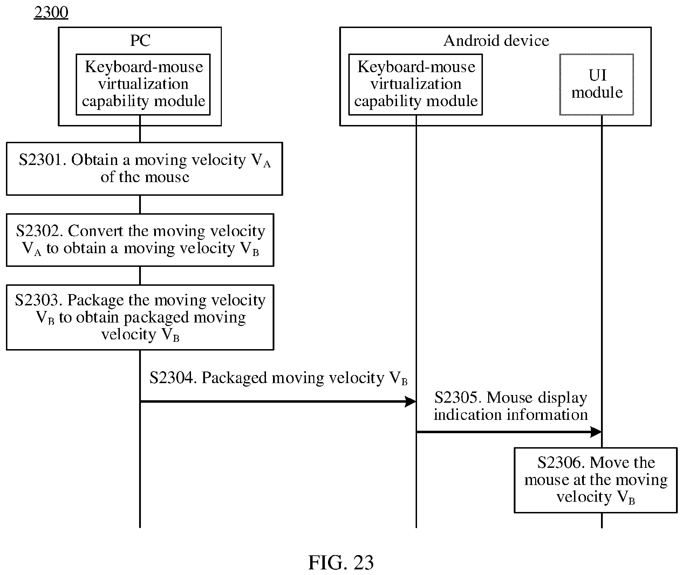

For example, FIG. 23 is a schematic flowchart of a mouse moving velocity determining method 2300. The method 2300 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 2300 may include the following steps.

S2301. The keyboard-mouse virtualization capability module of the PC obtains a moving velocity $V_A$ of the mouse.

The moving velocity of the mouse is a displacement per unit time, or may be understood as a quantity of pixels over which the mouse is moved per unit time. The unit time may be preset. For example, the preset time may be 3 milliseconds, 4 milliseconds, or 20 milliseconds. This is not limited in this embodiment of this application. The moving velocity may be represented by (Vx, Vy), but this embodiment of this application is not limited thereto.

S2302. The keyboard-mouse virtualization capability module of the PC converts the moving velocity A to obtain a moving velocity $V_B$. Correspondingly, the conversion module of the PC receives the moving velocity $V_B$.

The keyboard-mouse virtualization capability module of the PC may convert the moving velocity $V_A$ ($V_x$, $V_y$) based on the sensitivity conversion ratios $s_x$ and $s_y$, to obtain a moving velocity $V_B$ ($V_x*s_x$, $V_y*s_y$). The sensitivity conversion ratios may be obtained through S2201 to S2204, and details are not described herein again.

For example, if the screen resolution of the PC is $R_2 = R_{2x} * R_{2y} = 3000*2000$, and the screen resolution of the Android device is $R_1 = R_{1x} * R_{1y} = 2000*1000$,

$$s_x = \frac{R_{1x}}{R_{2x}} = \frac{2000}{3000} = \frac{2}{3}, \text{ and } s_y = \frac{R_{1y}}{R_{2y}} = \frac{1000}{2000} = \frac{1}{2}.$$

If the moving velocity $V_A$ ($V_x$, $V_y$) is ($V_x$, $V_y$)=(3, 2),

$$V_x * s_x = 3 * \frac{2}{3} = 2, \text{ and } V_y * s_y = 2 * \frac{1}{2} = 1,$$

that is, the moving velocity $V_B$ is (2, 1).

S2303. The keyboard-mouse virtualization capability module of the PC packages the moving velocity $V_B$ to obtain a packaged moving velocity B.

S2304. The keyboard-mouse virtualization capability module of the PC sends the packaged moving velocity $V_B$ to the keyboard-mouse virtualization capability module of the Android device.

The keyboard-mouse virtualization capability module of the PC may package the moving velocity $V_B$ by using a preset protocol, to obtain the packaged moving velocity $V_B$. Packaging the moving velocity $V_B$ helps with confidentiality of the moving velocity $V_B$, and cross-device transmission of the moving velocity $V_B$.

S2305. The keyboard-mouse virtualization capability module of the Android device sends mouse display indication information to the UI module. Correspondingly, the UI module receives the mouse display indication information.

The mouse display indication information indicates the UI module to move the mouse at the moving velocity $V_B$.

S2306. The UI module may move the mouse at the moving velocity $V_B$ based on the mouse display indication information.

According to the mouse moving velocity determining method provided in this embodiment of this application, the moving velocity of the mouse is converted by using the sensitivity conversion ratio, so that when the mouse traverses to the Android device, the moving velocity of the mouse adapts to the screen resolution of the Android device, which helps control the Android device by using the mouse, and improve ease of use after the mouse traverses to the device.

For S2109 in which the keyboard-mouse virtualization capability module of the PC intercepts a detected keyboard-mouse event in the method 2100, an embodiment of this application provides a specific implementation.

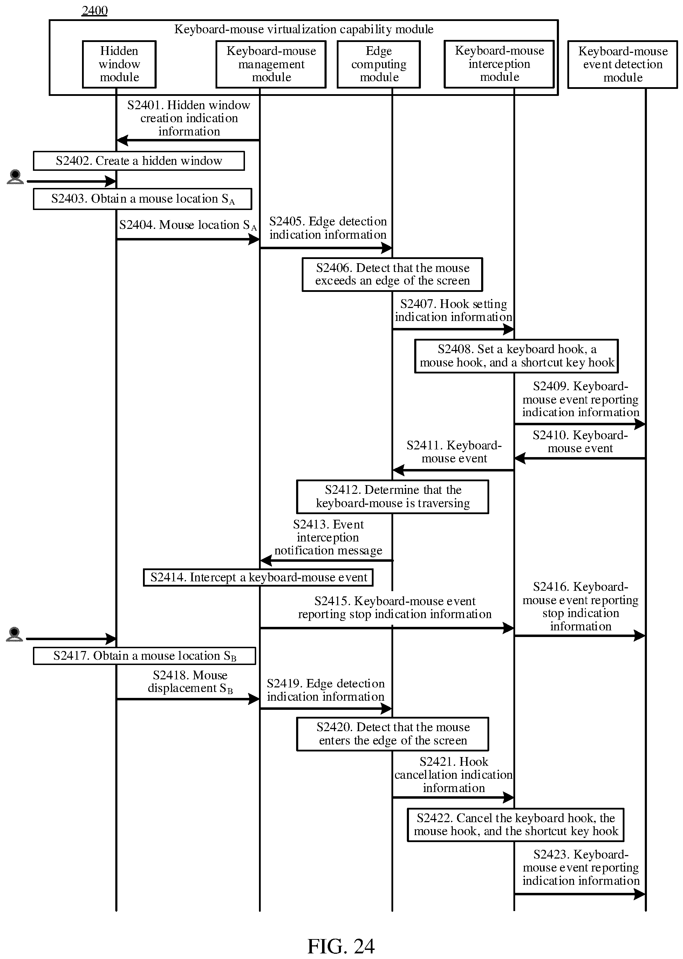

For example, FIG. 24 is a schematic flowchart of a method 2400 for intercepting a keyboard-mouse event by a PC. The method may be performed by the keyboard-mouse virtualization capability module of the PC and the keyboard-mouse event detection module of the PC. The keyboard-mouse virtualization capability module of the PC includes a hidden window module, a keyboard-mouse management module, an edge computing module, and a keyboard-mouse interception module.

As shown in FIG. 24, the method 2400 may include the following steps.

S2401. The keyboard-mouse management module sends hidden window creation indication information to the hidden window module. Correspondingly, the hidden window module receives the hidden window creation indication information.

The hidden window creation indication information may indicate the hidden window module to hide a window.

S2402. The hidden window module creates a hidden window based on the hidden window creation indication information.

The hidden window may be understood as a window running on background of the PC. The hidden window is used to receive a keyboard-mouse event. The keyboard-mouse event is a type of Windows message. In Windows programming, after each Windows application program starts to be executed, the system creates a message queue for the program. The message queue is used to store information about a window created by the application program.

For example, when the user presses a right mouse button, the PC generates a WM_RBUTTONDOWN message, and the system automatically puts the message into a message queue of an application program to which the hidden window belongs, and waits for the application program to end. Windows sequentially puts generated messages into the message queue, and the application program continuously reads messages from the message queue through a message loop, and makes responses. After successfully creating the hidden window, the hidden window module may receive a WM_INPUT message.

S2403. In response to an operation of moving the mouse by the user, the hidden window module obtains a mouse location $S_A$ by using the hidden window.

The hidden window module may read the mouse location $S_A$ from the hidden window.

S2404. The hidden window module sends the mouse location $S_A$ to the keyboard-mouse management module. Correspondingly, the keyboard-mouse management module receives the mouse location $S_A$.

S2405. The keyboard-mouse management module sends edge detection indication information to the edge computing module based on the mouse location $S_A$. Correspondingly, the edge computing module receives the edge detection indication information.

The edge detection indication information indicates the edge computing module to determine whether the mouse is at an edge of the screen.

S2406. The edge computing module detects, based on the edge detection indication information, that the mouse exceeds an edge of the screen.

The edge computing module determines, based on the mouse location $S_A$, that the mouse exceeds an edge of the screen. For a specific implementation, refer to the method 1900.

S2407. The edge computing module sends hook setting indication information to the keyboard-mouse interception module. Correspondingly, the keyboard-mouse interception module receives the hook setting indication information.

The event interception indication information indicates the keyboard-mouse interception module to set a keyboard hook, a mouse hook, and a shortcut key hook. The hook (Hook) is a platform of a Windows message processing mechanism. An application program may set a subprogram on the platform to monitor a message in a specified window, and the monitored window may be created by another process. After the message arrives, the message is processed before a target window processes a function. The hook mechanism allows an application program to intercept and process a window message or a particular event. The hook is actually a program segment for processing a message, and is invoked by the system and embedded into the system. Each time a particular message is sent, before the message reaches a destination window, the hook program first captures the message, that is, a hook function first obtains a control right. In this case, the hook function may process (change) the message, or may continue to transmit the message without processing, or may compulsorily end transmission of the message.

The keyboard hook is configured to obtain an input operation performed by the user by using the keyboard. For example, the keyboard hook is configured to obtain an operation of inputting "pending items" by the user by using the keyboard. The mouse hook is configured to obtain a control operation performed by the user by using the mouse. For example, the mouse hook is configured to obtain a clicking or dragging operation performed by the user by using the mouse. The shortcut key hook is configured to obtain an operation of the user on a shortcut key. For example, the shortcut key hook is configured to obtain an operation of the user on Ctrl+C, Ctrl+V, ATL+TAB, or Ctrl+Alt+DELETE.

S2408. The keyboard-mouse interception module sets a keyboard hook, a mouse hook, and a shortcut key hook based on the hook setting indication information.

S2409. The keyboard-mouse interception module sends keyboard-mouse event reporting indication information to the keyboard-mouse event detection module. Correspondingly, the keyboard-mouse event detection module receives the keyboard-mouse event reporting indication information.

The keyboard-mouse event reporting indication information indicates the keyboard-mouse event detection module to report a keyboard-mouse event.

S2410. The keyboard-mouse event detection module may report an obtained keyboard-mouse event to the keyboard-mouse interception module based on the keyboard-mouse event reporting indication information. Correspondingly, the keyboard-mouse interception module receives the keyboard-mouse event.

S2411. The keyboard-mouse interception module sends the keyboard-mouse event to the edge computing module. Correspondingly, the edge computing module receives the keyboard-mouse event.

S2412. The edge computing module determines, based on the keyboard-mouse event, that the keyboard-mouse is traversing.

S2413. The edge computing module sends an event interception notification message to the keyboard-mouse management module. Correspondingly, the keyboard-mouse management module receives the event interception notification message.

The event interception notification message indicates the keyboard-mouse management module to intercept a keyboard-mouse event.

S2414. The keyboard-mouse management module intercepts a keyboard-mouse event based on the event interception notification message.

After the keyboard-mouse management module intercepts the keyboard-mouse event, the PC performs S2110 to S2112, that is, transmits the keyboard-mouse event to the Android device after packaging.

S2415. The keyboard-mouse management module sends keyboard-mouse event reporting stop indication information to the keyboard-mouse interception module. Correspondingly, the keyboard-mouse interception module receives the keyboard-mouse event reporting stop indication information.

The keyboard-mouse event reporting stop indication information indicates the keyboard-mouse event detection module to stop reporting a keyboard-mouse event.

S2416. The keyboard-mouse interception module sends keyboard-mouse event reporting stop indication information to the keyboard-mouse event detection module. Correspondingly, the keyboard-mouse event detection module receives the keyboard-mouse event reporting stop indication information.

S2417. In response to an operation of moving the mouse by the user, the hidden window module obtains a mouse location $S_B$.

The mouse location $S_B$ is different from the mouse location $S_A$.

S2418. The hidden window module sends the mouse location $S_B$ to the keyboard-mouse management module. Correspondingly, the keyboard-mouse management module receives the mouse location $S_B$.

S2419. The keyboard-mouse management module sends edge detection indication information to the edge computing module based on the mouse location $S_B$. Correspondingly, the edge computing module receives the edge detection indication information.

S2420. The edge computing module detects, based on the edge detection indication information, that the mouse enters the edge of the screen.

That the mouse enters the edge of the screen means that the mouse traverses back from the screen of the Android device to the screen of the PC.

For example, in the example shown in FIG. 2, the user controls the mouse to traverse from the computer 101 to the mobile phone 102, and after completing editing the memo application, the user may further traverse back to the computer 101 to operate the computer 101. When the user controls the mouse to traverse back from the screen to the screen of the PC, in response to the operation of the user, the edge computing module may determine that the mouse enters an edge of the screen.

S2421. The edge computing module sends hook cancellation indication information to the keyboard-mouse interception module. Correspondingly, the keyboard-mouse interception module receives the hook cancellation indication information.

The hook cancellation indication information indicates the keyboard-mouse interception module to cancel the hook setting.

S2422. The keyboard-mouse interception module cancels the keyboard hook, the mouse hook, and the shortcut key hook based on the hook cancellation indication information.

S2423. The keyboard-mouse interception module sends keyboard-mouse event reporting indication information to the keyboard-mouse event detection module. Correspondingly, the keyboard-mouse event detection module receives the keyboard-mouse event reporting indication information, and reports a keyboard-mouse event based on the keyboard-mouse event reporting indication information.

According to the keyboard-mouse event interception method provided in this embodiment of this application, when the keyboard-mouse traverses to the Android device, the PC side intercepts a keyboard-mouse event by using a keyboard hook, a mouse hook, and a shortcut key hook, and the Android device side responds to the keyboard-mouse event. When the keyboard-mouse traverses back to the PC, the PC side cancels the keyboard hook, the mouse hook, and the shortcut key hook, to respond to keyboard-mouse event, which facilitates cross-device traversal of the mouse.

When the keyboard-mouse traverses between different devices, it is likely that the user cannot see the mouse on a screen, or the user does not need to operate an Android device by using the keyboard-mouse, but wants to control the PC by using the keyboard-mouse. For example, in the example shown in FIG. 3, the user may display the mouse pointer 1011 at the center of the screen of the computer 101 by using an operation of triggering Esc.

To meet the user requirement, an embodiment of this application provides a shortcut key for compulsorily recapturing the keyboard-mouse, so that when the PC detects an operation of the user triggering the shortcut key for compulsorily recapturing the keyboard-mouse, the mouse is displayed on the screen of the PC. A location of the mouse may be the center of the screen of the PC, but this embodiment of this application is not limited thereto.

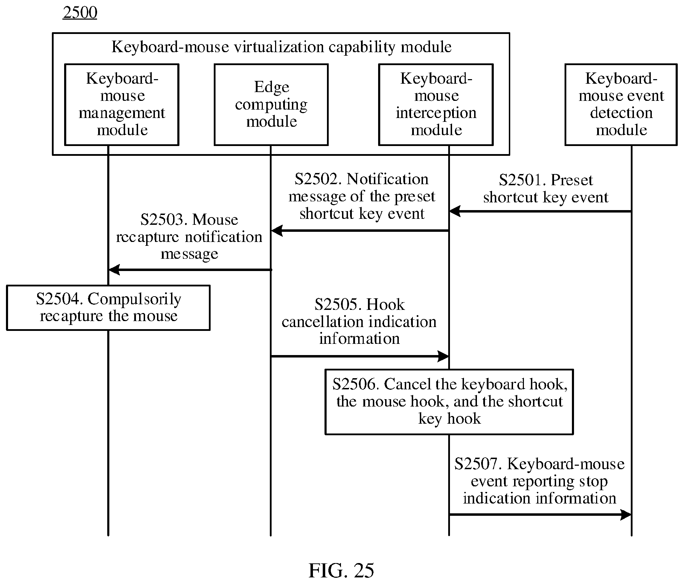

For example, FIG. 25 is a schematic flowchart of a method 2500 for compulsively recapturing a keyboard-mouse. The method may be performed by the keyboard-mouse virtualization capability module of the PC and the keyboard-mouse event detection module of the PC. The keyboard-mouse virtualization capability module of the PC includes a hidden window module, a keyboard-mouse management module, an edge computing module, and a keyboard-mouse interception module.

As shown in FIG. 25, the method 2500 may include the following steps.

S2501. The keyboard-mouse event detection module sends a preset shortcut key event to the keyboard-mouse interception.

The keyboard-mouse event detection module receives keyboard-mouse event reporting indication information, and may report a keyboard-mouse event. When detecting a preset shortcut key event, the keyboard-mouse event detection module sends the preset shortcut key event to the keyboard-mouse interception.

The preset shortcut key is a shortcut key for compulsory recapture. The shortcut key for compulsory recapture may be Esc or Ctrl+Alt+DELETE. This is not limited in this embodiment of this application.

S2502. The keyboard-mouse interception module sends a notification message of the preset shortcut key event to the edge computing module based on the preset shortcut key event. Correspondingly, the edge computing module receives the notification message of the preset shortcut key event.

The notification message of the preset shortcut key event is used to notify the edge computing module that an operation of compulsorily recapturing the mouse is received.

S2503. The edge computing module sends, based on the notification message of the preset shortcut key event, a mouse recapture notification message to the keyboard-mouse management module when the keyboard-mouse traverses. Correspondingly, the keyboard-mouse management module receives the mouse recapture notification message.

The mouse recapture notification message is used to notify the keyboard-mouse management module to compulsorily recapture the mouse.

S2504. The keyboard-mouse management module compulsorily recaptures the mouse based on the mouse recapture notification message.

After the keyboard-mouse management module compulsorily recaptures the mouse, the mouse may be displayed at the center of the screen of the PC. It may be understood that a display location after the mouse is compulsorily recaptured is preset, and may be the center of the screen, but this embodiment of this application is not limited thereto.

S2505. The edge computing module sends hook cancellation indication information to the keyboard-mouse interception module based on the notification message of the preset shortcut key event. Correspondingly, the keyboard-mouse interception module receives the hook cancellation indication information.

The hook cancellation indication information indicates the keyboard-mouse interception module to cancel the hook setting.

A sequence of performing S2504 and S2505 is not limited in this embodiment of this application.

S2506. The keyboard-mouse interception module cancels the keyboard hook, the mouse hook, and the shortcut key hook based on the hook cancellation indication information.

S2507. The keyboard-mouse interception module sends keyboard-mouse event reporting stop indication information to the keyboard-mouse event detection module. Correspondingly, the keyboard-mouse event detection module receives the keyboard-mouse event reporting stop indication information, and no longer sends a keyboard-mouse event to the keyboard-mouse interception module.

According to the method for compulsorily recapturing a keyboard-mouse that is provided in this embodiment of this application, when an operation of compulsorily recapturing the mouse is detected, the mouse is compulsorily recaptured, to meet a requirement of the user for compulsorily capturing the mouse. In addition, the mouse is compulsorily recaptured by using a shortcut key, so that efficiency of compulsorily recapturing the mouse is high.

Optionally, when the shortcut key for compulsorily recapturing the mouse is set, the foregoing S2212 in which the keyboard-mouse management module intercepts a keyboard-mouse event based on the event interception notification message may include: The keyboard-mouse management module determines whether the keyboard-mouse event is an event of the shortcut key for compulsorily recapturing the mouse. If the keyboard-mouse event is not an event of the shortcut key, interception is performed. If the keyboard-mouse event is an event of the shortcut key, the mouse is compulsorily recaptured.

In a scenario in which the PC has connected to an Android device, if a location of the Android device relative to the PC is changed, the PC may update a traversing direction in the table tC based on a changed location of the Android device.

An embodiment of this application provides two manners, namely, an automatic manner and a manual manner, to detect a location change of an Android device.

In a possible implementation, the user adjusts a location of a connected device, and the PC detects, based on the ultrasonic method, that a location of the connected device is changed, and updates a traversing direction in the table tC

EP 4 560 452 A1

based on a changed location. For example, in the scenario shown in FIG. 10, if the computer 101 detects that the mobile phone 102 is adjusted from the left side of the computer to the right side of the computer 101, the traversing direction from the computer 101 to the mobile phone 102 may be updated to rightward traversal.

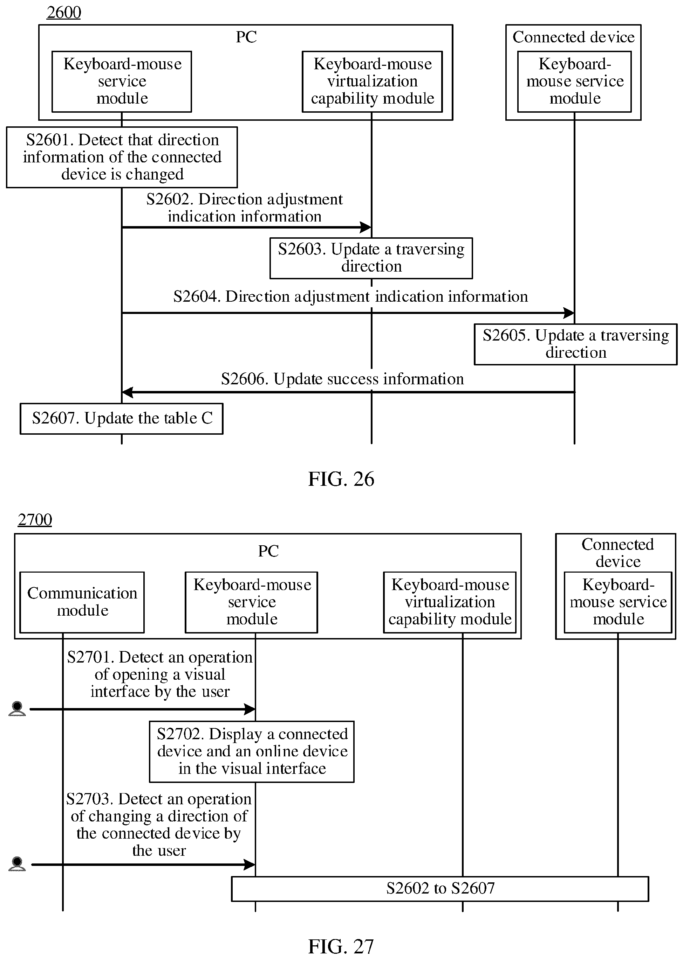

For example, FIG. 26 is a schematic flowchart of a traversing direction adjustment method 2600. The method 2600 may be applied to a communication system including a PC and an Android device that are connected, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto. In this method, the Android device may also be referred to as a connected device.

The method 2600 may include the following steps.

S2601. When the intelligent capability is enabled, the keyboard-mouse service module of the PC detects, by using the table tC, that direction information of the connected device is changed.

The table tC includes the direction information (that is, a coordinate direction) of the connected device. If the direction information of the connected device is changed, the coordinate direction in the table tC is changed. The keyboard-mouse service module of the PC detects that the coordinate direction in the table tC is changed, and may determine that the direction information of the connected device is changed.

A quantity of connected devices may be 1 or 2. This is not limited in this embodiment of this application.

There may be the following several cases in which the direction information of the connected device is changed:

1) When the quantity of connected devices is 1, the coordinate direction is changed to an opposite direction or middle. For example, the coordinate direction of the connected device is left, and when the coordinate direction is changed, the coordinate direction is changed to right or middle.

2) When the quantity of connected devices is 2, a coordinate of only one connected device is changed, and a coordinate direction is changed to an opposite direction or middle.

For example, the quantity of connected devices is 2, and the two connected devices are respectively a connected device 1 and a connected device 2. A coordinate direction of the connected device 1 is left, and a coordinate direction of the connected device 2 is right. The coordinate direction of the connected device 1 is changed, and the coordinate direction is changed to right or middle. It may be understood that whether the coordinate direction is changed to right or middle is determined by the user.

3) When the quantity of connected devices is 2, coordinates of both connected devices are changed, and coordinate directions are both changed to opposite directions or middle, or a coordinate direction of one connected device is changed to an opposite direction, and a coordinate direction of the other connected device is changed to middle.

For example, the quantity of connected devices is 2, and the two connected devices are respectively a connected device 1 and a connected device 2. A coordinate direction of the connected device 1 is left, and a coordinate direction of the connected device 2 is right. The coordinate directions of the connected device 1 and the connected device 2 may be both changed, the coordinate direction of the connected device 1 is changed to right, and the coordinate direction of the connected device 2 is changed to left. Alternatively, the coordinate direction of the connected device 1 and the coordinate direction of the connected device 2 are both changed to middle. Alternatively, the coordinate direction of the connected device 1 is changed to right, and the coordinate direction of the connected device 2 is changed to middle.

S2602. If the change of the direction information conforms to a traversing direction change, the keyboard-mouse service module of the PC sends direction adjustment indication information to the keyboard-mouse virtualization capability module of the PC. Correspondingly, the keyboard-mouse virtualization capability module of the PC receives the direction adjustment indication information.

Not all direction information changes cause traversing direction adjustment. The cases listed above may include the following cases in which a change of direction information conforms to a traversing direction change:

1) When the quantity of connected devices is 1, the coordinate direction is changed to an opposite direction.

2) When the quantity of connected devices is 2, coordinates of both connected devices are changed, and coordinate directions are both changed to opposite directions.

The direction adjustment indication information may indicate the keyboard-mouse virtualization capability module of the PC to adjust a traversing direction.

S2603. The keyboard-mouse virtualization capability module of the PC updates a traversing direction based on the direction adjustment indication information.

The keyboard-mouse virtualization capability module of the PC may update the traversing direction to an opposite direction.

Particularly, if the coordinate direction of the connected device is changed to middle, the traversing direction may be changed to a default direction or a previous traversing direction. The default direction may be rightward traversal or leftward traversal. This is not limited in this embodiment of this application.

For example, if the quantity of connected devices is 1, the coordinate direction is changed to middle, and the default direction is rightward traversal, the keyboard-mouse virtualization capability module of the PC may change the traversing direction to the default direction. It may be understood that if the traversing direction of the connected device is rightward traversal before the coordinate direction is changed, when the coordinate direction is changed to middle, the traversing direction is still rightward traversal.

For example, if the quantity of connected devices is 2, and coordinate directions of both connected devices are changed to middle, the keyboard-mouse virtualization capability module of the PC may determine, by using the table tC, whether traversal to each of the two connected devices is the first traversal. If the traversal is the first traversal, the traversing direction may be updated to the default traversing direction. If the traversal is not the first traversal, the traversing direction may be updated to a previous traversing direction.

S2604. The keyboard-mouse service module of the PC sends direction adjustment indication information to the keyboard-mouse service module of the connected device. Correspondingly, the keyboard-mouse service module of the Android device receives the direction adjustment indication information.

A traversing direction of the connected device is also changed. The keyboard-mouse service module of the PC may indicate, by using the direction adjustment indication information, the keyboard-mouse service module of the connected device to update the traversing direction.

S2605. The keyboard-mouse service module of the connected device updates the traversing direction based on the direction adjustment indication information.

The keyboard-mouse service module of the connected device may update the traversing direction to an opposite direction.

S2606. The keyboard-mouse service module of the connected device sends update success information to the keyboard-mouse service module of the PC. Correspondingly, the keyboard-mouse service module of the PC receives the update success information.

The update success information may be used to notify the keyboard-mouse service module of the PC that the traversing direction is updated, and subsequently, the PC and the connected device may implement keyboard-mouse traversal in a new traversing direction.

S2607. The keyboard-mouse service module of the PC updates the table tC based on the update success information.

After both the keyboard-mouse service module of the PC and the keyboard-mouse service module of the connected device update the traversing direction, the keyboard-mouse service module of the PC may update the traversing direction in the table tC.

According to the traversing direction adjustment method provided in this embodiment of this application, a direction change of a connected device can be automatically detected, and a traversing direction is changed when a condition for changing the traversing direction is met, so that the PC can change the traversing direction based on the direction change of the connected device, to better meet user habit and improve user experience.

In a possible implementation, the user adjusts a location of a connected device in a visual interface provided on the PC, and the PC detects that the location of the device in the visual interface is changed, and updates a traversing direction in the table tC based on a changed location. In the example shown in FIG. 9, if the user adjusts the tablet from the left side of the computer to the right side of the computer in the visual interface, the computer 101 may change the traversing direction from the computer to the tablet to rightward traversal in response to the operation of the user.

An embodiment of this application provides a specific implementation method.

For example, FIG. 27 is a schematic flowchart of another traversing direction adjustment method 2700. The method 2700 may be applied to a communication system including a PC and an Android device, for example, the communication system 100, but this embodiment of this application is not limited thereto. A diagram of a software architecture of the PC may be shown in FIG. 13, and a diagram of a software architecture of the Android device may be shown in FIG. 14, but this embodiment of this application is not limited thereto.

The method 2700 may include the following steps.

S2701. When the intelligent capability is disabled, the keyboard-mouse service module of the PC detects an operation of opening a visual interface by the user.

The visual interface may be used by the user to view a connection state between the PC and another device, select a device for connection, and adjust a location of a connected device.

S2702. The keyboard-mouse service module of the PC displays a connected device and an online device in the visual interface in response to the operation of opening the visual interface by the user.

The keyboard-mouse service module of the PC may display the connected device in the visual interface by using the table tC, and may display the online device in the visual interface by using the table tA.

S2703. The keyboard-mouse service module of the PC detects an operation of changing a direction of a connected device by the user.

For example, in the example shown in FIG. 7, the user drags the connected device, that is, the tablet, from the left side of the computer to the right side of the tablet, and the keyboard-mouse service module of the PC detects the operation of the user, and may determine that the left direction of the connected device, that is, the tablet, is changed from the left side to the right side.

The keyboard-mouse service module of the PC detects the operation of changing the direction of the connected device by the user, and may perform S2602 to S2607 in response to the operation. Specific implementations are the same, and details are not described herein again.

According to the traversing direction adjustment method provided in this embodiment of this application, by detecting an operation of changing a direction of a connected device by the user, it may be determined that direction information of the connected device is changed, and a traversing direction is changed when a condition for changing the traversing direction is met, so that the PC can change the traversing direction based on the operation of the user, to meet user habit and improve user experience.

Sequence numbers of the foregoing processes do not mean a particular execution sequence. The execution sequence of the processes should be determined based on functions and internal logic of the processes, and should not be construed as any limitation on the implementation processes of embodiments of this application.

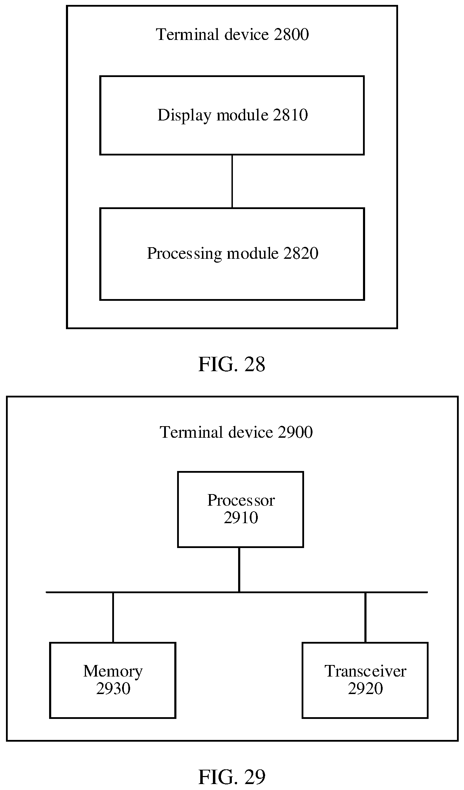

The method provided in embodiments of this application is described in detail above with reference to FIG. 1 to FIG. 27. A terminal device provided in embodiments of this application is described in detail below with reference to FIG. 28 and FIG. 29.

FIG. 28 is a diagram of a terminal device 2800 according to an embodiment of this application. The terminal device 2800 includes: a display module 2810 and a processing module 2820.

The display module 2810 is configured to display, on a first screen, a cursor corresponding to an input device. The processing module 2820 is configured to: detect a first operation acting on the input device, where the first operation is used to drag the cursor to determine a first direction as a connecting direction; establish, in response to the first operation, a connection to a second device in the first direction of the first device; detect a second operation acting on the input device, where the second operation is used to drag, toward the first direction, the cursor displayed on the first screen; and control, in response to the second operation, the cursor to move out of the first screen and enter a second screen of the second device for display, where the second device executes, in response to a third operation acting on the input device, a control instruction corresponding to the third operation, and the third operation is used to input the control instruction on the second device.

The terminal device 2800 may be a PC, and may perform the methods provided in the foregoing embodiments of this application.

It should be understood that, the terminal device 2800 herein is embodied in a form of functional modules. The term "module" herein may be an application-specific integrated circuit (application-specific integrated circuit, ASIC), an electronic circuit, a processor (for example, a shared processor, a dedicated processor, or a group processor) for executing one or more software or firmware programs, a memory, an integrated logic circuit, and/or another suitable component that supports the described function. In an optional example, a person skilled in the art may understand that the terminal device 2800 may be specifically the PC in the foregoing method embodiments, or functions of the PC in the foregoing method embodiments may be integrated in the terminal device 2800, and the terminal device 2800 may be configured to perform procedures and/or steps corresponding to the PC in the foregoing method embodiments. To avoid repetition, details are not described herein again.

The terminal device 2800 has functions of implementing corresponding steps performed by the PC in the foregoing method embodiments. The functions may be implemented by hardware, or may be implemented by hardware executing corresponding software. The hardware or the software includes one or more modules corresponding to the functions.

In this embodiment of this application, the terminal device 2800 in FIG. 28 may alternatively be a chip or a chip system, for example, a system on chip (system on chip, SoC).

FIG. 29 is a block diagram of another terminal device 2900 according to an embodiment of this application. The terminal device 2900 includes a processor 2910, a transceiver 2920, and a memory 2930. The processor 2910, the transceiver 2920, and the memory 2930 communicate with each other through an internal connection path. The memory 2930 is configured to store instructions. The processor 2920 is configured to execute the instructions stored in the memory 2930, to control the transceiver 2920 to send a signal and/or receive a signal.

It should be understood that the terminal device 2900 may be specifically a PC in the foregoing method embodiments, or functions of the PC in the foregoing method embodiments may be integrated in the terminal device 2900, and the terminal device 2900 may be configured to perform steps and/or procedures corresponding to the PC in the foregoing method embodiments. Optionally, the memory 2930 may include a read-only memory and a random access memory, and provide instructions and data for the processor. A part of the memory may further include a non-volatile random access memory. For example, the memory may further store information about a device type. The processor 2910 may be configured to execute the instructions stored in the memory, and when the processor executes the instructions, the processor may perform steps and/or procedures corresponding to the terminal device in the foregoing method embodiments.

It should be understood that, in this embodiment of this application, the processor 2910 may be a central processing unit (central processing unit, CPU), or the processor may be a general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods may be implemented by using a hardware integrated logic circuit in the processor, or by using instructions in a form of software. Steps of the methods disclosed with reference to embodiments of this application may be directly performed by a hardware processor, or may be performed by using a combination of hardware in the processor and a software module. The software module may be stored in a storage medium mature in the art, such as a random access memory, a flash memory, a read-only memory, a programmable read-only memory, an electrically erasable programmable memory, or a register. The storage medium is located in the memory. The processor executes the instructions in the memory, to complete steps of the foregoing methods in combination with hardware thereof. To avoid repetition, details are not described herein again.

This application further provides a computer-readable storage medium. The computer-readable storage medium is configured to store a computer program, and the computer program is configured to implement the method corresponding to the PC in the foregoing method embodiments.

This application further provides a chip system. The chip system is configured to support the PC in the foregoing method embodiments in implementing functions shown in embodiments of this application.

This application further provides a computer program product. The computer program product includes a computer program (which may also be referred to as code or instructions). When the computer program is run on a computer, the computer may perform the method corresponding to the PC in the foregoing method embodiments.

A person of ordinary skill in the art may be aware that, with reference to the examples described in the embodiments disclosed in this specification, modules and algorithm steps can be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenient and brief description, for a detailed working process of the foregoing system, apparatus, and module, refer to a corresponding process in the foregoing method embodiments. Details are not described herein again.

In the several embodiments provided in this application, it should be understood that the disclosed system, apparatus, and method may be implemented in other manners. For example, the apparatus embodiment described above is merely an example. For example, the module division is merely logical function division and may be other division in actual implementation. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the apparatuses or modules may be implemented in electronic, mechanical, or other forms.

The modules described as separate parts may or may not be physically separate, and parts displayed as modules may or may not be physical modules, may be located in one place, or may be distributed on a plurality of network modules. A part of or all the modules may be selected based on actual needs to achieve objectives of the solutions of the embodiments.

In addition, functional modules in embodiments of this application may be integrated into one processing module, or each module may exist alone physically, or two or more modules may be integrated into one module.

When the functions are implemented in a form of a software functional module and sold or used as an independent product, the functions may be stored in a computer-readable storage medium. Based on such an understanding, the technical solutions of this application essentially, or a part contributing to a conventional technology, or a part of the technical solutions may be implemented in a form of a software product. The computer software product is stored in a storage medium, and includes several instructions for instructing a computer device (which may be a personal computer, a server, or a network device) to perform all or a part of steps of the methods in embodiments of this application. The storage medium includes various media that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

**Claims**

1. A keyboard-mouse traversal method, applied to a first device, wherein the first device is connected to an input device configured to input a control instruction, and the first device comprises a first screen; and
   the method further comprises:

   displaying, by the first device on the first screen, a cursor corresponding to the input device;
   detecting, by the first device, a first operation acting on the input device, wherein the first operation is used to drag the cursor to determine a first direction as a connecting direction;
   establishing, by the first device in response to the first operation, a connection to a second device in the first direction of the first device;
   detecting, by the first device, a second operation acting on the input device, wherein the second operation is used to drag, toward the first direction, the cursor displayed on the first screen; and
   controlling, by the first device in response to the second operation, the cursor to move out of the first screen and enter a second screen of the second device for display, wherein the second device executes, in response to a third operation acting on the input device, a control instruction corresponding to the third operation, and the third operation is used to input the control instruction on the second device.

2. The method according to claim 1, wherein the establishing, by the first device in response to the first operation, a connection to a second device in the first direction of the first device comprises:

   finding, by the first device in response to the first operation, a second device meeting a connection condition in the first direction; and
   establishing, by the first device, a connection to the second device.

3. The method according to claim 2, wherein before the detecting, by the first device, a first operation acting on the input device, the method further comprises:

   performing, by the first device, device discovery; and
   storing, by the first device in the device table, a device identifier of the device meeting the connection condition and a direction of the device meeting the connection condition relative to the first device; and
   the finding, by the first device in response to the first operation, a second device meeting a connection condition in the first direction comprises:
   finding, by the first device, the second device meeting the connection condition in the first direction from the device table in response to the first operation.

4. The method according to claim 3, wherein the method further comprises:

   detecting, by the first device, that a direction of the second device relative to the first device is changed; and
   updating, by the first device, the direction of the second device relative to the first device in the device table.

5. The method according to any one of claims 2 to 4, wherein a third device is further comprised in the first direction of the first device, and before the establishing, by the first device, a connection to the second device, the method further comprises:
   detecting, by the first device, a fourth operation of a user, wherein the fourth operation is used to select the second device.

6. The method according to any one of claims 1 to 5, wherein before the detecting, by the first device, a first operation acting on the input device, the method further comprises:

   displaying, by the first device, a first interface, wherein the first interface comprises an automatic connection option; and
   selecting the automatic connection option in response to an operation acting on the automatic connection option.

7. The method according to claim 6, wherein when the automatic connection option is not selected, the method further comprises:

displaying, by the first device, a second interface in response to an operation of opening a first application on the first device, wherein the second interface comprises: a first icon representing the first device, a second icon representing the second device, and placing areas respectively located at two sides of the first icon; and establishing, by the first device, a connection to the second device in response to a fifth operation of dragging the second icon to a first placing area, wherein the first placing area is located in the first direction of the first device.

8. The method according to claim 7, wherein the establishing, by the first device, a connection to the second device in response to a fifth operation of dragging the second icon to a first placing area comprises:

determining, by the first device in response to the fifth operation, whether a connected device exists in the first direction; and if the connected device does not exist, establishing, by the first device, a connection to the second device; or if the connected device exists, prohibiting, by the first device, connecting to the second device, and restoring a location of the second icon to a location before the dragging.

9. The method according to any one of claims 2 to 8, wherein the connection condition is that login accounts of the second device and the first device are the same.

10. The method according to claim 1, wherein the method further comprises:

obtaining, by the first device in response to the second operation, an exit location from which the cursor is moved out of the first screen; determining, by the first device based on the exit location, an initial location from which the cursor enters the second screen; and sending, by the first device, the initial location to the second device, to indicate the second device to display the cursor at the initial location of the second screen.

11. The method according to claim 10, wherein the determining, by the first device based on the exit location, an initial location from which the cursor enters the second screen comprises: determining, by the first device, the initial location based on the exit location, a screen resolution of the first screen, and a screen resolution of the second screen.

12. The method according to claim 11, wherein the determining, by the first device, the initial location based on the exit location, a screen resolution of the first screen, and a screen resolution of the second screen comprises:

determining, by the first device, a first conversion ratio based on the screen resolution of the first screen and the screen resolution of the second screen; and determining, by the first device, the initial location based on the exit location and the first conversion ratio.

13. The method according to claim 1, wherein the method further comprises:

obtaining, by the first device, a first moving velocity of the cursor on the first screen in response to the second operation; determining, by the first device, a second moving velocity of the cursor on the second screen based on the first moving velocity; and sending, by the first device, the second moving velocity to the second device, to indicate the second device to move the cursor on the second screen at the second moving velocity.

14. The method according to claim 13, wherein the determining, by the first device, a second moving velocity of the cursor on the second screen based on the first moving velocity comprises: determining, by the first device, the second moving velocity based on the first moving velocity, a screen resolution of the first screen, and a screen resolution of the second screen.

15. The method according to claim 14, wherein the determining, by the first device, the second moving velocity based on the first moving velocity, a screen resolution of the first screen, and a screen resolution of the second screen comprises:

determining, by the first device, a second conversion ratio based on the screen resolution of the first screen and the screen resolution of the second screen; and

determining, by the first device, the second moving velocity based on the first moving velocity and the second conversion ratio.

16. The method according to claim 1, wherein after the controlling, by the first device, the cursor to move out of the first screen and enter a second screen of the second device for display, the method further comprises:

receiving, by the first device, the third operation;

intercepting, by the first device, an input event corresponding to the third operation; and

sending, by the first device, the input event to the second device, wherein the second device determines, based on the input event, the control instruction corresponding to the third operation.

17. The method according to claim 16, wherein after the controlling, by the first device in response to the second operation, the cursor to move out of the first screen and enter a second screen of the second device for display, the method further comprises:

receiving, by the first device, a sixth operation acting on the input device, wherein the sixth operation is used to drag, toward the first device, the cursor displayed on the second screen;

controlling, by the first device in response to the sixth operation, the cursor to move out of the second screen and enter the first screen of the second device for display; and

stopping, by the first device, intercepting an input event corresponding to an operation acting on the input device, to execute a control instruction corresponding to the operation on the input device.

18. The method according to claim 16, wherein after the controlling, by the first device in response to the second operation, the cursor to move out of the first screen and enter a second screen of the second device for display, the method further comprises:

receiving, by the first device, a seventh operation acting on the input device, wherein the seventh operation is used to input, on the second device, a control instruction for compulsorily recapturing the cursor;

controlling, by the first device in response to the seventh operation, the cursor to be displayed on the first screen; and

stopping, by the first device, intercepting an input event corresponding to an operation acting on the input device, to execute a control instruction corresponding to the operation on the input device.

19. The method according to claim 1, wherein the first direction is left or right, and after the establishing, by the first device, a connection to a second device in the first direction of the first device, the method further comprises:

detecting, by the first device, that the second device is moved from the first direction to a second direction opposite to the first direction; and

controlling, by the first device in response to an eighth operation, the cursor to move out of the first screen and enter the second screen of the second device for display, wherein the eighth operation and the second operation are in opposite cursor dragging directions.

20. The method according to claim 1, wherein the first direction is left or right, and after the establishing, by the first device, a connection to a second device in the first direction of the first device, the method further comprises:

detecting, by the first device, that the second device is moved from the first direction to middle; and

controlling, by the first device in response to a ninth operation, the cursor to move out of the first screen and enter the second screen of the second device for display, wherein the ninth operation and the second operation are in a same cursor dragging direction.

21. The method according to claim 1, wherein the first direction is middle, and after the establishing, by the first device, a connection to a second device in the first direction of the first device, the method further comprises:

detecting, by the first device, that the second device is moved from the first direction to a second direction, wherein the second direction is left or right; and

controlling, by the first device in response to a tenth operation, the cursor to move out of the first screen and enter the second screen of the second device for display, wherein the tenth operation is in a same direction as the second direction.

22. The method according to claim 1, wherein the first direction is left or right, the first device is connected to a third device in a second direction of the first device, and the second direction is opposite to the first direction; and

after the establishing, by the first device, a connection to a second device in the first direction of the first device, the method further comprises:

detecting, by the first device, that the second device is moved from the first direction to the second direction; and

controlling, by the first device in response to an eleventh operation, the cursor to move out of the first screen and enter the second screen of the second device for display, wherein the eleventh operation and the second operation are in a same cursor dragging direction.

23. The method according to claim 1, wherein before the detecting, by the first device, a first operation acting on the input device, the method further comprises:

discovering, by the first device, the second device;

obtaining, by the first device, a device identifier of the second device and a device angle of the second device relative to the first device;

determining, by the first device, a coordinate direction and a traversing direction of the second device based on the device angle; and

recording, by the first device, the device identifier, the device angle, the coordinate direction, and the traversing direction in a device table.

24. The method according to claim 23, wherein after the establishing, by the first device, a connection to a second device in the first direction of the first device, the method further comprises:

detecting, by the first device, that the second device is moved;

after detecting that the second device is static, further detecting, by the first device, a device angle of the second device after the movement;

if the device angle after the movement and the device angle before the movement do not belong to a same angle range, determining, by the first device based on the device angle after the movement, a coordinate direction after the movement and a traversing direction after the movement, wherein each coordinate direction corresponds to a preset angle range; and

updating, by the first device, the device table based on the coordinate direction after the movement and the traversing direction after the movement.

25. The method according to claim 24, wherein the coordinate direction comprises: left, right, and middle, the first direction is left or right, the first device determines, based on the device angle after the movement, the coordinate direction after the movement and the traversing direction after the movement, and the method further comprises:

when the coordinate direction after the movement is a second direction opposite to the first direction, if a connected third device exists in the second direction, the traversing direction after the movement is the same as the traversing direction before the movement; or

when the coordinate direction after the movement is the second direction opposite to the first direction, if the connected third device does not exist in the second direction, the traversing direction after the movement is opposite to the traversing direction before the movement; or

when the coordinate direction after the movement is middle, the traversing direction after the movement is a default traversing direction or is the same as the traversing direction before the movement.

26. The method according to any one of claims 1 to 25, wherein the cursor is displayed in a first shape on the first screen, the cursor is displayed in a second shape on the second screen, and the first shape is different from the second shape.

27. The method according to any one of claims 1 to 26, wherein the first device runs a Windows system, and the second device runs an Android system.

28. A terminal device, comprising: a processor, wherein the processor is coupled to a memory, the memory is configured to store a computer program, and when the processor invokes the computer program, the terminal device is enabled to perform the method according to any one of claims 1 to 27.

29. A computer-readable storage medium, configured to store a computer program, wherein the computer program comprises instructions used to implement the method according to any one of claims 1 to 27.

30. A computer program product, wherein the computer program product comprises computer program code, and when the computer program code is run on a computer, the computer is enabled to implement the method according to any one of claims 1 to 27.

FIG. 1

EP 4 560 452 A1

FIG. 2

FIG. 3

My computer

My folder

101

8:00
Monday,
April 25

8:00
Monday,
April 25

102

a

My computer

My folder

101

8:00
Monday,
April 25

102

b

×

20220425_1.png
Just now-302.08KB

101

8:00
Monday,
April 25

102

c

FIG. 4

Computer manager

Home page

Multi-screen collaboration

HyperTerminal

Online skills

Official services

Intelligent audio visual

System optimization

Super keyboard-mouse

The computer's keyboard, mouse, and touchpad can be shared among a plurality of devices, and content can be transferred across systems.

Drag the device icon to a white area on either side of the computer to establish a connection.

Mobile phone Magic4

Mobile phone Magic4xy

Mobile phone Magic4y

☑ Control the mouse pointer to consecutively touch a side edge of the computer screen twice, to establish a connection

☐ Automatically adjust screen arrangement with a change of a device placement location

101

FIG. 5

FIG. 6

My computer

My folder

Mobile
phone

1012

10121

10122

Tablet

101

102

103

8:00
Monday,
April 25

08:00
Monday, April 25

5G

8:00

Jan
15

FIG. 7

FIG. 8

My computer

My folder

Mobile phone

1013

10131

1014

10141

Tablet

101

102

103

8:00
Monday,
April 25

5G    8:00

08:00
Monday, April 25

Jan
15

EP 4 560 452 A1

FIG. 9

EP 4 560 452 A1

FIG. 10

FIG. 11

1200

Detect a device E meeting a mouse traversal condition — S1201

Whether an automatic connection option is enabled — S1202

No

Yes

Detect an operation of enabling the automatic connection option by a user or detect a clicking operation performed by the user in a visual interface to connect to the device E — S1203

Determine a location of the device E relative to the computer — S1204

Determine a traversing direction — S1205

If a traversing operation of the mouse is consistent with the traversing direction, implement mouse traversal — S1206

Detect that the location of the device E relative to the computer is changed — S1207

Update the traversing direction — S1208

FIG. 12

PC

Service layer

| UI module | Setting management module | Status management module | Main service module |
| --- | --- | --- | --- |
| Drag management module | Discovery and connection module | Rule management module | Keyboard-mouse service module |

Direction identification module

Capability layer

Direction identification capability

| Distance-orientation fence | Motion detection unit capability | Bluetooth measurement unit capability |
| --- | --- | --- |

Ultrasonic measurement unit capability

Ultrasonic algorithm

Keyboard-mouse virtualization capability module

| Keyboard-mouse virtualization service module | Keyboard-mouse interception module | Keyboard-mouse capture module | Edge computing module |
| --- | --- | --- | --- |
| Conversion module | Protocol management module | Data transmission module | |

Keyboard-mouse event detection module

| MSDP | Bluetooth | Keyboard-mouse virtualization capability module | Device management middleware module | Communication module |
| --- | --- | --- | --- | --- |

| PC manager framework | Account system | Trust loop | Audio system | Storage system |
| --- | --- | --- | --- | --- |

Driver layer

| Bluetooth driver | Audio driver | Wifi driver | HID driver |
| --- | --- | --- | --- |

Hardware layer

| Accelerometer | Gyroscope |
| --- | --- |

FIG. 13

Android device

Application program layer

| UI module | Setting management module | Status management module | Main service module |

| Communication module | Discovery and connection module | Drag management module | Keyboard-mouse service module |

| Direction identification module | Device management middleware module | Account system | Trust loop | Service framework |

Keyboard-mouse virtualization capability module

| Keyboard-mouse virtualization service module | Conversion module | Edge computing module | Protocol parsing management module | Keyboard-mouse event detection module |

| Data transmission module | Virtual device management |

Virtual device management

| Enabling setting module | Command injection module |

Direction identification capability

| Distance-orientation fence | Motion detection unit capability | Bluetooth measurement unit capability | Ultrasonic measurement unit capability |

Ultrasonic measurement unit capability

Ultrasonic algorithm

Application program framework layer

Input management module

| Drag framework | Multi-screen framework | Storage system | Keyboard-mouse framework | Input framework |

Android runtime and system library

| Kernel library | Virtual machine |

| Surface manager | Media library | Three-dimensional graphics processing library |

Kernel layer

| Bluetooth driver | Audio driver | Wifi driver | Virtual input driver | HID driver |

FIG. 14

1500

**PC**

Communication module | Keyboard-mouse service module | Direction identification module | Keyboard-mouse virtualization capability module | Device management middleware module

**Android device**

Communication module | Keyboard-mouse service module | Device management middleware module | Service framework

S1501. Start

S1502. Indication information A

S1503. Record a keyboard-mouse traversal state

S1504. Request message a

S1505. Request message b

S1506. Start

S1507. Keyboard-mouse function state

S1508. Keyboard-mouse function change status

S1509. Form a trust loop

S1510. Device ID

S1511. Add the device ID to a table tA

S1512. Indication information B

S1513. Synchronize information

S1514. Keyboard-mouse function enabled information

S1515. Add the device ID to a table tB

S1516. Determine direction information of the Android device

S1517. Direction information

S1518. Add the direction information to the table tB

S1519. Indication information C

S1520. Detect that the coordinate direction of the Android device is changed

S1521. Coordinate direction change information

S1522. Update coordinate direction information in the table tB

S1523. Store device information of a connected device in a table tC

Ultrasonic sensor

FIG. 15

FIG. 16

1600

**PC**

- Communication module
- Keyboard-mouse service module
- Direction identification module
- Keyboard-mouse virtualization capability module
- Device management middleware module

**Android device**

- Communication module
- Keyboard-mouse service module

S1601. Detect that the keyboard-mouse is traversing

S1602. Keyboard-mouse traversal information

S1603. Generate a sidebar

S1604. Determine whether an intelligent capability is enabled

S1605. Determine a connectable device

S1606. Request message c

S1607. Establish a message channel session and a file transmission channel session

S1608. Session success message

S1609. Service pull-up

S1610. Connection success message

S1611. Update the table tC

1700

| PC | | | | Dragged device | |
|---|---|---|---|---|---|
| Communication module | Keyboard-mouse service module | Direction identification module | Keyboard-mouse virtualization capability module | Keyboard-mouse service module | Keyboard-mouse virtualization capability module |

S1701. Detect an operation of opening a visual interface by the user

S1702. Display a connected device and an online device in the visual interface

S1703. Detect an operation of dragging an online device by the user

S1704. Determine whether the intelligent capability is enabled

S1705. Determine, whether the dragged device meets a connection condition

S1706. Connection establishment request

S1707. Traversal state recording indication information

S1608 to S1612

FIG. 17

EP 4 560 452 A1

| PC | | Android device | | | |
|---|---|---|---|---|---|
| Keyboard-mouse virtualization capability module | Keyboard-mouse service module | Keyboard-mouse service module | Keyboard-mouse virtualization capability module | Drag management module | Multi-screen framework module |

S1801. Establish a transmission connection

S1813. Keyboard-mouse service enabling indication information

S1802. Keyboard-mouse service enabling indication information

S1803. Determine whether the keyboard-mouse service is supported

S1814. Register keyboard-mouse event monitoring

S1804. Keyboard-mouse service enabled indication information

S1815. Set keyboard-mouse event interception

S1805. Register Uinput

S1816. Save a processing result $R_{12}$

S1806. Registration result $R_1$

S1807. Cursor location monitoring registration indication information

S1808. Registration result $R_2$

S1817. Processing result $R_{12}$

S1809. Dragging monitoring registration indication information

S1810. Dragging monitoring registration indication information

S1811. Save a processing result $R_{11}$

S1812. Processing result $R_{11}$

S1818. Processing result $R_{12}$

S1819. Determine, based on the processing result $R_{11}$ and the processing result $R_{12}$, whether keyboard-mouse connection succeeds

FIG. 18

EP 4 560 452 A1

1900

| Obtain a current location of the mouse | S1901 |

↓

| Obtain a mouse displacement | S1902 |

↓

| Calculate a moved-to location of the mouse based on the current location of the mouse and the mouse displacement | S1903 |

↓

Whether the mouse exceeds the screen — S1904 — No

Yes ↓

| Determine that the mouse is traversing | S1905 |

FIG. 19

(0, 0)     (1920, 0)

O                          A          X

1920*1080

(1920, 960)

(0, 1080) C          B (1920, 1080)

Y

FIG. 20

2100

| PC | | Android device | |
|---|---|---|---|
| Keyboard-mouse virtualization capability module | Keyboard-mouse service module | Keyboard-mouse service module | Keyboard-mouse virtualization capability module |

S2101. Establish a keyboard-mouse connection

S2102. Detect that the keyboard-mouse is not traversing, and respond to a detected keyboard-mouse event

S2103. Detect that the keyboard-mouse is traversing

S2104. Obtain a mouse traversal location

S2105. Keyboard-mouse traversal indication information

S2106. Keyboard-mouse traversal indication information

S2107. Determine a mouse traversal location

S2109. Intercept a detected keyboard-mouse event

S2108. Update a traversal state

S2110. Package the keyboard-mouse event to obtain a packaged keyboard-mouse event

S2111. Packaged keyboard-mouse event

S2112. Respond to the keyboard-mouse event

S2113. Detect a traversing operation of the keyboard-mouse

S2115. End traversal message

S2114. End traversal message

S2116. Stop intercepting a detected keyboard-mouse event

S2117. Update the traversal state

S2118. Setting completion message

S2119. Update the traversal state

FIG. 21

2200

| PC | | Android device | | |
|---|---|---|---|---|
| Keyboard-mouse virtualization capability module | Keyboard-mouse service module | Keyboard-mouse service module | Keyboard-mouse virtualization capability module | UI module |

S2201. Establish a keyboard-mouse connection

S2202. Obtain a screen resolution

S2203. Screen resolution

S2204. Screen resolution

S2205. Calculate mouse sensitivity

S2206. Detect a traversing operation of the keyboard-mouse

S2207. Obtain a mouse traversal location

S2208. Convert the location to obtain a converted location

S2209. Converted location

S2210. Mouse display indication information

S2211. Display the mouse pointer at the converted location

FIG. 22

2300

| PC | Android device |
|---|---|
| Keyboard-mouse virtualization capability module | Keyboard-mouse virtualization capability module | UI module |

S2301. Obtain a moving velocity $V_A$ of the mouse

S2302. Convert the moving velocity $V_A$ to obtain a moving velocity $V_B$

S2303. Package the moving velocity $V_B$ to obtain packaged moving velocity $V_B$

S2304. Packaged moving velocity $V_B$

S2305. Mouse display indication information

S2306. Move the mouse at the moving velocity $V_B$

FIG. 23

2400

**Keyboard-mouse virtualization capability module**

| Hidden window module | Keyboard-mouse management module | Edge computing module | Keyboard-mouse interception module | Keyboard-mouse event detection module |

S2401. Hidden window creation indication information

S2402. Create a hidden window

S2403. Obtain a mouse location $S_A$

S2404. Mouse location $S_A$

S2405. Edge detection indication information

S2406. Detect that the mouse exceeds an edge of the screen

S2407. Hook setting indication information

S2408. Set a keyboard hook, a mouse hook, and a shortcut key hook

S2409. Keyboard-mouse event reporting indication information

S2410. Keyboard-mouse event

S2411. Keyboard-mouse event

S2412. Determine that the keyboard-mouse is traversing

S2413. Event interception notification message

S2414. Intercept a keyboard-mouse event

S2415. Keyboard-mouse event reporting stop indication information

S2416. Keyboard-mouse event reporting stop indication information

S2417. Obtain a mouse location $S_B$

S2418. Mouse displacement $S_B$

S2419. Edge detection indication information

S2420. Detect that the mouse enters the edge of the screen

S2421. Hook cancellation indication information

S2422. Cancel the keyboard hook, the mouse hook, and the shortcut key hook

S2423. Keyboard-mouse event reporting indication information

FIG. 24

73

2500

| Keyboard-mouse virtualization capability module | | |
|---|---|---|
| Keyboard-mouse management module | Edge computing module | Keyboard-mouse interception module |

Keyboard-mouse event detection module

S2502. Notification message of the preset shortcut key event

S2501. Preset shortcut key event

S2503. Mouse recapture notification message

S2504. Compulsorily recapture the mouse

S2505. Hook cancellation indication information

S2506. Cancel the keyboard hook, the mouse hook, and the shortcut key hook

S2507. Keyboard-mouse event reporting stop indication information

FIG. 25

2600

| PC | | Connected device |
|---|---|---|
| Keyboard-mouse service module | Keyboard-mouse virtualization capability module | Keyboard-mouse service module |

S2601. Detect that direction information of the connected device is changed

S2602. Direction adjustment indication information

S2603. Update a traversing direction

S2604. Direction adjustment indication information

S2605. Update a traversing direction

S2606. Update success information

S2607. Update the table C

FIG. 26

2700

| PC | | | Connected device |
|---|---|---|---|
| Communication module | Keyboard-mouse service module | Keyboard-mouse virtualization capability module | Keyboard-mouse service module |

S2701. Detect an operation of opening a visual interface by the user

S2702. Display a connected device and an online device in the visual interface

S2703. Detect an operation of changing a direction of the connected device by the user

S2602 to S2607

FIG. 27

Terminal device 2800

Display module 2810

Processing module 2820

FIG. 28

Terminal device 2900

Processor
2910

Memory
2930

Transceiver
2920

FIG. 29

## INTERNATIONAL SEARCH REPORT

| International application No. |
|---|
| **PCT/CN2023/113603** |

### A. CLASSIFICATION OF SUBJECT MATTER

G06F3/0486(2013.01)i; G06F3/048(2013.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS; CNTXT; CNKI; WPABS; DWPI; USTXT; WOTXT; EPTXT: 键鼠, 键盘, 鼠标, 穿越, 光标, 屏, 显示器, 拖动, 方向, 连接, 控制, 多终端, 多设备, keyboard, mouse, cursor, screen, display, drag, direction, connect, control, multiple terminals, multiple facilities

### C. DOCUMENTS CONSIDERED TO BE RELEVANT

| Category* | Citation of document, with indication, where appropriate, of the relevant passages | Relevant to claim No. |
|---|---|---|
| X | CN 109002269 A (VTRON GROUP CO., LTD.) 14 December 2018 (2018-12-14) description, paragraphs [0050]-[0115], and figures 1-5 | 1, 2, 28-30 |
| A | CN 109002269 A (VTRON GROUP CO., LTD.) 14 December 2018 (2018-12-14) description, paragraphs [0050]-[0115], and figures 1-5 | 3-27 |
| A | CN 105204662 A (GUANGZHOU HUIYUAN ELECTRONIC TECHNOLOGY CO., LTD.) 30 December 2015 (2015-12-30) entire document | 1-30 |
| A | CN 114089901 A (HUAWEI TECHNOLOGIES CO., LTD.) 25 February 2022 (2022-02-25) entire document | 1-30 |
| A | CN 114201128 A (HUAWEI TECHNOLOGIES CO., LTD.) 18 March 2022 (2022-03-18) entire document | 1-30 |
| A | US 2021096730 A1 (APPLE INC.) 01 April 2021 (2021-04-01) entire document | 1-30 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **15 September 2023** | **02 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/113603**

| Patent document cited in search report | | | Publication date (day/month/year) | Patent family member(s) | | | Publication date (day/month/year) |
|---|---|---|---|---|---|---|---|
| CN | 109002269 | A | 14 December 2018 | None | | | |
| CN | 105204662 | A | 30 December 2015 | None | | | |
| CN | 114089901 | A | 25 February 2022 | WO | 2022022490 | A1 | 03 February 2022 |
| | | | | EP | 4180932 | A1 | 17 May 2023 |
| CN | 114201128 | A | 18 March 2022 | WO | 2022048500 | A1 | 10 March 2022 |
| | | | | CN | 114816294 | A | 29 July 2022 |
| US | 2021096730 | A1 | 01 April 2021 | US | 11385781 | B2 | 12 July 2022 |

Form PCT/ISA/210 (patent family annex) (July 2022)

## REFERENCES CITED IN THE DESCRIPTION

**Patent documents cited in the description**

- CN 202211071888